# EUROPEAN PATENT APPLICATION

(11) **EP 4 468 670 A1**
(43) Date of publication of application: **27.11.2024**
(21) Application number: 24174779.9
(22) Date of filing: 08.05.2024
(51) Int. Cl.: H04L 45/00, H04L 69/22, H04W 24/08, H04W 24/10, H04L 43/0852

(54) **TECHNOLOGIES TO ENABLE JOINT COMPUTING AND COMMUNICATION RELATED MEASUREMENTS USING SEGMENT ROUTING IN NEXT GENERATION CELLULAR NETWORKS**

(30) Priority: 24.05.2023 US 202363504065 P
(71) Applicant: INTEL Corporation, Santa Clara, CA 95054 (US)
(72) Inventor: DING, Zongrui, Portland (US); LI, Qian, Portland, 97229 (US); LUETZENKIRCHEN, Thomas, Taufkirchen (DE); STOJANOVSKI, Alexandre Saso, 75020 Paris (FR); YING, Dawei, Portland, 97229 (US)
(74) Representative: Viering, Jentschura & Partner mbB Patent- und Rechtsanwälte

(57) **Abstract**

A non-transitory computer-readable medium may include one or more instructions which, if executed by a processor of a node of a cellular network, cause the processor to: generate a segment routing header comprising information representative of a measurement enablement; and apply a segment routing of a packet within the cellular network based on the segment routing header.

## Description

### CROSS-REFERENCE TO RELATED APPLICATIONS

The present application claims priority to US Provisional Patent Application Ser. No. 63/504,065 filed on May 24, 2023.

### TECHNICAL FIELD

The present disclosure is generally related to wireless communication, cellular networks, communication system implementations, cloud computing, edge computing, data centers, network topologies, traffic engineering, data packet and/or network routing techniques, and switch fabric technologies, and in particular, to technologies to enable joint computing and communication related measurements using Segment Routing (SR) in next generation cellular networks.

### BACKGROUND

In the computing/application instance selection in the 6G Wide Area Cloud (WAC), various measurements such as location, response time, network status (e.g., congestion, overload conditions at specific compute nodes, and/or the like) may be taken into account to choose a computing/application instance out of many available ones. This procedure also involves joint optimization/decision of communication and computing.

U.S. Prov. App. No. 63/240,315 filed on 02 Sep. 2021 ("[`315]"), the contents of which are hereby incorporated by reference in its entirety, describes forming a service function chain (SFC) using SR (e.g., SR with IPv6 (SRv6)), in which SFC related labels can be generated and added to user plane traffic packets at (or by) a classifier (e.g., a RAN node/xNB or UPF 648 for uplink (UL) and downlink (DL), respectively. Specifically, the SR labels can be included in a Segment Routing Header (SRH) for SRv6 (see e.g., [RFC8754]).

### BRIEF DESCRIPTION OF THE DRAWINGS

FIG. 1 shows an example sixth generation (6G) network architecture.
FIG. 2 shows an example SRH format.
FIG.3 shows an illustrative example of a 128-bit IPv6 address in accordance with various aspects described herein.
FIG. 4 shows an example procedure for UE request for measurement collection.
FIG 5 shows an example procedure for NF/AF request for measurement collection.
FIG. 6 depicts an example network architecture.
FIG 7 schematically illustrates an example of a wireless network.
FIG. 8 illustrates components capable of reading instructions from a machine-readable or computer-readable medium.
FIG. 9 illustrates an example of a cellular network.
FIG. 10 depicts an example AI/ML-assisted communication network.

### DETAILED DESCRIPTION

### 1. SEGMENT ROUTING IN CELLULAR NETWORKS

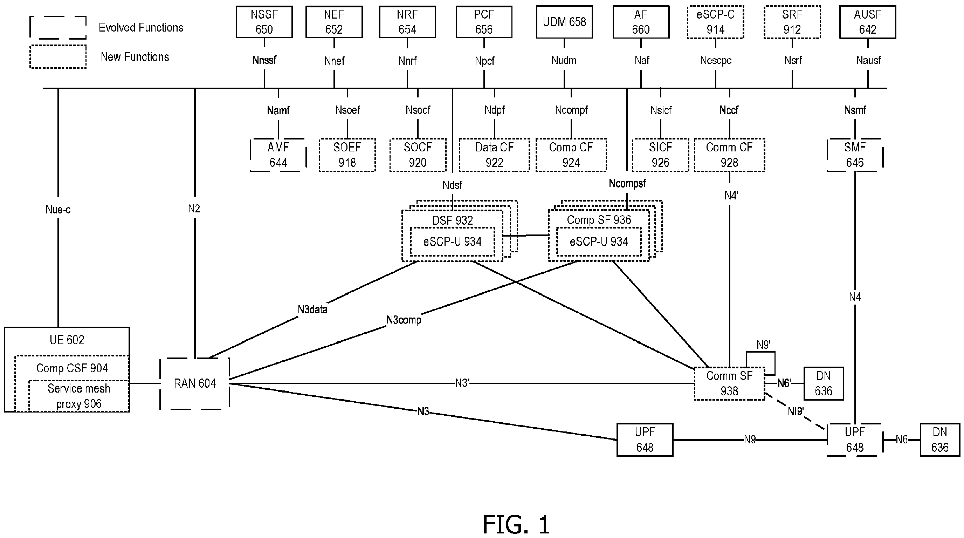

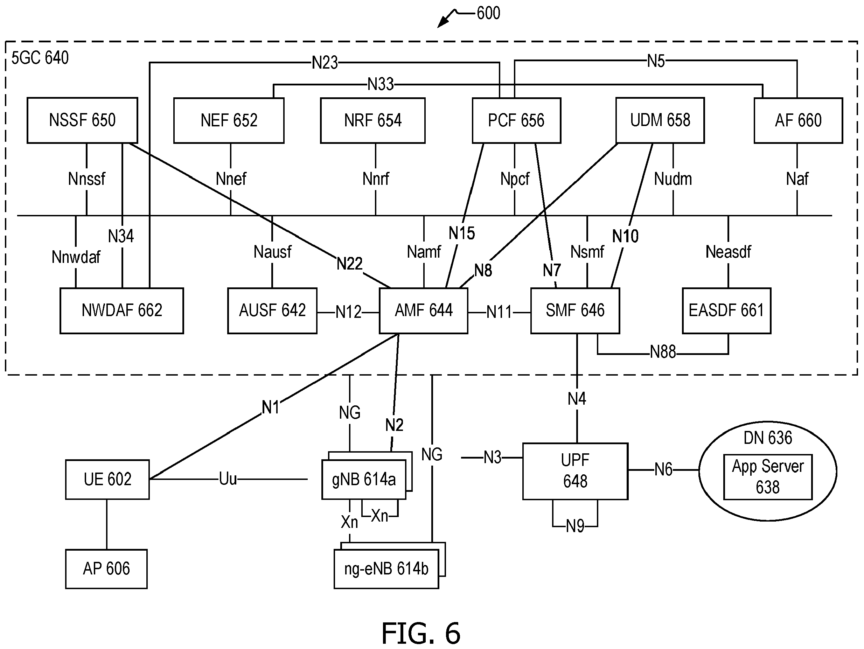

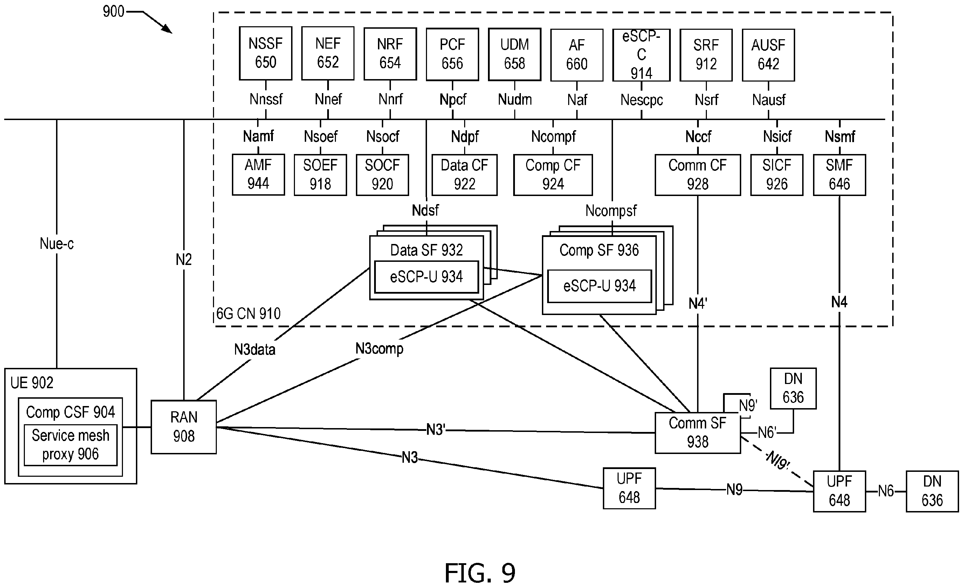

FIG. 1 shows an example sixth generation (6G) network architecture where the user plane uses a routing technique, such as Segment Routing (SR) to chain computing services and application instances. In addition to various NFs and other elements/functions discussed infra with respect to (w.r.t) FIGs. 6 and 9, the reference architecture of FIG. 1 includes a UE-side Computing Client Service Function (Comp CSF) 904, a service mesh proxy 906, a service registration function (SRF) 912, an evolved Service Communication Proxy (eSCP) Control Plane (eSCP-C) 914, a Service Orchestration and Chaining Exposure Function (SOEF) 918, a Service Orchestration and Chaining Function (SOCF) 920, a Data Control Function (CF) 922, a Computing CF (Comp CF) 924, a Service Infrastructure Control Function (SICF) 926, a Communication CF (Comm CF) 928, a Data Service Function (DSF) 932, an eSCP User Plane (eSCP-U) 934, a Computing Service Function (Comp SF) 936, and a Communication Service Function (Comm SF) 938. Various aspects of the depicted NFs and the other depicted entities/elements are discussed infra w.r.t FIGs. 6 and 9.

One challenge involves the computing/application instance selection in the 6G Wide Area Cloud (WAC), which shall take the measurements such as location, response time, network status (e.g., congestion, overload conditions at specific compute nodes, and/or the like) into account to choose a computing/application instance out of many available ones. This procedure also involves joint optimization/decision of communication and computing.

To form a service function chain (SFC) using SR (e.g., SR with IPv6 (SRv6)), SFC related labels can be generated and added to user plane traffic packets at (or by) a classifier (e.g., a RAN node/xNB or UPF 648 for uplink (UL) and downlink (DL), respectively; see e.g., U.S. Prov. App. No. 63/240,315 filed on 02 Sep. 2021 ("[`315]"), the contents of which are hereby incorporated by reference in its entirety). Specifically, the SR labels can be included in a Segment Routing Header (SRH) for SRv6 (see e.g., [RFC8754]).

Existing solutions involve configuring programmable routers to collect measurements about the time consumed between hops based on destination IP address and port number. The measurements based on IP 5-tuple can identify traffic with a coarse-grained granularity (i.e., on end points). This information (info) can be further processed at an xNB or UPF 648 for QoS flow based info. However, in intermediate routers, the measurements can not provide immediate info, such as how much time is consumed for a QoS flow.

The present disclosure provides technologies and techniques to enable e2e and/or per-hop collection of computing and/or communication related measurements, which can be used for the decision of computing service, NF, and/or application (app) instance selection, as well as computing, communication, and/or other measurements for joint computing and communication decisions. The various aspects discussed herein allows for the cloudification of various NFs and/or AFs. Although the cloudification of telco networks may require additional computing infrastructure, such cloudification can also provide reduced resource consumption and improved user experience.

### 1.1. SRH Fields for Measurement Collection and/or Enablement

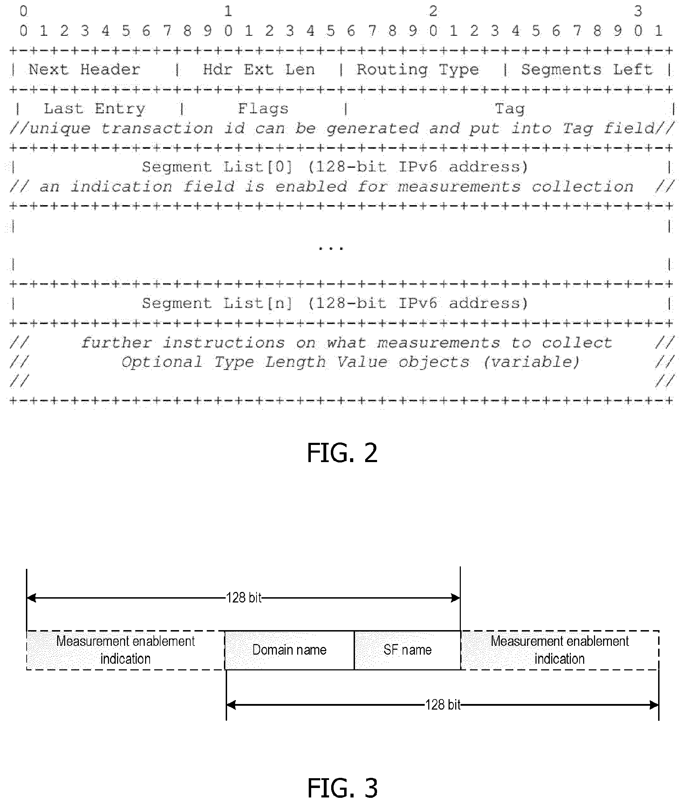

FIG. 2 shows an example SRH format, which may be considered as an example of an updated SRH with SFC. Various fields of the SRH of FIG. 2 are shown by Table 1.1-1. Additional aspects of the SRH and the fields therein, are discussed in [RFC8754].

**Table 1.1-1**

| Field | Description |
|---|---|
| Next Header | 8-bit selector. Identifies the type of header immediately following the Routing header. Uses the same values as the IPv4 Protocol field (see e.g., [RFC8200]). |
| Hdr Ext Len | 8-bit unsigned integer. Length of the Routing header in 8-octet units, not including the first 8 octets (see e.g., [RFC8200]). |
| Routing Type | 8-bit identifier of a particular Routing header variant (see e.g., [RFC8200]). |
| Segments Left | 8-bit unsigned integer. Number of route segments remaining (i.e., number of explicitly listed intermediate nodes still to be visited before reaching the final destination) (see e.g., [RFC8200]). |
| Last Entry | contains the index (zero based), in the Segment List, of the last element of the Segment List. |
| Flags | 8 bits of flags. IANA registry for new flags are discussed in [RFC8754] § 8.1 |
| Tag | Tag a packet as part of a class or group of packets (e.g., packets sharing the same set of properties). When Tag is not used at the source, it is set to zero on transmission. When Tag is not used during SRH processing, it should be ignored. Tag is not used when processing the SID defined in [RFC8754] § 4.3.1. It may be used when processing other SIDs that are not defined in this document. The allocation and use of tag is outside the scope of this document. |
| Segment List [0...N] | 128-bit IPv6 addresses representing the nth segment in the Segment List. The Segment List is encoded starting from the last segment of the SR Policy. That is, the first element of the Segment List (Segment List[0]) contains the last segment of the SR Policy, the second element contains the penultimate segment of the SR Policy, and so on. |
| TLV | Type Length Value (TLV), as described in [RFC8754] § 2.1. |

The segment list includes all the segments on the path of the SFC in the form of IPv6 addresses. The segment 128 bit IPv6 addresses and the TLV optimal fields can be used to enable communication/computing measurements. Currently, the tag field is reserved for future use and can be used to carry an unique transaction ID that can identify the same ingress and egress packet.

In various embodiments, a unique transaction identifier (ID) can be generated and placed or otherwise included in the Tag field of the SRH of FIG. 2. Additionally or alternatively, an indication field can be enabled for measurements collection. Additionally or alternatively, various instructions and/or parameters about the specific measurements to collect can be included in the type length value (TLV) field(s). As examples, the instructions and/or parameters about the measurements to be collected can include measurement type(s) (e.g., any of those discussed herein), measurement collection time(s) and/or trigger condition(s), cell(s) and/or signaling to be measured, resource configurations and/or parameters, and/or any other suitable instructions or parameters, including any of those discussed herein.

FIG.3 shows an illustrative example of a 128-bit IPv6 address in accordance with various aspects described herein, which may illustrate an example of a measurement enablement indication for a segment. In some embodiments, the 128-bit IPv6 address (e.g., in the segment list of the SRH; see FIG. 2) can be separated into two or more parts to indicate the domain + function name, which can be configured by the network operator. In some examples, an indicator field at the beginning or end of the 128 bit (e.g., 2 bits and/or the like) can be used to indicate whether measurements is enabled for this domain/hop as shown in FIG. 3. If this indication is set, it means that the SR routers, Comm SF 938, and/or UPF 648 collect the related measurements based on the instructions provided in the TLV (variable) section of the SRH.

In some embodiments, the indicator field can be enabled to indicate that the measurements for this domain should be collected. In the optional section (e.g., TLV and/or the like), per hop latency is indicated to be collected. When a Comm SF 938 receives the SFC user plane traffic, it can log the timestamp of the packet arrival time and other info such as, for example, SFC context ID, path ID, TEID, service function (SF) name, and/or other relevant info. The Comm SF 938 can also generate a unique transaction ID to put in the tag field, which should not be changed by the Comp SF 936 or other SFs. Then, the Comm SF 938 can use the logged info (e.g., SFC context ID, path ID, TEID, SF name, and/or the like) to identify specific traffic flows and use the tag field to identify the ingress and egress packet for the same transaction. Then, the response time of the SF that a tagged packet has gone through can be calculated using the difference of the timestamp(s). These measurements can be processed locally and sent to Comm CF 928 in a combined report or carried as in-band telemetry data with some user plane traffic.

### 1.2. Configuration and request procedures for measurements collection and report

### 1.2.1. Measurements Collection Criteria Information

The configuration for measurements collection and reporting can be requested by a UE 602 and/or other NF consumers. The measurements can be based on different info filters. Examples of such info filters can include UE specific info; PDU session specific info; traffic path specific info; QoS flow related info; application related info (e.g., IP 3 tuple or some other tuple); e2e flow (e.g., identified by IP 5 tuple and/or the like); network slice related info; and/or any other info or data, such as any of those discussed herein.

### 1.2.2. UE Request for Measurements Collection and Reporting

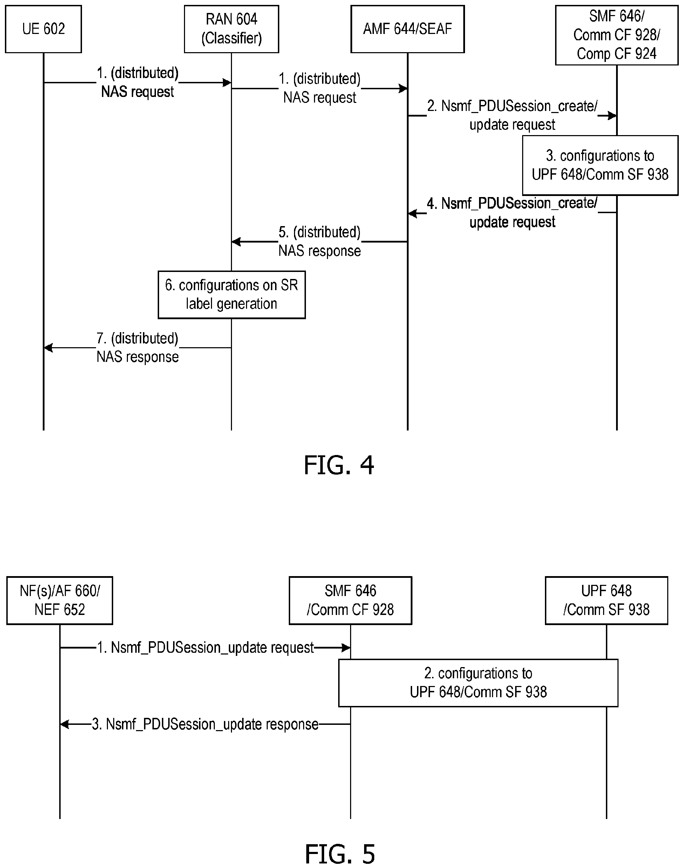

FIG. 4 shows an example procedure for a UE 602 can request user plane measurements collection and report, which may illustrate a procedure for UE request for measurement collection. The xNB or RAN is the classifier for packet classification.

The procedure of FIG. 4 may operate as follows:
1) A UE 602 sends a request to AMF 644/Security Anchor Function (SEAF) via the RAN 604 for measurement collection and reporting. The request can be in the form of, or otherwise included in a non-access stratum (NAS) message, a distributed NAS message, and/or an RRC message. The requirements for measurement collection can be included in this request as NAS/RRC containers. For example, the NAS message could trigger a PDU session establishment or update over Nsmf. When an RRC message is used, the RRC message can terminate at RAN 604 if the configuration is targeted for an xNB 614. In that case, RAN 604 is responsible for further parsing the request for measurements collection and configuration. In some examples, all the instructions are included in the generated SR labels without further configuration for the intermediate Comm SFs 938.
2) If a PDU session needs to be created or updated, the AMF 644/SEAF sends an Nsmf_PDUSession Create/Update request with the requirements on measurements collection and report received in Step 1.
3) The SMF 646 or Comm CF 928 (or Comp CF 924) receives the PDU session establishment or update request, and decides or otherwise determines on the nodes/NFs (e.g., the Comm SF 938 and/or UPF 648) sets to be configured based on the session and UE context for collection of the required measurements. This configuration can be a node level or session level configuration over N4.
4) The SMF 646/Comm CF 928 (or Comp CF 924) sends an Nsmf PDUSession create/update response to the AMF 644/SEAF to confirm the configuration of measurements collection.
5) The AMF 644/SEAF sends a response to the RAN 604 in a NAS or distributed NAS message with the configurations for RAN SR label generation.
6) The RAN 604 can configure the requirements for SR label generation. In some examples, the RAN 604 (classifier) generates the required instruction(s) on measurement collection in the SRH TLV fields, such as indicating a hop-by-hop delay and/or other measurements that should be collected.
7) The response message (e.g., NAS or distributed NAS message) can be sent to the UE 602 to confirm the measurements collection is successfully configured. 1.2.3. NF or AF Request for Measurements Collection and Reporting

In some examples, an NF and/or AF 660 can request the measurements collection via an NEF 652 as shown by FIG. 5.

The procedure of FIG. 5 may operate as follows:
1) An NF and/or AF 660 sends, via the NEF 652, a PDU session update request for measurements collection for existing PDU sessions. This message can include various parameters/info such as, for example, UE ID, PDU session ID, SF ID, traffic path ID, SFC context ID, and/or other relevant info/data, such as any of those discussed herein, to indicate the applied measurements collection criteria as described in 1.2.1 (Measurement Collection Criteria Information). In some examples, the request can include an SF ID to request the response time for all the SF instances.
2) The SMF 646/Comm CF 928 (or Comp CF 924) decides or otherwise determines the related UPF 648 and/or Comm SF 938 to configure measurements collection. In some examples, this decision or determination may be the same or similar to the decision/determination made at Step 3 in the procedure of FIG. 4.
3) The SMF 646/Comm CF 928 (or Comp CF 924) responds with the status of the measurements collection request to confirm whether it is configured successfully or not.

### 2. CELLULAR NETWORK ASPECTS

FIG. 6 depicts an example network architecture 600. The network 600 may operate in a manner consistent with 3GPP technical specifications for LTE or 5G/NR systems. However, the example embodiments are not limited in this regard and the described examples may apply to other networks that benefit from the principles described herein, such as future 3GPP systems, or the like.

The network 600 includes a UE 602, which is any mobile or non-mobile computing device designed to communicate with a RAN 604 via an over-the-air connection. The UE 602 is communicatively coupled with the RAN 604 by a Uu interface, which may be applicable to both LTE and NR systems. Examples of the UE 602 include, but are not limited to, a smartphone, tablet computer, wearable device (e.g., smart watch, fitness tracker, smart glasses, smart clothing/fabrics, head-mounted displays, smart shows, and/or the like), desktop computer, workstation, laptop computer, in-vehicle infotainment system, in-car entertainment system, instrument cluster, head-up display (HUD) device, onboard diagnostic device, dashtop mobile equipment, mobile data terminal, electronic engine management system, electronic/engine control unit, electronic/engine control module, embedded system, sensor, microcontroller, control module, engine management system, networked appliance, machine-type communication device, machine-to-machine (M2M), device-to-device (D2D), machine-type communication (MTC) device, Internet of Things (IoT) device, smart appliance, flying drone or unmanned aerial vehicle (UAV), terrestrial drone or autonomous vehicle, robot, electronic signage, single-board computer (SBC) (e.g., Raspberry Pi, Arduino, Intel Edison, and the like), plug computers, and/or any type of computing device such as any of those discussed herein. The UE 602 may be the same or similar to any of the other UEs discussed herein such as, for example, UE 702, hardware resources 800, and/or any other UE discussed herein.

The network 600 may include a set of UEs 602 coupled directly with one another via a device-to-device (D2D), proximity services (ProSe), PC5, and/or sidelink (SL) interface, and/or any other suitable interface such as any of those discussed herein. These UEs 602 may be M2M, D2D, MTC, and/or IoT devices, and/or V2X systems that communicate using physical sidelink channels such as, but not limited to, PSBCH, PSDCH, PSSCH, PSCCH, PSFCH, and the like. The UE 602 may perform blind decoding attempts of SL channels/links according to the various examples herein.

In some examples, the UE 602 may additionally communicate with an AP 606 via an over-the-air (OTA) connection. The AP 606 manages a WLAN connection, which may serve to offload some/all network traffic from the RAN 604. The connection between the UE 602 and the AP 606 may be consistent with any IEEE 802.11 protocol. Additionally, the UE 602, RAN 604, and AP 606 may utilize cellular-WLAN aggregation/integration (e.g., LWA/LWIP). Cellular-WLAN aggregation may involve the UE 602 being configured by the RAN 604 to utilize both cellular radio resources and WLAN resources.

The RAN 604 includes one or more network access nodes (NANs) 614 (also referred to as "RAN nodes 614" or "xNBs 614"). The NANs 614 terminate air-interface(s) for the UE 602 by providing access stratum protocols including RRC, PDCP, RLC, MAC, and PHY/L1 protocols. In this manner, the NAN 614 enables data/voice connectivity between a core network (CN) 640 and the UE 602. The NANs 614 may be a macrocell base station or a low power base station for providing femtocells, picocells or other like cells having smaller coverage areas, smaller user capacity, or higher bandwidth compared to macrocells; or some combination thereof. In these implementations, a NAN 614 may be referred to as a base station (BS), next generation nodeB (gNB), RAN node, eNodeB (eNB), next generation (ng)-eNB, NodeB, RSU, TRP, and/or the like.

One example implementation is a "CU/DU split" architecture where the NANs 614 are embodied as a gNB-Central Unit (CU) that is communicatively coupled with one or more gNB-Distributed Units (DUs), where each DU may be communicatively coupled with one or more Radio Units (RUs) (also referred to as RRHs, RRUs, or the like). In some implementations, the one or more RUs may be individual RSUs. In some implementations, the CU/DU split may include an ng-eNB-CU and one or more ng-eNB-DUs instead of, or in addition to, the gNB-CU and gNB-DUs, respectively. The NANs 614 employed as the CU may be implemented in a discrete device or as one or more software entities running on server computers as part of, for example, a virtual network including a virtual Base Band Unit (BBU) or BBU pool, cloud RAN (CRAN), Radio Equipment Controller (REC), Radio Cloud Center (RCC), centralized RAN (C-RAN), virtualized RAN (vRAN), and/or the like (although these terms may refer to different implementation concepts). Any other type of architectures, arrangements, and/or configurations can be used.

The set of NANs 614 are coupled with one another via respective X2 interfaces if the RAN 604 is an LTE RAN or Evolved Universal Terrestrial Radio Access Network (E-UTRAN) 610, or respective Xn interfaces if the RAN 604 is a NG-RAN 604. The X2/Xn interfaces, which may be separated into control/user plane interfaces in some examples, may allow the ANs to communicate information related to handovers, data/context transfers, mobility, load management, interference coordination, and the like.

The ANs of the RAN 604 may each manage one or more cells, cell groups, component carriers, and the like to provide the UE 602 with an air interface for network access. The UE 602 may be simultaneously connected with a set of cells provided by the same or different NANs 614 of the RAN 604. For example, the UE 602 and RAN 604 may use carrier aggregation to allow the UE 602 to connect with a set of component carriers, each corresponding to a Pcell or Scell. In dual connectivity scenarios, a first AN 608 may be a master node that provides an MCG and a second AN 608 may be secondary node that provides an SCG. The first/second NANs 614 may be any combination of eNB, gNB, ng-eNB, and the like.

The RAN 604 may provide the air interface over a licensed spectrum or an unlicensed spectrum. To operate in the unlicensed spectrum, the nodes may use LAA, eLAA, and/or feLAA mechanisms based on CA technology with PCells/Scells. Prior to accessing the unlicensed spectrum, the nodes may perform medium/carrier-sensing operations based on, for example, a listen-before-talk (LBT) protocol.

Additionally or alternatively, individual UEs 602 provide radio information to one or more NANs 614 and/or one or more edge compute nodes (e.g., edge servers/hosts, and the like). The radio information may be in the form of one or more measurement reports, and/or may include, for example, signal strength measurements, signal quality measurements, and/or the like. Each measurement report is tagged with a timestamp and the location of the measurement (e.g., the UEs 602 current location). As examples, the measurements collected by the UEs 602 and/or included in the measurement reports may include one or more of the following: bandwidth (BW), network or cell load, latency, jitter, round trip time (RTT), number of interrupts, out-of-order delivery of data packets, transmission power, bit error rate, bit error ratio (BER), Block Error Rate (BLER), packet error ratio (PER), packet loss rate, packet reception rate (PRR), data rate, peak data rate, end-to-end (e2e) delay, signal-to-noise ratio (SNR), signal-to-noise and interference ratio (SINR), signal-plus-noise-plus-distortion to noise-plus-distortion (SINAD) ratio, carrier-to-interference plus noise ratio (CINR), Additive White Gaussian Noise (AWGN), energy per bit to noise power density ratio (Eb/N0), energy per chip to interference power density ratio (Ec/I0), energy per chip to noise power density ratio (Ec/N0), peak-to-average power ratio (PAPR), reference signal received power (RSRP), reference signal received quality (RSRQ), received signal strength indicator (RSSI), received channel power indicator (RCPI), received signal to noise indicator (RSNI), Received Signal Code Power (RSCP), average noise plus interference (ANPI), GNSS timing of cell frames for UE positioning for E-UTRAN or 5G/NR (e.g., a timing between an AP 606 or RAN node 608 reference time and a GNSS-specific reference time for a given GNSS), GNSS code measurements (e.g., the GNSS code phase (integer and fractional parts) of the spreading code of the ith GNSS satellite signal), GNSS carrier phase measurements (e.g., the number of carrier-phase cycles (integer and fractional parts) of the ith GNSS satellite signal, measured since locking onto the signal; also called Accumulated Delta Range (ADR)), channel interference measurements, thermal noise power measurements, received interference power measurements, power histogram measurements, channel load measurements, STA statistics, and/or other like measurements. The RSRP, RSSI, and/or RSRQ measurements may include RSRP, RSSI, and/or RSRQ measurements of cell-specific reference signals, channel state information reference signals (CSI-RS), and/or synchronization signals (SS) or SS blocks for 3GPP networks (e.g., LTE or 5G/NR), and RSRP, RSSI, RSRQ, RCPI, RSNI, and/or ANPI measurements of various beacon, Fast Initial Link Setup (FILS) discovery frames, or probe response frames for WLAN/WiFi (e.g., [IEEE80211]) networks. Other measurements may be additionally or alternatively used, such as those discussed in 3GPP TS 36.214 v17.0.0 (2022-03-31) ("[TS36214]"), 3GPP TS 38.215 v17.3.0 (2023-03-30) ("[TS38215]"), 3GPP TS 38.314 v17.2.0 (2023-01-13) ("[TS38314]"), IEEE Standard for Information Technology--Telecommunications and Information Exchange between Systems - Local and Metropolitan Area Networks--Specific Requirements - Part 11: Wireless LAN Medium Access Control (MAC) and Physical Layer (PHY) Specifications, IEEE Std 802.11-2020, pp.1-4379 (26 Feb. 2021) ("[IEEE80211]"), and/or the like. Additionally or alternatively, any of the aforementioned measurements (or combination of measurements) may be collected by one or more NANs 614 and provided to the edge compute node(s)

Additionally or alternatively, the measurements can include one or more of the following measurements: measurements related to Data Radio Bearer (DRB) (e.g., number of DRBs attempted to setup, number of DRBs successfully setup, number of released active DRBs, in-session activity time for DRB, number of DRBs attempted to be resumed, number of DRBs successfully resumed, and the like); measurements related to RRC (e.g., mean number of RRC connections, maximum number of RRC connections, mean number of stored inactive RRC connections, maximum number of stored inactive RRC connections, number of attempted, successful, and/or failed RRC connection establishments, and the like); measurements related to UE Context (UECNTX); measurements related to Radio Resource Utilization (RRU) (e.g., DL total PRB usage, UL total PRB usage, distribution of DL total PRB usage, distribution of UL total PRB usage, DL PRB used for data traffic, UL PRB used for data traffic, DL total available PRBs, UL total available PRBs, and the like); measurements related to Registration Management (RM); measurements related to Session Management (SM) (e.g., number of PDU sessions requested to setup; number of PDU sessions successfully setup; number of PDU sessions failed to setup, and the like); measurements related to GTP Management (GTP); measurements related to IP Management (IP); measurements related to Policy Association (PA); measurements related to Mobility Management (MM) (e.g., for inter-RAT, intra-RAT, and/or Intra/Inter-frequency handovers and/or conditional handovers: number of requested, successful, and/or failed handover preparations; number of requested, successful, and/or failed handover resource allocations; number of requested, successful, and/or failed handover executions; mean and/or maximum time of requested handover executions; number of successful and/or failed handover executions per beam pair, and the like); measurements related to Virtualized Resource(s) (VR); measurements related to Carrier (CARR); measurements related to QoS Flows (QF) (e.g., number of released active QoS flows, number of QoS flows attempted to release, in-session activity time for QoS flow, in-session activity time for a UE 602, number of QoS flows attempted to setup, number of QoS flows successfully established, number of QoS flows failed to setup, number of initial QoS flows attempted to setup, number of initial QoS flows successfully established, number of initial QoS flows failed to setup, number of QoS flows attempted to modify, number of QoS flows successfully modified, number of QoS flows failed to modify, and the like); measurements related to Application Triggering (AT); measurements related to Short Message Service (SMS); measurements related to Power, Energy and Environment (PEE); measurements related to NF service (NFS); measurements related to Packet Flow Description (PFD); measurements related to Random Access Channel (RACH); measurements related to Measurement Report (MR); measurements related to Layer 1 Measurement (L1M); measurements related to Network Slice Selection (NSS); measurements related to Paging (PAG); measurements related to Non-IP Data Delivery (NIDD); measurements related to external parameter provisioning (EPP); measurements related to traffic influence (TI); measurements related to Connection Establishment (CE); measurements related to Service Parameter Provisioning (SPP); measurements related to Background Data Transfer Policy (BDTP); measurements related to Data Management (DM); and/or any other performance measurements such as those discussed in 3GPP TS 28.552 v18.2.0 (2023-03-30) ("[TS28552]"), 3GPP TS 32.425 v17.1.0 (2021-06-24) ("[TS32425]"), and/or the like.

The radio information may be reported in response to a trigger event and/or on a periodic basis. Additionally or alternatively, individual UEs 602 report radio information either at a low periodicity or a high periodicity depending on a data transfer that is to take place, and/or other information about the data transfer. Additionally or alternatively, the edge compute node(s) may request the measurements from the NANs 614 at low or high periodicity, or the NANs 614 may provide the measurements to the edge compute node(s) at low or high periodicity. Additionally or alternatively, the edge compute node(s) may obtain other relevant data from other edge compute node(s), core network functions (NFs), application functions (AFs), and/or other UEs 602 such as Key Performance Indicators (KPIs), with the measurement reports or separately from the measurement reports.

Additionally or alternatively, in cases where is discrepancy in the observation data from one or more UEs, one or more RAN nodes, and/or core network NFs (e.g., missing reports, erroneous data, and the like) simple imputations may be performed to supplement the obtained observation data such as, for example, substituting values from previous reports and/or historical data, apply an extrapolation filter, and/or the like. Additionally or alternatively, acceptable bounds for the observation data may be predetermined or configured. For example, CQI and MCS measurements may be configured to only be within ranges defined by suitable 3GPP standards. In cases where a reported data value does not make sense (e.g., the value exceeds an acceptable range/bounds, or the like), such values may be dropped for the current learning/training episode or epoch. For example, on packet delivery delay bounds may be defined or configured, and packets determined to have been received after the packet delivery delay bound may be dropped.

The UE 602 can also perform determine reference signal (RS) measurement and reporting procedures to provide the network with information about the quality of one or more wireless channels and/or the communication media in general, and this information can be used to optimize various aspects of the communication system. As examples, the measurement and reporting procedures performed by the UE 602 can include those discussed in 3GPP TS 38.211 v17.4.0 (2023-01-04) ("[TS38211]"), 3GPP TS 38.212 v17.5.0 (2023-03-30) ("[TS38212]"), 3GPP TS 38.213 v17.5.0 (2023-03-30) ("[TS38213]"), 3GPP TS 38.214 v17.5.0 (2023-03-30) ("[TS38214]"), [TS38215], 3GPP TS 38.101-1 v18.1.0 (2023-04-07) ("[TS38101-1]"), 3GPP TS 38.104 v18.1.0 (2023-04-07) ("[TS38104]"), 3GPP TS 38.133 v18.1.0 (2023-04-07) ("[TS38133]"), and/or other the like. The physical signals and/or reference signals can include demodulation reference signals (DM-RS), phase-tracking reference signals (PT-RS), positioning reference signal (PRS), channel-state information reference signal (CSI-RS), synchronization signal block (SSB), primary synchronization signal (PSS), secondary synchronization signal (SSS), and sounding reference signal (SRS).

In any of the examples discussed herein, any suitable data collection and/or measurement mechanism(s) may be used to collect the observation data. For example, data marking (e.g., sequence numbering, and the like), packet tracing, signal measurement, data sampling, and/or timestamping techniques may be used to determine any of the aforementioned metrics/observations. The collection of data may be based on occurrence of events that trigger collection of the data. Additionally or alternatively, data collection may take place at the initiation or termination of an event. The data collection can be continuous, discontinuous, and/or have start and stop times. The data collection techniques/mechanisms may be specific to a HW configuration/implementation or non-HW-specific, or may be based on various software parameters (e.g., OS type and version, and the like). Various configurations may be used to define any of the aforementioned data collection parameters. Such configurations may be defined by suitable specifications/standards, such as 3GPP (e.g., [SA6Edge]), ETSI (e.g., [MEC]), O-RAN (e.g., [O-RAN]), Intel^{®} Smart Edge Open (formerly OpenNESS) (e.g., [ISEO]), IETF (e.g., MAMS [RFC8743]), IEEE/WiFi (e.g., [IEEE80211], and the like), and/or any other like standards such as those discussed herein.

In some examples, the RAN 604 is an E-UTRAN with one or more eNBs, and provides an LTE air interface (Uu) with the parameters and characteristics at least as discussed in 3GPP TS 36.300 v17.2.0 (2022-09-30) ("[TS36300]"). In some examples, the RAN 604 is an next generation (NG)-RAN 604 with a set of RAN nodes 614 (including gNBs 614a and ng-eNBs 614b). Each gNB 614a connects with SG-enabled UEs 602 using a 5G-NR Uu interface with parameters and characteristics as discussed in [TS38300], among many other 3GPP standards, including any of those discussed herein. Where the NG-RAN 604 includes a set of ng-eNBs 614b, the one or more ng-eNBs 614b connect with a UE 602 via the 5G Uu and/or LTE Uu interface. The gNBs 614a and the ng-eNBs 614b connect with the 5GC 640 through respective NG interfaces, which include an N2 interface, an N3 interface, and/or other interfaces. The gNBs 614a and the ng-eNBs 614b are connected with each other over an Xn interface. Additionally, individual gNBs 614a are connected to one another via respective Xn interfaces, and individual ng-eNBs 614b are connected to one another via respective Xn interfaces. In some examples, the NG interface may be split into two parts, an NG user plane (NG-U) interface, which carries traffic data between the nodes of the NG-RAN 604 and a UPF 648 (e.g., N3 interface), and an NG control plane (NG-C) interface, which is a signaling interface between the nodes of the NG-RAN 604 and an AMF 644 (e.g., N2 interface).

The NG-RAN 604 may provide a 5G-NR air interface (which may also be referred to as a Uu interface) with the following characteristics: variable SCS; CP-OFDM for DL, CP-OFDM and DFT-s-OFDM for UL; polar, repetition, simplex, and Reed-Muller codes for control and LDPC for data. The 5G-NR air interface may rely on CSI-RS, PDSCH/PDCCH DMRS similar to the LTE air interface. The 5G-NR air interface may not use a CRS, but may use PBCH DMRS for PBCH demodulation; PTRS for phase tracking for PDSCH; and tracking reference signal for time tracking. The 5G-NR air interface may operating on FR1 bands that include sub-6 GHz bands or FR2 bands that include bands from 24.25 GHz to 52.6 GHz. The 5G-NR air interface may include an SSB that is an area of a DL resource grid that includes PSS/SSS/PBCH.

The 5G-NR air interface may utilize BWPs for various purposes. For example, BWP can be used for dynamic adaptation of the SCS. For example, the UE 602 can be configured with multiple BWPs where each BWP configuration has a different SCS. When a BWP change is indicated to the UE 602, the SCS of the transmission is changed as well. Another use case example of BWP is related to power saving. In particular, multiple BWPs can be configured for the UE 602 with different amount of frequency resources (e.g., PRBs) to support data transmission under different traffic loading scenarios. A BWP containing a smaller number of PRBs can be used for data transmission with small traffic load while allowing power saving at the UE 602 and in some cases at the gNB 614a. A BWP containing a larger number of PRBs can be used for scenarios with higher traffic load.

In some implementations, individual gNBs 614a can include a gNB-CU and a set of gNB-DUs. Additionally or alternatively, gNBs 614a can include one or more RUs. In these implementations, the gNB-CU may be connected to each gNB-DU via respective F1 interfaces. In case of network sharing with multiple cell ID broadcast(s), each cell identity associated with a subset of PLMNs corresponds to a gNB-DU and the gNB-CU it is connected to, share the same physical layer cell resources. For resiliency, a gNB-DU may be connected to multiple gNB-CUs by appropriate implementation. Additionally, a gNB-CU can be separated into gNB-CU control plane (gNB-CU-CP) and gNB-CU user plane (gNB-CU-UP) functions. The gNB-CU-CP is connected to a gNB-DU through an F1 control plane interface (F1-C), the gNB-CU-UP is connected to the gNB-DU through an F1 user plane interface (F1-U), and the gNB-CU-UP is connected to the gNB-CU-CP through an E1 interface. In some implementations, one gNB-DU is connected to only one gNB-CU-CP, and one gNB-CU-UP is connected to only one gNB-CU-CP. For resiliency, a gNB-DU and/or a gNB-CU-UP may be connected to multiple gNB-CU-CPs by appropriate implementation. One gNB-DU can be connected to multiple gNB-CU-UPs under the control of the same gNB-CU-CP, and one gNB-CU-UP can be connected to multiple DUs under the control of the same gNB-CU-CP. Data forwarding between gNB-CU-UPs during intra-gNB-CU-CP handover within a gNB may be supported by Xn-U. Similarly, individual ng-eNBs 614b can include an ng-eNB-CU and a set of ng-eNB-DUs. In these implementations, the ng-eNB-CU and each ng-eNB-DU are connected to one another via respective W1 interface. An ng-eNB can include an ng-eNB-CU-CP, one or more ng-eNB-CU-UP(s), and one or more ng-eNB-DU(s). An ng-eNB-CU-CP and an ng-eNB-CU-UP is connected via the E1 interface. An ng-eNB-DU is connected to an ng-eNB-CU-CP via the W1-C interface, and to an ng-eNB-CU-UP via the W1-U interface. The general principle described herein w.r.t gNB aspects also applies to ng-eNB aspects and corresponding E1 and W1 interfaces, if not explicitly specified otherwise.

The node hosting user plane part of the PDCP protocol layer (e.g., gNB-CU, gNB-CU-UP, and for EN-DC, MeNB or SgNB depending on the bearer split) performs user inactivity monitoring and further informs its inactivity or (re)activation to the node having control plane connection towards the core network (e.g., over E1, X2, or the like). The node hosting the RLC protocol layer (e.g., gNB-DU) may perform user inactivity monitoring and further inform its inactivity or (re)activation to the node hosting the control plane (e.g., gNB-CU or gNB-CU-CP). For purposed of the present disclosure, the term "xNB" can refer to any of the aforementioned RAN nodes (e.g., where the "x" in "xNB" is "e", "Me", "ng-e", "g", "Sg", and/or the like).

In these implementations, the NG-RAN 604, is layered into a Radio Network Layer (RNL) and a Transport Network Layer (TNL). The NG-RAN 604 architecture (e.g., the NG-RAN logical nodes and interfaces between them) is part of the RNL. For each NG-RAN interface (e.g., NG, Xn, F1, and the like) the related TNL protocol and the functionality are specified. The TNL provides services for user plane transport and/or signaling transport. In NG-Flex configurations, each NG-RAN node is connected to all AMFs 644 of AMF sets within an AMF region supporting at least one slice also supported by the NG-RAN node. The AMF Set and the AMF Region are defined in [TS23501].

The RAN 604 is communicatively coupled to CN 640 that includes network elements and/or network functions (NFs) to provide various functions to support data and telecommunications services to customers/subscribers (e.g., UE 602). The components of the CN 640 may be implemented in one physical node or separate physical nodes. In some examples, NFV may be utilized to virtualize any or all of the functions provided by the network elements of the CN 640 onto physical compute/storage resources in servers, switches, and the like. A logical instantiation of the CN 640 may be referred to as a network slice, and a logical instantiation of a portion of the CN 640 may be referred to as a network sub-slice.

The 5GS 600 supports AI/ML functionality, including management and orchestration in the 5GC 640 (e.g., NWDAF 662 in FIG. 6; see e.g., [TS23288]), NG-RAN (RAN intelligence functions), and management system (e.g., MDA; see e.g., 3GPP TS 28.104 v17.3.0 (2023-03-30) ("[TS28104]")). ML training aspects have been specified in 3GPP TS 28.105 v17.3.0 (2023-03-30) ("[TS28105]"), which supports consumer-requested training and producer-initiated training.

In the example of FIG. 6, the CN 640 is a 5GC 640 including an Authentication Server Function (AUSF) 642, Access and Mobility Management Function (AMF) 644, Session Management Function (SMF) 646, User Plane Function (UPF) 648, Network Slice Selection Function (NSSF) 650, Network Exposure Function (NEF) 652, Network Repository Function (NRF) 654, Policy Control Function (PCF) 656, Unified Data Management (UDM) 658, Unified Data Repository (UDR), Application Function (AF) 660, and Network Data Analytics Function (NWDAF) 662 coupled with one another over various interfaces as shown. The NFs in the 5GC 640 are briefly introduced as follows.

The NWDAF 662 includes one or more of the following functionalities: support data collection from NFs and AFs 660; support data collection from OAM; NWDAF service registration and metadata exposure to NFs and AFs 660; support analytics information provisioning to NFs and AFs 660; support machine learning (ML) model training and provisioning to NWDAF(s) 662 (e.g., those containing analytics logical function). Some or all of the NWDAF functionalities can be supported in a single instance of an NWDAF 662. The NWDAF 662 also includes an analytics reporting capability, which comprises means that allow discovery of the type of analytics that can be consumed by an external party and/or the request for consumption of analytics information generated by the NWDAF 662.

The NWDAF 662 interacts with different entities for different purposes, such as one or more of the following: data collection based on subscription to events provided by AMF 644, SMF 646, PCF 656, UDM 658, NSACF, AF 660 (directly or via NEF 652) and OAM (not shown); analytics and data collection using the Data Collection Coordination Function (DCCF); retrieval of information from data repositories (e.g., UDR via UDM 658 for subscriber-related information); data collection of location information from LCS system; storage and retrieval of information from an Analytics Data Repository Function (ADRF); analytics and data collection from a Messaging Framework Adaptor Function (MFAF); retrieval of information about NFs (e.g., from NRF 654 for NF-related information); on-demand provision of analytics to consumers, as specified in clause 6 of [TS23288]; and/or provision of bulked data related to analytics ID(s). NWDAF discovery and selection procedures are discussed in clause 6.3.13 in [TS23501] and clause 5.2 of [TS23288].

A single instance or multiple instances of NWDAF 662 may be deployed in a PLMN. If multiple NWDAF 662 instances are deployed, the architecture supports deploying the NWDAF 662 as a central NF, as a collection of distributed NFs, or as a combination of both. If multiple NWDAF 662 instances are deployed, an NWDAF 662 can act as an aggregate point (e.g., aggregator NWDAF 662) and collect analytics information from other NWDAFs 662, which may have different serving areas, to produce the aggregated analytics (e.g., per analytics ID), possibly with analytics generated by itself. When multiple NWDAFs 662 exist, not all of them need to be able to provide the same type of analytics results. For example, some of the NWDAFs 662 can be specialized in providing certain types of analytics. An analytics ID information element is used to identify the type of supported analytics that NWDAF 662 can generate. In some implementations, NWDAF 662 instance(s) can be collocated with a 5GS NF. Additional aspects of NWDAF 662 functionality are defined in 3GPP TS 23.288 v18.1.0 (2023-03-31) ("[TS23288]").

Different NWDAF 662 instances may be present in the 5GC 640, with possible specializations per type of analytics. The capabilities of an NWDAF 662 instance are described in the NWDAF profile stored in the NRF 654. The NWDAF architecture allows for arranging multiple NWDAF 662 instances in a hierarchy/tree with a flexible number of layers/branches. The number and organisation of the hierarchy layers, as well as the capabilities of each NWDAF 662 instance remain deployment choices and may vary depending on implementation and/or use case. In a hierarchical deployment, NWDAFs 662 may provide data collection exposure capability for generating analytics based on the data collected by other NWDAFs 662, when DCCFs 663 and/or MFAFs 665 are not present in the network.

The AUSF 642 is part of the 5GS security architecture, which also includes the following NFs in the 5GC 640: the AUSF 642, an Authentication credential Repository and Processing Function (ARPF) (not shown), a Subscription Identifier De-concealing Function (SIDF) (not shown), and a Security Anchor Function (SEAF) (not shown). The AUSF 642 stores data for authentication of UE 602 and handle authentication-related functionality. The AUSF 642 may facilitate a common authentication framework for various access types. The SEAF serves in the serving network as the anchor for security in 5G. Additional aspects of the AUSF 642, ARPF, SIDF, and SEAF are discussed in 3GPP TS 33.501 v18.1.0 (2023-03-30) ("[TS33501]"), [TS23501], [TS23502], and/or the like.

The AMF 644 allows other functions of the 5GC 640 to communicate with the UE 602 and the RAN 604 and to subscribe to notifications about mobility events w.r.t the UE 602. The AMF 644 is also responsible for registration management (e.g., for registering UE 602), connection management, reachability management, mobility management, lawful interception of AMF-related events, and access authentication and authorization. The AMF 644 provides transport for SM messages between the UE 602 and the SMF 646, and acts as a transparent proxy for routing SM messages. AMF 644 also provides transport for SMS messages between UE 602 and an SMSF. AMF 644 interacts with the AUSF 642 and the UE 602 to perform various security anchor and context management functions. Furthermore, AMF 644 is a termination point of a RAN-CP interface, which includes the N2 reference point between the RAN 604 and the AMF 644. The AMF 644 is also a termination point of NAS (N1) signaling, and performs NAS ciphering and integrity protection.

The AMF 644 also supports NAS signaling with the UE 602 over an N3IWF interface. The N3IWF provides access to untrusted entities. N3IWF may be a termination point for the N2 interface between the (R)AN 604 and the AMF 644 for the control plane, and may be a termination point for the N3 reference point between the (R)AN 604 and the 648 for the user plane. As such, the AMF 644 handles N2 signaling from the SMF 646 and the AMF 644 for PDU sessions and QoS, encapsulate/de-encapsulate packets for IPSec and N3 tunneling, marks N3 user-plane packets in the UL, and enforces QoS corresponding to N3 packet marking taking into account QoS requirements associated with such marking received over N2. N3IWF may also relay UL and DL control-plane NAS signaling between the UE 602 and AMF 644 via an N1 reference point between the UE 602and the AMF 644, and relay UL and DL user-plane packets between the UE 602 and UPF 648. The N3IWF also provides mechanisms for IPsec tunnel establishment with the UE 602. The AMF 644 may exhibit an Namf service-based interface, and may be a termination point for an N14 reference point between two AMFs 644 and an N17 reference point between the AMF 644 and a 5G-EIR (not shown by FIG. 6). In addition to the functionality of the AMF 644 described herein, the AMF 644 may provide support for Network Slice restriction and Network Slice instance restriction based on NWDAF analytics.

The SMF 646 is responsible for SM (e.g., session establishment, tunnel management between UPF 648 and AN 608); UE IP address allocation and management (including optional authorization); selection and control of UP function; configuring traffic steering at UPF 648 to route traffic to proper destination; termination of interfaces toward policy control functions; controlling part of policy enforcement, charging, and QoS; lawful intercept (for SM events and interface to LI system); termination of SM parts of NAS messages; DL data notification; initiating AN specific SM information, sent via AMF 644 over N2 to AN 608; and determining SSC mode of a session. SM refers to management of a PDU session, and a PDU session or "session" refers to a PDU connectivity service that provides or enables the exchange of PDUs between the UE 602 and the DN 636. The SMF 646 may also include the following functionalities to support edge computing enhancements (see e.g., [TS23548]): selection of EASDF 661 and provision of its address to the UE as the DNS server for the PDU session; usage of EASDF 661 services as defined in [TS23548]; and for supporting the application layer architecture defined in [TS23558], provision and updates of ECS address configuration information to the UE. Discovery and selection procedures for EASDFs 661 is discussed in [TS23501] § 6.3.23.

The UPF 648 acts as an anchor point for intra-RAT and inter-RAT mobility, an external PDU session point of interconnect to data network 636, and a branching point to support multi-homed PDU session. The UPF 648 also performs packet routing and forwarding, packet inspection, enforces user plane part of policy rules, lawfully intercept packets (UP collection), performs traffic usage reporting, perform QoS handling for a user plane (e.g., packet filtering, gating, UL/DL rate enforcement), performs UL traffic verification (e.g., SDF-to-QoS flow mapping), transport level packet marking in the UL and DL, and performs DL packet buffering and DL data notification triggering. UPF 648 may include an UL classifier to support routing traffic flows to a data network.

The NSSF 650 selects a set of network slice instances serving the UE 602. The NSSF 650 also determines allowed NSSAI and the mapping to the subscribed S-NSSAIs, if needed. The NSSF 650 also determines an AMF set to be used to serve the UE 602, or a list of candidate AMFs 644 based on a suitable configuration and possibly by querying the NRF 654. The selection of a set of network slice instances for the UE 602 may be triggered by the AMF 644 with which the UE 602 is registered by interacting with the NSSF 650; this may lead to a change of AMF 644. The NSSF 650 interacts with the AMF 644 via an N22 reference point; and may communicate with another NSSF in a visited network via an N31 reference point (not shown).

The NEF 652 securely exposes services and capabilities provided by 3GPP NFs for third party, internal exposure/re-exposure, AFs 660, edge computing networks/frameworks, and the like. In such examples, the NEF 652 may authenticate, authorize, or throttle the AFs 660. The NEF 652 stores/retrieves information as structured data using the Nudr interface to a Unified Data Repository (UDR). The NEF 652 also translates information exchanged with the AF 660 and information exchanged with internal NFs. For example, the NEF 652 may translate between an AF-Service-Identifier and an internal 5GC information, such as DNN, S-NSSAI, as described in clause 5.6.7 of [TS23501]. In particular, the NEF 652 handles masking of network and user sensitive information to external AF's 660 according to the network policy. The NEF 652 also receives information from other NFs based on exposed capabilities of other NFs. This information may be stored at the NEF 652 as structured data, or at a data storage NF using standardized interfaces. The stored information can then be re-exposed by the NEF 652 to other NFs and AFs, or used for other purposes such as analytics. For example, NWDAF analytics may be securely exposed by the NEF 652 for external party, as specified in [TS23288]. Furthermore, data provided by an external party may be collected by the NWDAF 662 via the NEF 652 for analytics generation purpose. The NEF 652 handles and forwards requests and notifications between the NWDAF 662 and AF(s) 660, as specified in [TS23288].

The NRF 654 supports service discovery functions, receives NF discovery requests from NF instances, and provides information of the discovered NF instances to the requesting NF instances. The NRF 654 also maintains NF profiles of available NF instances and their supported services. The NF profile of NF instance maintained in the NRF 654 includes the following information: NF instance ID; NF type; PLMN ID in the case of PLMN, PLMN ID + NID in the case of SNPN; Network Slice related Identifier(s) (e.g., S-NSSAI, NSI ID); an NF's network address(es) (e.g., FQDN, IP address, and/or the like), NF capacity information, NF priority information (e.g., for AMF selection), NF set ID, NF service set ID of the NF service instance; NF specific service authorization information; names of supported services, if applicable; endpoint address(es) of instance(s) of each supported service; identification of stored data/information (e.g., for UDR profile and/or other NF profiles); other service parameter(s) (e.g., DNN or DNN list, LADN DNN or LADN DNN list, notification endpoint for each type of notification that the NF service is interested in receiving, and/or the like); location information for the NF instance (e.g., geographical location, data center, and/or the like); TAI(s); NF load information; Routing Indicator, Home Network Public Key identifier, for UDM 658 and AUSF 642; for UDM 658, AUSF 642, and NSSAAF in the case of access to an SNPN using credentials owned by a Credentials Holder with AAA Server, identification of Credentials Holder (e.g., the realm of the Network Specific Identifier based SUPI); for UDM 658 and AUSF 642, and if UDM 658/AUSF 642 is used for access to an SNPN using credentials owned by a Credentials Holder, identification of Credentials Holder (e.g., the realm if network specific identifier based SUPI is used or the MCC and MNC if IMSI based SUPI is used); for AUSF 642 and NSSAAF in the case of SNPN Onboarding using a DCS with AAA server, identification of DCS (e.g., the realm of the Network Specific Identifier based SUPI); for UDM 658 and AUSF 642, and if UDM 658/AUSF 642is used as DCS in the case of SNPN Onboarding, identification of DCS ((e.g., the realm if Network Specific Identifier based SUPI, or the MCC and MNC if IMSI based SUPI); one or more GUAMI(s), in the case of AMF 644; for the UPF 648, see clause 5.2.7.2.2 of [TS23502]; UDM Group ID, range(s) of SUPIs, range(s) of GPSIs, range(s) of internal group identifiers, range(s) of external group identifiers for UDM 658; UDR Group ID, range(s) of SUPIs, range(s) of GPSIs, range(s) of external group identifiers for UDR; AUSF Group ID, range(s) of SUPIs for AUSF 642; PCF Group ID, range(s) of SUPIs for PCF 656; HSS Group ID, set(s) of IMPIs, set(s) of IMPU, set(s) of IMSIs, set(s) of PSIs, set(s) of MSISDN for HSS; event ID(s) supported by AFs 660, in the case of NEF 652; event Exposure service supported event ID(s) by UPF 648; application identifier(s) supported by AFs 660, in the case of NEF 652; range(s) of external identifiers, or range(s) of external group identifiers, or the domain names served by the NEF, in the case of NEF 652 (e.g., used when the NEF 652 exposes AF information for analytics purpose as detailed in [TS23288]; additionally the NRF 654 may store a mapping between UDM Group ID and SUPI(s), UDR Group ID and SUPI(s), AUSF Group ID and SUPI(s) and PCF Group ID and SUPI(s), to enable discovery of UDM 658, UDR, AUSF 642 and PCF 656 using SUPI, SUPI ranges as specified in clause 6.3 of [TS23501], and/or interact with UDR to resolve the UDM Group ID/UDR Group ID/AUSF Group ID/PCF Group ID based on UE identity (e.g., SUPI)); IP domain list as described in clause 6.1.6.2.21 of 3GPP TS 29.510 v18.2.0 (2023-03-29) ("[TS29510]"), Range(s) of (UE) IPv4 addresses or Range(s) of (UE) IPv6 prefixes, Range(s) of SUPIs or Range(s) of GPSIs or a BSF Group ID, in the case of BSF; SCP Domain the NF belongs to; DCCF Serving Area information, NF types of the data sources, NF Set IDs of the data sources, if available, in the case of DCCF 663; supported DNAI list, in the case of SMF 646; for SNPN, capability to support SNPN Onboarding in the case of AMF and capability to support User Plane Remote Provisioning in the case of SMF 646; IP address range, DNAI for UPF 648; additional V2X related NF profile parameters are defined in 3GPP TS 23.287; additional ProSe related NF profile parameters are defined in 3GPP TS 23.304; additional MBS related NF profile parameters are defined in 3GPP TS 23.247; additional UAS related NF profile parameters are defined in TS 23.256; among many others discussed in [TS23501]. In some examples, service authorization information provided by an OAM system is also included in the NF profile in the case that, for example, an NF instance has an exceptional service authorization information.

For NWDAF 662, the NF profile includes: supported analytics ID(s), possibly per service, NWDAF serving area information (e.g., a list of TAIs for which the NWDAF can provide services and/or data), Supported Analytics Delay per Analytics ID (if available), NF types of the NF data sources, NF Set IDs of the NF data sources, if available, analytics aggregation capability (if available), analytics metadata provisioning capability (if available), ML model filter information parameters S-NSSAI(s) and area(s) of interest for the trained ML model(s) per analytics ID(s) (if available), federated learning (FL) capability type (e.g., FL server or FL client, if available), Time interval supporting FL (if available). The NWDAF's 662 Serving Area information is common to all its supported analytics IDs. The analytics IDs supported by the NWDAF 662 may be associated with a supported analytics delay, for example, the analytics report can be generated with a time (including data collection delay and inference delay) in less than or equal to the supported analytics delay. The determination of supported analytics delay, and how the NWDAF 662 avoid updating its Supported Analytics Delay in NRF frequently may be NWDAF -implementation specific.

The PCF 656 provides policy rules to control plane functions to enforce them, and may also support unified policy framework to govern network behavior. The PCF 656 may also implement a front end to access subscription information relevant for policy decisions in a UDR 659 of the UDM 658. In addition to communicating with functions over reference points as shown, the PCF 656 exhibit an Npcf service-based interface.

The UDM 658 handles subscription-related information to support the network entities' handling of communication sessions, and stores subscription data of UE 602. For example, subscription data may be communicated via an N8 reference point between the UDM 658 and the AMF 644. The UDM 658 may include two parts, an application front end and a UDR. The UDR may store subscription data and policy data for the UDM 658 and the PCF 656, and/or structured data for exposure and application data (including PFDs for application detection, application request information for multiple UEs 602) for the NEF 652. The Nudr service-based interface may be exhibited by the UDR to allow the UDM 658, PCF 656, and NEF 652 to access a particular set of the stored data, as well as to read, update (e.g., add, modify), delete, and subscribe to notification of relevant data changes in the UDR. The UDM 658 may include a UDM-FE, which is in charge of processing credentials, location management, subscription management and so on. Several different front ends may serve the same user in different transactions. The UDM-FE accesses subscription information stored in the UDR and performs authentication credential processing, user identification handling, access authorization, registration/mobility management, and subscription management. In addition to communicating with other NFs over reference points as shown, the UDM 658 may exhibit the Nudm service-based interface.

Edge Application Server Discovery Function (EASDF) 661 exhibits an Neasdf service-based interface, and is connected to the SMF 646 via an N88 interface. One or multiple EASDF instances may be deployed within a PLMN, and interactions between 5GC NF(s) and the EASDF 661 take place within a PLMN. The EASDF 661 includes one or more of the following functionalities: registering to NRF 654 for EASDF 661 discovery and selection; handling the DNS messages according to the instruction from the SMF 646; and/or terminating DNS security, if used. Handling the DNS messages according to the instruction from the SMF 646 includes one or more of the following functionalities: receiving DNS message handling rules and/or BaselineDNSPattern from the SMF 646; exchanging DNS messages from/with the UE 602; forwarding DNS messages to C-DNS or L-DNS for DNS query; adding EDNS client subnet (ECS) option into DNS query for an FQDN; reporting to the SMF 646 the information related to the received DNS messages; and/or buffering/discarding DNS messages from the UE 602 or DNS Server. The EASDF has direct user plane connectivity (e.g., without any NAT) with the PSA UPF over N6 for the transmission of DNS signaling exchanged with the UE. The deployment of a NAT between EASDF 661 and PSA UPF 648 may or may not be supported. Additional aspects of the EASDF 661 are discussed in [TS23548],

AF 660 provides application influence on traffic routing, provide access to NEF 652, and interact with the policy framework for policy control. The AF 660 may influence UPF 648 (re)selection and traffic routing. Based on operator deployment, when AF 660 is considered to be a trusted entity, the network operator may permit AF 660 to interact directly with relevant NFs. In some implementations, the AF 660 is used for edge computing implementations.

An NF that needs to collect data from an AF 660 may subscribe/unsubscribe to notifications regarding data collected from an AF 660, either directly from the AF 660 or via NEF 652. The data collected from an AF 660 is used as input for analytics by the NWDAF 662. The details for the data collected from an AF 660 as well as interactions between NEF 652, AF 660 and NWDAF 662 are described in [TS23288].

The 5GC 640 may enable edge computing by selecting operator/3rd party services to be geographically close to a point that the UE 602 is attached to the network. This may reduce latency and load on the network. In edge computing implementations, the 5GC 640 may select a UPF 648 close to the UE 602 and execute traffic steering from the UPF 648 to DN 636 via the N6 interface. This may be based on the UE subscription data, UE location, and information provided by the AF 660, which allows the AF 660 to influence UPF (re)selection and traffic routing.

The data network (DN) 636 may represent various network operator services, Internet access, or third party services that may be provided by one or more servers including, for example, application (app)/content server 638. The DN 636 may be an operator external public, a private PDN, or an intra-operator packet data network, for example, for provision of IMS services. In this example, the app server 638 can be coupled to an IMS via an S-CSCF or the I-CSCF. In some implementations, the DN 636 may represent one or more local area DNs (LADNs), which are DNs 636 (or DN names (DNNs)) that is/are accessible by a UE 602 in one or more specific areas. Outside of these specific areas, the UE 602 is not able to access the LADN/DN 636.

Additionally or alternatively, the DN 636 may be an edge DN 636, which is a (local) DN that supports the architecture for enabling edge applications. In these examples, the app server 638 may represent the physical hardware systems/devices providing app server functionality and/or the application software resident in the cloud or at an edge compute node that performs server function(s). In some examples, the app/content server 638 provides an edge hosting environment that provides support required for Edge Application Server's execution.

In some examples, the 5GS can use one or more edge compute nodes to provide an interface and offload processing of wireless communication traffic. In these examples, the edge compute nodes may be included in, or co-located with one or more RANs 604 or RAN nodes 614. For example, the edge compute nodes can provide a connection between the RAN 604 and UPF 648 in the 5GC 640. The edge compute nodes can use one or more NFV instances instantiated on virtualization infrastructure within the edge compute nodes to process wireless connections to and from the RAN 614 and UPF 648.

In some implementations, the edge compute nodes provide a distributed computing environment for application and service hosting, and also provide storage and processing resources so that data and/or content can be processed in close proximity to subscribers (e.g., users of UEs 602) for faster response times. The edge compute nodes also support multitenancy run-time and hosting environment(s) for applications, including virtual appliance applications that may be delivered as packaged virtual machine (VM) images, middleware application and infrastructure services, content delivery services including content caching, mobile big data analytics, and computational offloading, among others. Computational offloading involves offloading computational tasks, workloads, applications, and/or services to the edge compute nodes from the UEs 602, CN 640, DN 636, and/or server(s) 638, or vice versa. For example, a device application or client application operating in a UE 602 may offload application tasks or workloads to one or more edge compute nodes. In another example, an edge compute node may offload application tasks or workloads to a set of UEs 602 (e.g., for distributed machine learning computation and/or the like).

The edge compute nodes may include or be part of an edge system that employs one or more edge computing technologies (ECTs) (also referred to as an "edge computing framework" or the like). The edge compute nodes may also be referred to as "edge hosts" or "edge servers." The edge system includes a collection of edge servers and edge management systems (not shown) necessary to run edge computing applications within an operator network or a subset of an operator network. The edge servers are physical computer systems that may include an edge platform and/or virtualization infrastructure, and provide compute, storage, and network resources to edge computing applications. Each of the edge servers are disposed at an edge of a corresponding access network, and are arranged to provide computing resources and/or various services (e.g., computational task and/or workload offloading, cloud-computing capabilities, IT services, and other like resources and/or services as discussed herein) in relatively close proximity to UEs 602. The VI of the edge compute nodes provide virtualized environments and virtualized resources for the edge hosts, and the edge computing applications may run as VMs and/or application containers on top of the VI.

In one example implementation, the ECT is and/or operates according to the MEC framework, as discussed in ETSI GR MEC 001 v3.1.1 (2022-01), ETSI GS MEC 003 v3.1.1 (2022-03), ETSI GS MEC 009 v3.1.1 (2021-06), ETSI GS MEC 010-1 v1.1.1 (2017-10), ETSI GS MEC 010-2 v2.2.1 (2022-02), ETSI GS MEC 011 v2.2.1 (2020-12), ETSI GS MEC 012 V2.2.1 (2022-02), ETSI GS MEC 013 V2.2.1 (2022-01), ETSI GS MEC 014 v2.1.1 (2021-03), ETSI GS MEC 015 v2.1.1 (2020-06), ETSI GS MEC 016 v2.2.1 (2020-04), ETSI GS MEC 021 v2.2.1 (2022-02), ETSI GR MEC 024 v2.1.1 (2019-11), ETSI GS MEC 028 V2.2.1 (2021-07), ETSI GS MEC 029 v2.2.1 (2022-01), ETSI MEC GS 030 v2.1.1 (2020-04), and ETSI GR MEC 031 v2.1.1 (2020-10) (collectively referred to herein as "[MEC)"), the contents of each of which are hereby incorporated by reference in their entireties. This example implementation (and/or in any other example implementation discussed herein) may also include NFV and/or other like virtualization technologies such as those discussed in ETSI GR NFV 001 V1.3.1 (2021-03), ETSI GS NFV 002 V1.2.1 (2014-12), ETSI GR NFV 003 V1.6.1 (2021-03), ETSI GS NFV 006 V2.1.1 (2021-01), ETSI GS NFV-INF 001 V1.1.1 (2015-01), ETSI GS NFV-INF 003 V1.1.1 (2014-12), ETSI GS NFV-INF 004 V1.1.1 (2015-01), ETSI GS NFV-MAN 001 v1.1.1 (2014-12), and/or Israel et al., *OSM Release FIVE Technical Overview,* ETSI OPEN SOURCE MANO, OSM White Paper, 1st ed. (Jan. 2019), https://osm.etsi.org/images/OSM-Whitepaper-TechContent-ReleaseFIVE-FINAL.pdf (collectively referred to as "[ETSINFV]"), the contents of each of which are hereby incorporated by reference in their entireties. Other virtualization technologies and/or service orchestration and automation platforms may be used such as, for example, those discussed in *E2E Network Slicing Architecture,* GSMA, Official Doc. NG.127, v1.0 (03 Jun. 2021), https://www.gsma.com/newsroom/wp-content/uploads//NG.127-v1.0-2.pdf, *Open Network Automation Platform (ONAP) documentation,* Release Istanbul, v9.0.1 (17 Feb. 2022), https://docs.onap.org/en/latest/index.html ("[ONAP]"), 3GPP Service Based Management Architecture (SBMA) as discussed in 3GPP TS 28.533 v17.1.0 (2021-12-23) ("[TS28533]"), the contents of each of which are hereby incorporated by reference in their entireties.

In another example implementation, the ECT is and/or operates according to the O-RAN framework. Typically, front- end and back-end device vendors and carriers have worked closely to ensure compatibility. The flip-side of such a working model is that it becomes quite difficult to plug-and-play with other devices and this can hamper innovation. To combat this, and to promote openness and inter-operability at every level, several key players interested in the wireless domain (e.g., carriers, device manufacturers, academic institutions, and/or the like) formed the Open RAN alliance ("O-RAN") in 2018. The O-RAN network architecture is a building block for designing virtualized RAN on programmable hardware with radio access control powered by AI/ML. Various aspects of the O-RAN architecture are described in *O-RAN Working Group 1 (Use Cases and Overall Architecture): O-RAN Architecture Description,* O-RAN ALLIANCE WG1, O-RAN Architecture Description v08.00, Release R003 (Mar. 2023) ("[ORAN.OAD]"); *O-RAN Operations and Maintenance Architecture Specification* v04.00, O-RAN ALLIANCE WG1 (Feb. 2021) ("[ORAN.OAM-Architecture]"); *O-RAN Operations and Maintenance Interface Specification* v04.00, O-RAN ALLIANCE WG1 (Feb. 2021) ("[ORAN.O1]"); *O-RAN Information Model and Data Models Specification* v01.00, O-RAN ALLIANCE WG1 (Feb. 2021); *O-RAN Working Group 1 Slicing Architecture,* O-RAN ALLIANCE WG1, Slicing Architecture Technical Specification v09.00, Release R003 (Mar. 2023); *O-RAN Working Group 1 Use Cases Detailed Specification Architecture,* v10.00, Release R003 (Mar. 2023) ("[ORAN.UseCases]"); *O-RAN Working Group 2 (Non-RTRIC and A1 interface WG) A1 interface: General Aspects and Principles,* v03.01, Relase R003 (Mar. 2023) ("[ORAN.A1GAP]"); *O-RAN Working Group 2 (Non-RT RIC and A1 interface WG) A1 interface: Type Definitions,* v05.00, Relase R003 (Mar. 2023); *O-RAN Working Group 2 (Non-RTRIC and A1 interface WG) A1 interface: Transport Protocol,* v02.01, Relase R003 (Mar. 2023); *O-RAN Working Group 2 AI*/*ML workflow description and requirements* v01.03 O-RAN ALLIANCE WG2 (Oct. 2021) ("[ORAN.AIML]"); *O-RAN Working Group 2 (Non-RT RIC and A1 interface WG): R1 interface: General Aspects and Principles 4.0,* v04.00, Release R003 (Mar. 2023); *O-RAN Working Group 2 (Non-RT RIC and A1 interface WG) Non-RT RIC Architecture* v03.00 (2023) ("[ORAN.Non-RT-RIC-ARCH-TS]"); *O-RAN Working Group 2 Non-RT RIC: Functional Architecture* v01.01, O-RAN ALLIANCE WG2 (Jun. 2021); *O-RAN Working Group 3 Near-Real-time RAN Intelligent Controller Architecture & E2 General Aspects and Principles,* v03.00, Release R003 (Mar. 2023) ("[ORAN.E2GAP]"); *O-RAN Working Group 3, Near-Real-time Intelligent Controller, E2 Application Protocol (E2AP),* v03.00, Release R003 (Mar. 2023) ("[ORAN.E2AP]"); *O-RAN Working Group 3 Near-Real-time Intelligent Controller E2 Service Model (E2SM),* v03.00, Release R003 (Mar. 2023) ("[ORAN.E2SM]"); *O-RAN Working Group 3 Near-Real-time Intelligent Controller E2 Service Model (E2SM) KPM,* v03.00, Release R003 (Mar. 2023) ("[ORAN.WG3.E2SM-KPM]"); *O-RAN Working Group 3 Near-Real-time Intelligent Controller E2 Service Model (E2SM), Cell Configuration and Control,* v01.01, Release R003 (Mar. 2023) ("[ORAN.E2SM-CCC]"); *O-RAN Working Group 3 Near-Real-time Intelligent Controller E2 Service Model (E2SM) RAN Function Network Interface (NI)* v01.00 (Feb. 2020) ("[ORAN.E2SM-NI]"); *O-RAN Working Group 3 Near-Real-time Intelligent Controller E2 Service Model (E2SM) RAN Control* v01.03 (Oct. 2022) ("[ORAN.E2SM-RC]"); *O-RAN Working Group 3 (Near-Real-time RAN Intelligent Controller andE2 Interface Working Group): Near-RTRIC Architecture,* v04.00, Release R003 (Mar. 2023) ("[ORAN.RICARCH]"); *O-RAN WorkingGroup 4 (Open Fronthaul Interfaces WG) Control, User and Synchronization Plane Specification,* v11.00, Release R003 (Mar. 2023) ("[ORAN.CUS]"); O-*RAN Fronthaul Working Group 4 Cooperative Transport Interface Transport Control Plane Specification,* v03.00 (Oct. 2022); O-*RAN Fronthaul Working Group 4 Cooperative Transport Interface Transport Management Plane Specification,* v11.00, Release R003 (Mar. 2023) ("[ORAN.MP]"); *O-RAN Alliance Working Group 5 O1 Interface specification for O-CU-UP and O-CU-CP* v04.00 (Oct. 2022); *O-RAN Alliance Working Group 5 O1 Interface specification for O-DU,* v06.00, Release R003 (Mar. 2023); *O-RAN Open F1*/*W1*/*E1*/*X2*/*Xn Interfaces Working Group Transport Specification,* O-RAN ALLIANCE WG5, v0100 (Apr. 2020); *O-RAN Working Group 6 (Cloudification and Orchestration) Cloud Architecture and Deployment Scenarios for O-RAN Virtualized RAN* v04.00 (Oct. 2022) ("[ORAN.CADS]"); *O-RAN Cloud Platform Reference Designs,* v02.00, O-RAN ALLIANCE WG6 (Feb. 2021); *O-RAN Working Group 6, O2 Interface General Aspects and Principles,* v03.00, Release R003 (Mar. 2023); *O-RAN Working Group 6 (Cloudification and Orchestration Work Group): O-RAN Acceleration Abstraction Layer General Aspects and Principles,* v05.00, Release R003 (Mar. 2023); *O-RAN Working Group 6: O-Cloud Notification API Specification for Event Consumers,* v03.00 (Oct. 2022) ("[ORAN.O-CloudNotificationAPI]"); *O-RAN White Box Hardware Working Group Hardware Reference Design Specification for Indoor Pico Cell with Fronthaul Split Option* 6 v02.00, O-RAN ALLIANCE WG7 (Oct. 2021) ("[ORAN.IPC-HRD-Opt6]"); *O-RAN WG7 Hardware Reference Design Specification for Indoor Picocell (FR1) with Split Architecture Option 7-2* v03.00, O-RAN ALLIANCE WG7 (Oct. 2021) ("[ORAN.IPC-HRD-Opt7-2]"); *O-RAN WG7 Hardware Reference Design Specification for Indoor Picocell (FR1) with Split Architecture Option 8* v03.00 (Oct. 2021) ("[ORAN.IPC-HRD-Opt8]"); *O-RAN White Box Hardware Working Group Hardware Reference Design Specification for Outdoor Micro Cell with Split Architecture Option 7*.*2* v03.00, O-RAN ALLIANCE WG7 (Oct. 2022) ("[ORAN.OMC-HRD-Opt7-2]"); *O-RAN White Box Hardware Working Group Hardware Reference Design Specification for Outdoor Macrocell with Split Architecture Option* 7.2, v02.00, Release R003 (Mar. 2023) ("[ORAN.OMAC-HRD]"); *O-RAN Open X-haul Transport Working Group Management interfaces for Transport Network Elements,* v05.00, Release R003 (Mar. 2023); *O-RAN Open Transport Working Group 9 Xhaul Packet Switched Architectures and Solutions,* v03.00, Release R003 (Mar. 2023) ("[ORAN.XPSAAS]"); *O-RAN Open X-haul Transport Working Group Synchronization Architecture and Solution Specification,* v03.00 (Oct. 2022); *O-RAN Open Xhaul Transport WG9 WDM-based Fronthaul Transport,* v03.00, Release R003 (Mar. 2023); *O-RAN Operations and Maintenance Architecture,* v08.00, Release R003 (Mar. 2023) ("[ORAN.OAM-Arch]"); *O-RAN Operations and Maintenance Interface Specification,* v09.00, Release R003 (Mar. 2023) ("[ORAN.O1-Interface.0]"); and *O-RAN: Towards an Open and Smart RAN, O-*RAN ALLIANCE, White Paper (Oct. 2018) (collectively referred to as "[O-RAN]"), the contents of each of which are hereby incorporated by reference in their entireties..

In another example implementation, the ECT is and/or operates according to the 3rd Generation Partnership Project (3GPP) System Aspects Working Group 6 (SA6) Architecture for enabling Edge Applications (referred to as "3GPP edge computing") as discussed in 3GPP TS 23.558 v18.1.0 (2022-12-23) ("[TS23558]"), 3GPP TS 23.501 v18.0.0 (2022-12-21) ("[TS23501]"), 3GPP TS 23.502 v18.1.1 (2023-04-05) ("[TS23502]"), 3GPP TS 23.548 v18.1.0 (2023-04-06) ("[TS23548]"), 3GPP TS 28.538 v18.2.0 (2023-03-30) ("[TS28538]"), 3GPP TR 23.700-98 v18.0.0 (2022-12-23) ("[TR23700-98]"), 3GPP TS 23.222 v18.0.0 (2022-12-23) ("[TS23222]"), 3GPP TS 33.122 v18.0.0 (2022-12-16) ("[TS33122]"), 3GPP TS 29.222 v17.1.0 (2021-06-25) ("[TS29222]"), 3GPP TS 29.522 v18.0.0 (2022-12-16) ("[TS29522]"), 3GPP TS 29.122 v18.0.0 (2022-12-16) ("[TS29122]"), 3GPP TS 23.682 v17.3.0 (2022-06-15) ("[TS23682]"), 3GPP TS 23.434 v18.3.0 (2022-12-23) ("[TS23434]"), and 3GPP TS 23.401 v18.0.0 (2022-12-21) (collectively referred to as "[SA6Edge]"), the contents of each of which are hereby incorporated by reference in their entireties.

In another example implementation, the ECT is and/or operates according to the Intel^{®} Smart Edge Open framework (formerly known as OpenNESS) as discussed in Intel^{®} Smart Edge Open Developer Guide, version 21.09 (30 Sep. 2021), available at: https://smart-edge-open.github.io/ ("[ISEO]"), the contents of which is hereby incorporated by reference in its entirety.

In another example implementation, the ECT operates according to the Multi-Access Management Services (MAMS) framework as discussed in Kanugovi et al., Multi-Access Management Services (MAMS), Internet Engineering Task Force (IETF), Request for Comments (RFC) 8743 (Mar. 2020) ("[RFC8743]"), Ford et al., TCP Extensions for Multipath Operation with Multiple Addresses, IETF RFC 8684, (Mar. 2020), De Coninck et al., Multipath Extensions for QUIC (MP-QUIC), IETF draft-deconinck-quic-multipath-07, IETA, QUIC Working Group (03-May-2021), Zhu et al., User-Plane Protocols for Multiple Access Management Service, IETF draft-zhu-intarea-mams-user-protocol-09, IETA, INTAREA (04-Mar-2020), and Zhu et al., Generic Multi-Access (GMA) Convergence Encapsulation Protocols, IETF RFC 9188 (Feb. 2022) (collectively referred to as "[MAMS]"), the contents of each of which are hereby incorporated by reference in their entireties.

It should be understood that the aforementioned edge computing frameworks/ECTs and services deployment examples are only illustrative examples of ECTs, and that the present disclosure may be applicable to many other or additional edge computing/networking technologies in various combinations and layouts of devices located at the edge of a network including the various edge computing networks/systems described herein. Further, the techniques disclosed herein may relate to other IoT edge network systems and configurations, and other intermediate processing entities and architectures may also be applicable to the present disclosure. Examples of such edge computing/networking technologies include [MEC]; [O-RAN]; [ISEO]; [SA6Edge]; Content Delivery Networks (CDNs) (also referred to as "Content Distribution Networks" or the like); Mobility Service Provider (MSP) edge computing and/or Mobility as a Service (MaaS) provider systems (e.g., used in AECC architectures); Nebula edge-cloud systems; Fog computing systems; Cloudlet edge-cloud systems; Mobile Cloud Computing (MCC) systems; Central Office Re-architected as a Datacenter (CORD), mobile CORD (M-CORD) and/or Converged Multi-Access and Core (COMAC) systems; and/or the like. Further, the techniques disclosed herein may relate to other IoT edge network systems and configurations, and other intermediate processing entities and architectures may also be used for purposes of the present disclosure.

The interfaces of the 5GC 640 include reference points and service-based interfaces. The reference points include: N1 (between the UE 602 and the AMF 644), N2 (between RAN 614 and AMF 644), N3 (between RAN 614 and UPF 648), N4 (between the SMF 646 and UPF 648), N5 (between PCF 656 and AF 660), N6 (between UPF 648 and DN 636), N7 (between SMF 646 and PCF 656), N8 (between UDM 658 and AMF 644), N9 (between two UPFs 648), N10 (between the UDM 658 and the SMF 646), N11 (between the AMF 644 and the SMF 646), N12 (between AUSF 642 and AMF 644), N13 (between AUSF 642 and UDM 658), N14 (between two AMFs 644; not shown), N15 (between PCF 656 and AMF 644 in case of a non-roaming scenario, or between the PCF 656 in a visited network and AMF 644 in case of a roaming scenario), N16 (between two SMFs 646; not shown), and N22 (between AMF 644 and NSSF 650). Other reference point representations not shown in FIG. 6 can also be used. The service-based representation of FIG. 6 represents NFs within the control plane that enable other authorized NFs to access their services. The service-based interfaces (SBIs) include: Namf (SBI exhibited by AMF 644), Nsmf (SBI exhibited by SMF 646), Nnef (SBI exhibited by NEF 652), Npcf (SBI exhibited by PCF 656), Nudm (SBI exhibited by the UDM 658), Naf (SBI exhibited by AF 660), Nnrf (SBI exhibited by NRF 654), Nnssf (SBI exhibited by NSSF 650), Nausf (SBI exhibited by AUSF 642). Other service-based interfaces (e.g., Nudr, N5g-eir, and Nudsf) not shown in FIG. 6 can also be used. In some examples, the NEF 652 can provide an interface to edge compute nodes 636x, which can be used to process wireless connections with the RAN 614.

Although not shown by FIG. 6, the system 600 may also include NFs that are not shown such as, for example, UDR, Unstructured Data Storage Function (UDSF), Network Slice Admission Control Function (NSACF), Network Slice-specific and Stand-alone Non-Public Network (SNPN) Authentication and Authorization Function (NSSAAF), UE radio Capability Management Function (UCMF), 5G-Equipment Identity Register (5G-EIR), CHarging Function (CHF), Time Sensitive Networking (TSN) AF 660, Time Sensitive Communication and Time Synchronization Function (TSCTSF), DCCF, Analytics Data Repository Function (ADRF), MFAF, Non-Seamless WLAN Offload Function (NSWOF), Security Edge Protection Proxy (SEPP), Service Communication Proxy (SCP), Non-3GPP InterWorking Function (N3IWF), Trusted Non-3GPP Gateway Function (TNGF), Wireline Access Gateway Function (W-AGF), and/or Trusted WLAN Interworking Function (TWIF) as discussed in [TS23501].

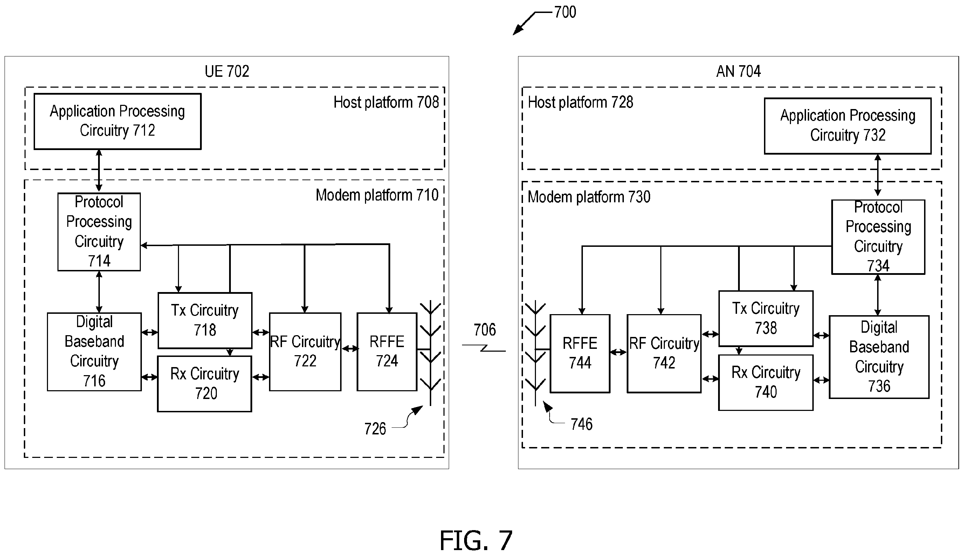

FIG. 7 schematically illustrates a wireless network 700. The wireless network 700 includes a UE 702 in wireless communication with an AN 704. The UE 702 and AN 704 may be similar to, and substantially interchangeable with, like-named components described elsewhere herein.

The UE 702 may be communicatively coupled with the AN 704 via connection 706. The connection YY06 is illustrated as an air interface to enable communicative coupling, and can be consistent with cellular communications protocols such as an LTE protocol or a 5G NR protocol operating at mmWave or sub-6GHz frequencies.

The UE 702 includes a host platform 708 coupled with a modem platform 710. The host platform 708 includes application processing circuitry 712, which may be coupled with protocol processing circuitry 714 of the modem platform 710. The application processing circuitry 712 may run various applications for the UE 702 that source/sink application data. The application processing circuitry 712 may further implement one or more layer operations to transmit/receive application data to/from a data network. These layer operations includes transport (for example UDP) and Internet (for example, IP) operations

The protocol processing circuitry 714 may implement one or more of layer operations to facilitate transmission or reception of data over the connection 706. The layer operations implemented by the protocol processing circuitry 714 includes, for example, MAC, RLC, PDCP, RRC and NAS operations.

The modem platform 710 may further include digital baseband circuitry 716 that may implement one or more layer operations that are "below" layer operations performed by the protocol processing circuitry 714 in a network protocol stack. These operations includes, for example, PHY operations including one or more of HARQ-ACK functions, scrambling/descrambling, encoding/decoding, layer mapping/de-mapping, modulation symbol mapping, received symbol/bit metric determination, multi-antenna port precoding/decoding, which includes one or more of space-time, space-frequency or spatial coding, reference signal generation/detection, preamble sequence generation and/or decoding, synchronization sequence generation/detection, control channel signal blind decoding, and other related functions.

The modem platform 710 may further include transmit circuitry 718, receive circuitry 720, RF circuitry 722, and RF front end (RFFE) 724, which includes or connect to one or more antenna panels 726. Briefly, the transmit circuitry 718 includes a digital-to-analog converter, mixer, intermediate frequency (IF) components, etc.; the receive circuitry 720 includes an analog-to-digital converter, mixer, IF components, etc.; the RF circuitry 722 includes a low-noise amplifier, a power amplifier, power tracking components, etc.; RFFE 724 includes filters (for example, surface/bulk acoustic wave filters), switches, antenna tuners, beamforming components (for example, phase-array antenna components), etc. The selection and arrangement of the components of the transmit circuitry 718, receive circuitry 720, RF circuitry 722, RFFE 724, and antenna panels 726 (referred generically as "transmit/receive components") may be specific to details of a specific implementation such as, for example, whether communication is TDM or FDM, in mmWave or sub-6 gHz frequencies, etc. In some examples, the transmit/receive components may be arranged in multiple parallel transmit/receive chains, may be disposed in the same or different chips/modules, etc.

In some examples, the protocol processing circuitry 714 includes one or more instances of control circuitry (not shown) to provide control functions for the transmit/receive components.

A UE reception may be established by and via the antenna panels 726, RFFE 724, RF circuitry 722, receive circuitry 720, digital baseband circuitry 716, and protocol processing circuitry 714. In some examples, the antenna panels 726 may receive a transmission from the AN 704 by receive-beamforming signals received by a set of antennas/antenna elements of the one or more antenna panels 726.

A UE transmission may be established by and via the protocol processing circuitry 714, digital baseband circuitry 716, transmit circuitry 718, RF circuitry 722, RFFE 724, and antenna panels 726. In some examples, the transmit components of the UE 704 may apply a spatial filter to the data to be transmitted to form a transmit beam emitted by the antenna elements of the antenna panels 726.

Similar to the UE 702, the AN 704 includes a host platform 728 coupled with a modem platform 730. The host platform 728 includes application processing circuitry 732 coupled with protocol processing circuitry 734 of the modem platform 730. The modem platform may further include digital baseband circuitry 736, transmit circuitry 738, receive circuitry 740, RF circuitry 742, RFFE circuitry 744, and antenna panels 746. The components of the AN 704 may be similar to and substantially interchangeable with like-named components of the UE 702. In addition to performing data transmission/reception as described above, the components of the AN 708 may perform various logical functions that include, for example, RNC functions such as radio bearer management, uplink and downlink dynamic radio resource management, and data packet scheduling.

Examples of the antenna elements of the antenna panels 726 and/or the antenna elements of the antenna panels 746 include planar inverted-F antennas (PIFAs), monopole antennas, dipole antennas, loop antennas, patch antennas, Yagi antennas, parabolic dish antennas, omni-directional antennas, and/or the like.

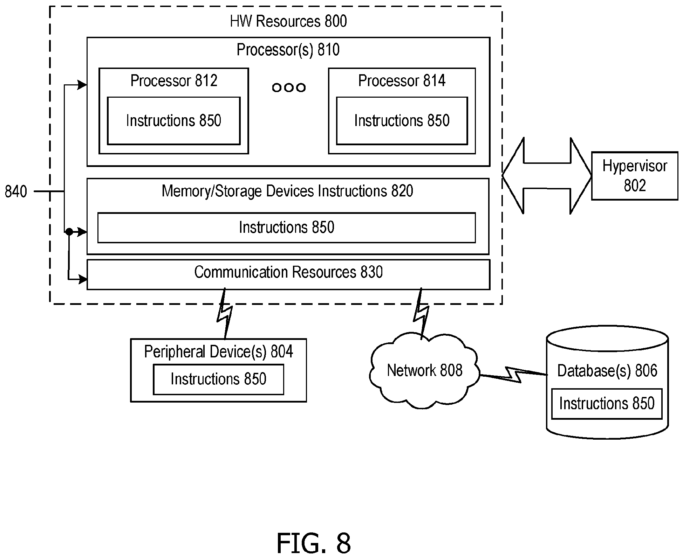

FIG. 8 illustrates components capable of reading instructions from a machine-readable or computer-readable medium (e.g., a non-transitory machine-readable storage medium) and perform any one or more of the methodologies discussed herein. Specifically, FIG. 8 shows hardware resources 800 including one or more processors (or processor cores) 810, one or more memory/storage devices 820, and one or more communication resources 830, each of which may be communicatively coupled via a bus 840 or other interface circuitry. For examples where node virtualization (e.g., NFV) is utilized, a hypervisor 802 may be executed to provide an execution environment for one or more network slices/sub-slices to utilize the hardware resources 800. In some examples, the hardware resources 800 may be implemented in or by an individual compute node, which may be housed in an enclosure of various form factors. In other examples, the hardware resources 800 may be implemented by multiple compute nodes that may be deployed in one or more data centers and/or distributed across one or more geographic regions.

The processors 810 may include, for example, a processor 812 and a processor 814. The processors 810 may be or include, for example, a central processing unit (CPU), a reduced instruction set computing (RISC) processor, a complex instruction set computing (CISC) processor, a graphics processing unit (GPU), a DSP such as a baseband processor, an ASIC, an FPGA, a radio-frequency integrated circuit (RFIC), a microprocessor or controller, a multi-core processor, a multithreaded processor, an ultra-low voltage processor, an embedded processor, an xPU, a data processing unit (DPU), an Infrastructure Processing Unit (IPU), a network processing unit (NPU), another processor (including any of those discussed herein), and/or any suitable combination thereof.

The memory/storage devices 820 may include main memory, disk storage, or any suitable combination thereof. The memory/storage devices 820 may include, but are not limited to, any type of volatile, non-volatile, semi-volatile memory, and/or any combination thereof. As examples, the memory/storage devices 820 can be or include random access memory (RAM), static RAM (SRAM), dynamic RAM (DRAM), synchronous DRAM (SDRAM), magnetoresistive RAM (MRAM), conductive bridge Random Access Memory (CB-RAM), spin transfer torque (STT)-MRAM, phase change RAM (PRAM), core memory, dual inline memory modules (DIMMs), microDIMMs, MiniDIMMs, block addressable memory device(s) (e.g., those based on NAND or NOR technologies (e.g., single-level cell (SLC), Multi-Level Cell (MLC), Quad-Level Cell (QLC), Tri-Level Cell (TLC), or some other NAND), read-only memory (ROM), programmable ROM (PROM), erasable PROM (EPROM), electrically EPROM (EEPROM), flash memory, non-volatile RAM (NVRAM), solid-state storage, magnetic disk storage mediums, optical storage mediums, memory devices that use chalcogenide glass, multi-threshold level NAND flash memory, NOR flash memory, single or multi-level Phase Change Memory (PCM) and/or phase change memory with a switch (PCMS), NVM devices that use chalcogenide phase change material (e.g., chalcogenide glass), a resistive memory, nanowire memory, ferroelectric transistor random access memory (FeTRAM), anti-ferroelectric memory, magnetoresistive random access memory (MRAM) memory that incorporates memristor technology, phase change RAM (PRAM), resistive memory including the metal oxide base, the oxygen vacancy base and the conductive bridge Random Access Memory (CB-RAM), or spin transfer torque (STT)-MRAM, a spintronic magnetic junction memory based device, a magnetic tunneling junction (MTJ) based device, a Domain Wall (DW) and Spin Orbit Transfer (SOT) based device, a thyristor based memory device, and/or a combination of any of the aforementioned memory devices, and/or other memory.

The communication resources 830 may include interconnection or network interface controllers, components, or other suitable devices to communicate with one or more peripheral devices 804 or one or more databases 806 or other network elements via a network 808. For example, the communication resources 830 may include wired communication components (e.g., for coupling via USB, Ethernet, etc.), cellular communication components, NFC components, Bluetooth^{®} (or Bluetooth^{®} Low Energy) components, Wi-Fi^{®} components, and other communication components.

Instructions 850 comprise software, program code, application(s), applet(s), an app(s), firmware, microcode, machine code, and/or other executable code for causing at least any of the processors 810 to perform any one or more of the methodologies and/or techniques discussed herein. The instructions 850 may reside, completely or partially, within at least one of the processors 810 (e.g., within the processor's cache memory), the memory/storage devices 820, or any suitable combination thereof. Furthermore, any portion of the instructions 850 may be transferred to the hardware resources 800 from any combination of the peripheral devices 804 or the databases 806. Accordingly, the memory of processors 810, the memory/storage devices 820, the peripheral devices 804, and the databases 806 are examples of computer-readable and machine-readable media.

In some examples, the peripheral devices 804 may represent one or more sensors (also referred to as "sensor circuitry"). The sensor circuitry includes devices, modules, or subsystems whose purpose is to detect events or changes in its environment and send the information (sensor data) about the detected events to some other a device, module, subsystem, and/or the like. Individual sensors may be exteroceptive sensors (e.g., sensors that capture and/or measure environmental phenomena and/ external states), proprioceptive sensors (e.g., sensors that capture and/or measure internal states of a compute node or platform and/or individual components of a compute node or platform), and/or exproprioceptive sensors (e.g., sensors that capture, measure, or correlate internal states and external states). Examples of such sensors include, inter alia, inertia measurement units (IMU) comprising accelerometers, gyroscopes, and/or magnetometers; microelectromechanical systems (MEMS) or nanoelectromechanical systems (NEMS) comprising 3-axis accelerometers, 3-axis gyroscopes, and/or magnetometers; level sensors; flow sensors; temperature sensors (e.g., thermistors, including sensors for measuring the temperature of internal components and sensors for measuring temperature external to the compute node or platform); pressure sensors; barometric pressure sensors; gravimeters; altimeters; image capture devices (e.g., cameras); light detection and ranging (LiDAR) sensors; proximity sensors (e.g., infrared radiation detector and the like); depth sensors, ambient light sensors; optical light sensors; ultrasonic transceivers; microphones; and the like.

Additionally or alternatively, the peripheral devices 804 may represent one or more actuators, which allow a compute node, platform, machine, device, mechanism, system, or other object to change its state, position, and/or orientation, or move or control a compute node, platform, machine, device, mechanism, system, or other object. The actuators comprise electrical and/or mechanical devices for moving or controlling a mechanism or system, and converts energy (e.g., electric current or moving air and/or liquid) into some kind of motion. As examples, the actuators can be or include any number and combination of the following: soft actuators (e.g., actuators that changes its shape in response to a stimuli such as, for example, mechanical, thermal, magnetic, and/or electrical stimuli), hydraulic actuators, pneumatic actuators, mechanical actuators, electromechanical actuators (EMAs), microelectromechanical actuators, electrohydraulic actuators, linear actuators, linear motors, rotary motors, DC motors, stepper motors, servomechanisms, electromechanical switches, electromechanical relays (EMRs), power switches, valve actuators, piezoelectric actuators and/or biomorphs, thermal biomorphs, solid state actuators, solid state relays (SSRs), shape-memory alloy-based actuators, electroactive polymer-based actuators, relay driver integrated circuits (ICs), solenoids, impactive actuators/mechanisms (e.g., jaws, claws, tweezers, clamps, hooks, mechanical fingers, humaniform dexterous robotic hands, and/or other gripper mechanisms that physically grasp by direct impact upon an object), propulsion actuators/mechanisms (e.g., wheels, axles, thrusters, propellers, engines, motors (e.g., those discussed previously), clutches, and the like), projectile actuators/mechanisms (e.g., mechanisms that shoot or propel objects or elements), and/or audible sound generators, visual warning devices, and/or other like electromechanical components. Additionally or alternatively, the actuators can include virtual instrumentation and/or virtualized actuator devices. Additionally or alternatively, the actuators can include various controller and/or components of the compute node or platform (or components thereof) such as, for example, host controllers, cooling element controllers, baseboard management controller (BMC), platform controller hub (PCH), uncore components (e.g., shared last level cache (LLC) cache, caching agent (Cbo), integrated memory controller (IMC), home agent (HA), power control unit (PCU), configuration agent (Ubox), integrated I/O controller (IIO), and interconnect (IX) link interfaces and/or controllers), and/or any other components such as any of those discussed herein. The compute node or platform may be configured to operate one or more actuators based on one or more captured events, instructions, control signals, and/or configurations received from a service provider, client device, and/or other components of a compute node or platform. Additionally or alternatively, the actuators are used to change the operational state (e.g., on/off, zoom or focus, and/or the like), position, and/or orientation of the sensors.

FIG. 9 illustrates an example cellular network 900. The network 900 may operate in a matter consistent with 3GPP technical specifications or technical reports for 6G systems. In some examples, the network 900 may operate concurrently with network 600. For example, in some examples, the network 900 may share one or more frequency or bandwidth resources with network 600. As one specific example, a UE (e.g., UE 902) may be configured to operate in both network 900 and network 600. Such configuration may be based on a UE including circuitry configured for communication with frequency and bandwidth resources of both networks 600 and 900. In general, several elements of network 900 may share one or more characteristics with elements of network 600. For the sake of brevity and clarity, such elements may not be repeated in the description of network 900.

The network 900 may include a UE 902, which may include any mobile or non-mobile computing device designed to communicate with a RAN 908 via an over-the-air connection. The UE 902 may be similar to, for example, UE 602. The UE 902 may be, but is not limited to, a smartphone, tablet computer, wearable computer device, desktop computer, laptop computer, in-vehicle infotainment, in-car entertainment device, instrument cluster, head-up display device, onboard diagnostic device, dashtop mobile equipment, mobile data terminal, electronic engine management system, electronic/engine control unit, electronic/engine control module, embedded system, sensor, microcontroller, control module, engine management system, networked appliance, machine-type communication device, M2M or D2D device, IoT device, etc.

Although not specifically shown in FIG. 9, in some examples the network 900 may include a set of UEs coupled directly with one another via a sidelink interface. The UEs may be M2M/D2D devices that communicate using physical sidelink channels such as, but not limited to, PSBCH, PSDCH, PSSCH, PSCCH, PSFCH, etc. Similarly, although not specifically shown in FIG. 9, the UE 902 may be communicatively coupled with an AP such as AP 606 as described with respect to FIG. 6. Additionally, although not specifically shown in FIG. 9, in some examples the RAN 908 may include one or more ANs such as AN 608 as described with respect to FIG. 6. The RAN 908 and/or the AN of the RAN 908 may be referred to as a base station (BS), a RAN node, or using some other term or name.

The UE 902 and the RAN 908 may be configured to communicate via an air interface that may be referred to as a sixth generation (6G) air interface. The 6G air interface may include one or more features such as communication in a terahertz (THz) or sub-THz bandwidth, or joint communication and sensing. As used herein, the term "joint communication and sensing" may refer to a system that allows for wireless communication as well as radar-based sensing via various types of multiplexing. As used herein, THz or sub-THz bandwidths may refer to communication in the 80 GHz and above frequency ranges. Such frequency ranges may additionally or alternatively be referred to as "millimeter wave" or "mmWave" frequency ranges.

The RAN 908 may allow for communication between the UE 902 and a 6G core network (CN) 910. Specifically, the RAN 908 may facilitate the transmission and reception of data between the UE 902 and the 6G CN 910. The 6G CN 910 may include various functions such as NSSF 650, NEF 652, NRF 654, PCF 656, UDM 658, AF 660, SMF 646, and AUSF 642. The 6G CN 910 may additional include UPF 648 and DN 636 as shown in FIG. 9.

Additionally, the RAN 908 may include various additional functions that are in addition to, or alternative to, functions of a legacy cellular network such as a 4G or 5G network. Two such functions may include a Compute Control Function (Comp CF) 924 and a Compute Service Function (Comp SF) 936. The Comp CF 924 and the Comp SF 936 may be parts or functions of the Computing Service Plane. Comp CF 924 may be a control plane function that provides functionalities such as management of the Comp SF 936, computing task context generation and management (e.g., create, read, modify, delete), interaction with the underlaying computing infrastructure for computing resource management, etc.. Comp SF 936 may be a user plane function that serves as the gateway to interface computing service users (such as UE 902) and computing nodes behind a Comp SF instance. Some functionalities of the Comp SF 936 may include: parse computing service data received from users to compute tasks executable by computing nodes; hold service mesh ingress gateway or service API gateway; service and charging policies enforcement; performance monitoring and telemetry collection, etc. In some examples, a Comp SF 936 instance may serve as the user plane gateway for a cluster of computing nodes. A Comp CF 924 instance may control one or more Comp SF 936 instances.

Two other such functions may include a Communication Control Function (Comm CF) 928 and a Communication Service Function (Comm SF) 938, which may be parts of the Communication Service Plane. The Comm CF 928 may be the control plane function for managing the Comm SF 938, communication sessions creation/configuration/releasing, and managing communication session context. The Comm SF 938 may be a user plane function for data transport. Comm CF 928 and Comm SF 938 may be considered as upgrades of SMF 646 and UPF 648, which were described with respect to a 5G system in FIG. 6. The upgrades provided by the Comm CF 928 and the Comm SF 938 may enable service-aware transport. For legacy (e.g., 4G or 5G) data transport, SMF 646 and UPF 648 may still be used.

Two other such functions may include a Data Control Function (Data CF) 922 and Data Service Function (Data SF) 932 may be parts of the Data Service Plane. Data CF 922 may be a control plane function and provides functionalities such as Data SF 932 management, Data service creation/configuration/releasing, Data service context management, etc. Data SF 932 may be a user plane function and serve as the gateway between data service users (such as UE 902 and the various functions of the 6G CN 910) and data service endpoints behind the gateway. Specific functionalities may include include: parse data service user data and forward to corresponding data service endpoints, generate charging data, report data service status.

Another such function may be the Service Orchestration and Chaining Function (SOCF) 920, which may discover, orchestrate and chain up communication/computing/data services provided by functions in the network. Upon receiving service requests from users, SOCF 920 may interact with one or more of Comp CF 924, Comm CF 928, and Data CF 922 to identify Comp SF 936, Comm SF 938, and Data SF 932 instances, configure service resources, and generate the service chain, which could contain multiple Comp SF 936, Comm SF 938, and Data SF 932 instances and their associated computing endpoints. Workload processing and data movement may then be conducted within the generated service chain. The SOCF 920 may also responsible for maintaining, updating, and releasing a created service chain.

Another such function may be the service registration function (SRF) 912, which may act as a registry for system services provided in the user plane such as services provided by service endpoints behind Comp SF 936 and Data SF 932 gateways and services provided by the UE 902. The SRF 912 may be considered a counterpart of NRF 654, which may act as the registry for network functions.

Other such functions may include an evolved service communication proxy (eSCP) and service infrastructure control function (SICF) 926, which may provide service communication infrastructure for control plane services and user plane services. The eSCP may be related to the service communication proxy (SCP) of 5G with user plane service communication proxy capabilities being added. The eSCP is therefore expressed in two parts: eCSP-C 914 and eSCP-U 934, for control plane service communication proxy and user plane service communication proxy, respectively. The SICF 926 may control and configure eCSP instances in terms of service traffic routing policies, access rules, load balancing configurations, performance monitoring, etc.

Another such function is the AMF 944. The AMF 944 may be similar to 644, but with additional functionality. Specifically, the AMF 944 may include potential functional repartition, such as move the message forwarding functionality from the AMF 944 to the RAN 908.

Another such function is the service orchestration exposure function (SOEF) 918. The SOEF may be configured to expose service orchestration and chaining services to external users such as applications.

The UE 902 may include an additional function that is referred to as a computing client service function (comp CSF) 904. The comp CSF 904 may have both the control plane functionalities and user plane functionalities, and may interact with corresponding network side functions such as SOCF 920, Comp CF 924, Comp SF 936, Data CF 922, and/or Data SF 932 for service discovery, request/response, compute task workload exchange, etc. The Comp CSF 904 may also work with network side functions to decide on whether a computing task should be run on the UE 902, the RAN 908, and/or an element of the 6G CN 910.

The UE 902 and/or the Comp CSF 904 may include a service mesh proxy 906. The service mesh proxy 906 may act as a proxy for service-to-service communication in the user plane. Capabilities of the service mesh proxy 906 may include one or more of addressing, security, load balancing, and/or the like.

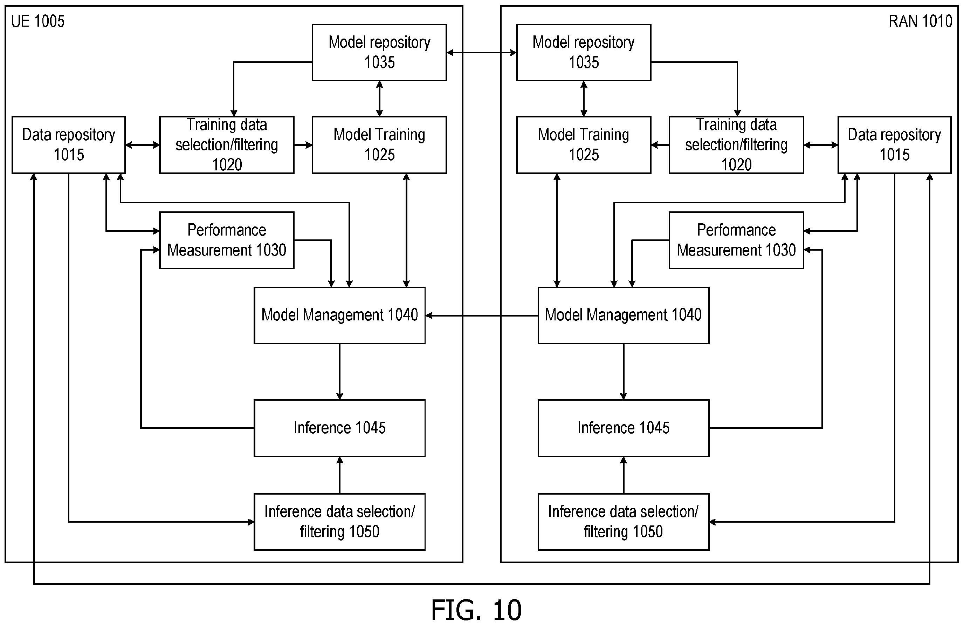

FIG. 10 depicts an example AI/ML-assisted communication network, which includes communication between a UE 1005 and a RAN 1010. More specifically, as described in further detail below, AI/ML models may be used or leveraged to facilitate over-the-air communication between the UE 1005 and the RAN 1010.

In this example, the UE 1005 and the RAN 1010 operate in a matter consistent with 3GPP technical specifications and/or technical reports for 6G systems. In some examples, the wireless cellular communication between the UE 1005 and the RAN 1010 may be part of, or operate concurrently with, networks 900, 600, and/or some other network described herein.

The UE 1005 may be the same or similar to, and/or share one or more features with UE 602, UE 702, hardware resources 800, UE 902, and/or any other UE described herein. The RAN 1010 may be the same or similar to, and/or share one or more features with RAN 604, RAN 610, RAN 614, RAN 908, and/or any other RAN described herein. Additionally or alternatively, the RAN 1010 can be or include a network access node (NAN), which may be the same or similar as, and/or share one or more features with AN 704, AP 606, ANs 608, and/or any other NAN discussed herein.

In FIG. 10, the AI/ML-related elements of UE 1005 may be the same or similar to the AI/ML-related elements of RAN 1010. For the sake of brevity, description of the various elements will be provided from the point of view of the UE 1005, however it will be understood that such discussion or description will apply to equally named/numbered elements of RAN 1010, unless explicitly stated otherwise.

As previously noted, the UE 1005 may include various elements or functions that are related to AI/ML. Such elements may be implemented as hardware, software, firmware, and/or some combination thereof. In examples, one or more of the elements may be implemented as part of the same hardware (e.g., chip or multi-processor chip), software (e.g., a computing program), or firmware as another element.

One such element may be a data repository 1015. The data repository 1015 may be responsible for data collection and storage. Specifically, the data repository 1015 may collect and store RAN configuration parameters, measurement data, performance key performance indicators (KPIs), model performance metrics, etc., for model training, update, and inference. More generally, collected data is stored into the repository. Stored data can be discovered and extracted by other elements from the data repository 1015. For example, as may be seen, the inference data selection/filter element 1050 may retrieve data from the data repository 1015. In various examples, the UE 1005 may be configured to discover and request data from the data repository 1010 in the RAN, and vice versa. More generally, the data repository 1015 of the UE 1005 may be communicatively coupled with the data repository 1015 of the RAN 1010 such that the respective data repositories of the UE and the RAN may share collected data with one another.

Another such element may be a training data selection/filtering functional block 1020. The training data selection/filter functional block 1020 may be configured to generate training, validation, and testing datasets for model training. Training data may be extracted from the data repository 1015. Data may be selected/filtered based on the specific AI/ML model to be trained. Data may optionally be transformed/augmented/pre-processed (e.g., normalized) before being loaded into datasets. The training data selection/filter functional block 1020 may label data in datasets for supervised learning. The produced datasets may then be fed into model training the model training functional block 1025.

As noted above, another such element may be the model training functional block 1025. This functional block may be responsible for training and updating(re-training) AI/ML models. The selected model may be trained using the fed-in datasets (including training, validation, testing) from the training data selection/filtering functional block. The model training functional block 1025 may produce trained and tested AI/ML models which are ready for deployment. The produced trained and tested models can be stored in a model repository 1035.

The model repository 1035 may be responsible for AI/ML models' (both trained and un-trained) storage and exposure. Trained/updated model(s) may be stored into the model repository 1035. Model and model parameters may be discovered and requested by other functional blocks (e.g., the training data selection/filter functional block 1020 and/or the model training functional block 1025). In some examples, the UE 1005 may discover and request AI/ML models from the model repository 1035 of the RAN 1010. Similarly, the RAN 1010 may be able to discover and/or request AI/ML models from the model repository 1035 of the UE 1005. In some examples, the RAN 1010 may configure models and/or model parameters in the model repository 1035 of the UE 1005.

Another such element may be a model management functional block 1040. The model management functional block 1040 may be responsible for management of the AI/ML model produced by the model training functional block 1025. Such management functions may include deployment of a trained model, monitoring model performance, etc. In model deployment, the model management functional block 1040 may allocate and schedule hardware and/or software resources for inference, based on received trained and tested models. As used herein, "inference" refers to the process of using trained AI/ML model(s) to generate data analytics, actions, policies, etc. based on input inference data. In performance monitoring, based on wireless performance KPIs and model performance metrics, the model management functional block 1040 may decide to terminate the running model, start model re-training, select another model, etc. In examples, the model management functional block 1040 of the RAN 1010 may be able to configure model management policies in the UE 1005 as shown.

Another such element may be an inference data selection/filtering functional block 1050. The inference data selection/filter functional block 1050 may be responsible for generating datasets for model inference at the inference functional block 1045, as described below. Specifically, inference data may be extracted from the data repository 1015. The inference data selection/filter functional block 1050 may select and/or filter the data based on the deployed AI/ML model. Data may be transformed/augmented/pre-processed following the same transformation/augmentation/pre-processing as those in training data selection/filtering as described with respect to functional block 1020. The produced inference dataset may be fed into the inference functional block 1045.

Another such element may be the inference functional block 1045. The inference functional block 1045 may be responsible for executing inference as described above. Specifically, the inference functional block 1045 may consume the inference dataset provided by the inference data selection/filtering functional block 1050, and generate one or more outcomes. Such outcomes may be or include data analytics, actions, policies, etc. The outcome(s) may be provided to the performance measurement functional block 1030.

The performance measurement functional block 1030 may be configured to measure model performance metrics (e.g., accuracy, model bias, run-time latency, etc.) of deployed and executing models based on the inference outcome(s) for monitoring purpose. Model performance data may be stored in the data repository 1015.

### 3. PACKET ROUTING ASPECTS

Packet routing (or simply "routing") is a concept in packet networks, which involves selecting a network path for traffic (e.g., a set of data packets) in a network or across multiple networks. In packet switching networks, routing involves higher-level decision making that directs network packets from a source node toward a destination node through a set of intermediate nodes.

### 3.1. Shortest-path routing

Much of today's packet routing techniques are based on the concept of Shortest Path Routing (SPF), which attempts to route packets along a path that is the "shortest" or of the least cost. The SPF algorithm and SPF variations/modifications are widely deployed with link state protocols or IGPs (see e.g., Moy, *OSPF Version* 2, IETF RFC 2328 (Apr. 1998) *("[OSPFv2]"),Information technology* - *Telecommunications and information exchange between systems* - *Intermediate System to Intermediate System intra-domain routing information exchange protocol for use in conjunction with the protocol for providing the connectionless-mode network service (ISO 8473),* ISO/IEC 10589:2002, Ed. 2, (Nov. 2002) ("[IS-IS]"), and Coltun et al., OSPF for IPv6, IETF RFC 5340 (Jul. 2008) ("[OSPFv3]"), the contents of each of which are hereby incorporated by reference in their entireties). In IGPs, a directed graph is computed with flooded link state information (LSA/LSP DB) with links having configured weights/metrics. SPF Algorithm calculates a tree of shortest path from self to all other nodes in the network with candidate list of nodes kept sorted by weight. Shortest (best) value in the candidate and downloaded to the routing table with the computed immediate Next-Hop (NH). IP routing tables only need NH to each advertised prefix from all the nodes while LSA/LSP trees have all the paths.

One drawback of shortest-path routing is that it is not always the shortest path that may be preferred, as there may be different cost metrics and other considerations such as, for example, load balancing, ease of failover service levels, or robustness of path). As a result, other technology has begun to appear that allows to route on paths other than shortest paths. One such technology is Segment Routing (SR) (see e.g., clause 4.3 of ETSI GR NGP 014 V1.1.1 (2019-10) ("[NGP014]"), the contents of which is hereby incorporated by reference in its entirety).

### 3.2. Segment Routing

Segment Routing (SR) is a source routing approach that enables packet steering with a specified path in the packet itself. SR leverages the source routing paradigm, where a node steers a packet through an ordered list of instructions, called "segments". A segment can represent any instruction, topological or service based. A segment can have a semantic local to an SR node or global within an SR domain. SR provides a mechanism that allows a flow to be restricted to a specific topological path, while maintaining per-flow state only at the ingress node(s) to the SR domain (see e.g., Filsfils et al., Segment Routing Architecture, IETF RFC 8402 (Jul. 2018) ("[RFC8402]")). Additionally, entropy labels (ELs) can also be used to improve load-balancing (see e.g., Kini et al., Entory Label for Source Packet Routing in Networking (SPRING) Tunnels, IETF RFC 8662 (Dec. 2019) ("[RFC8662]")).

A segment is often referred to by its Segment Identifier (SID). A segment may be associated with a topological instruction. A topological local segment may instruct a node to forward the packet via a specific outgoing interface. A topological global segment may instruct an SR domain to forward the packet via a specific path to a destination. Different segments may exist for the same destination, each with different path objectives (e.g., which metric is minimized, what constraints are specified).

A segment may be associated with a service instruction (e.g., the packet may be processed by a controller, classifier, packet processor, any of the network elements/NFs discussed in section 1 above, and/or some other entity/element, which may be included in or operated in/by a container, Virtual Machine (VM), and/or compute node associated with the segment). A segment may be associated with a QoS treatment (e.g., shape the packets received with this segment at x Mbps).

The SR architecture supports any type of instruction associated with a segment. The SR architecture supports any type of control plane, including distributed, centralized, or hybrid control planes. In distributed scenarios, the segments are allocated and signaled by IS-IS, OSPF, BGP, and/or any of the network elements/NFs discussed supra (see e.g., section 1). A node individually decides to steer packets on an SR Policy (e.g., pre-computed local protection (see e.g., Filsfils et al., Resiliency Use Cases in Source Packet Routing in Networking (SPRING) Networks, IETF RFC 8355 ("[RFC8355]"))). A node individually computes the SR Policy.

In a centralized scenario, the segments are allocated and instantiated by an SR controller. The SR controller decides which nodes need to steer which packets on which source-routed policies. The SR controller computes the source-routed policies. The SR architecture does not restrict how the controller programs the network. Likely options are Network Configuration Protocol (NETCONF), Path Computation Element Communication Protocol (PCEP), and BGP. The SR architecture does not restrict the number of SR controllers. Specifically, multiple SR controllers may program the same SR domain. The SR architecture allows these SR controllers to discover which SIDs are instantiated at which nodes and which sets of local (SRLB) and global (SRGB) labels are available at which node.

A hybrid scenario complements a base distributed control plane with a centralized controller. For example, when the destination is outside the IGP domain, the SR controller may compute an SR Policy on behalf of an IGP node. The SR architecture does not restrict how the nodes that are part of the distributed control plane interact with the SR controller. Likely options are PCEP and BGP.

Hosts may be part of an SR domain. A centralized controller can inform hosts about policies either by pushing these policies to hosts or by responding to requests from hosts.

The SR architecture can be instantiated on various data planes and/or data-plane instantiations of SR such as, for example: SR over MPLS (SR-MPLS) and SR over IPv6 (SRv6).

SR can be directly applied to the MPLS architecture with no change to the forwarding plane. A segment is encoded as an MPLS label. An SR Policy is instantiated as a stack of labels. The segment to process (the active segment) is on the top of the stack. Upon completion of a segment, the related label is popped from the stack.

SR can be applied to the IPv6 architecture with a new type of routing header called the SR Header (SRH) [IPv6-SRH]. An instruction is associated with a segment and encoded as an IPv6 address. An SRv6 segment is also called an SRv6 SID. An SR Policy is instantiated as an ordered list of SRv6 SIDs in the routing header. The active segment is indicated by the Destination Address (DA) of the packet. The next active segment is indicated by the SegmentsLeft (SL) pointer in the SRH. When an SRv6 SID is completed, the SL is decremented and the next segment is copied to the DA. When a packet is steered on an SR Policy, the related SRH is added to the packet.

In the context of an IGP-based distributed control plane, two topological segments are defined: the IGP-Adjacency segment and the IGP-Prefix segment. In the context of a BGP-based distributed control plane, two topological segments are defined: the BGP peering segment and the BGP-Prefix segment. The headend of an SR Policy binds an SID (called a binding segment or BSID) to its policy. When the headend receives a packet with active segment matching the BSID of a local SR Policy, the headend steers the packet into the associated SR Policy.

SR is defined for Multi-Protocol Label Switching (MPLS) with a set of stacked labels, and for IPv6 where a path is described as a list of IPv6 addresses in an SRHeader. Data planes called SR-MPLS (see e.g., Bashandy et al., Segment Routing with MPLS data plane, IETF RFC 8660 (Dec. 2019) ("[RFC8660]"), the contents of which is hereby incorporated by reference in its entirety) and Segment Routing with IPv6 (SRv6) data plane with SRH (see e.g., Filsfils et al., IPv6 Segment Routing Header (SRH), IETF RFC 8754 (Mar. 2020) ("[RFC8754]"), the contents of which is hereby incorporated by reference in its entirety) are defined for MPLS and SR, respectively.

SR simplifies the MPLS control plane by distributing Segment Identifiers (SIDs) for routing prefixes, which are constitute MPLS global labels into Interior Gateway Protocols. This allows source routing to be achieved by representing the network path with stacked SIDs on the data packet without any changes to the MPLS data plane. In addition to MPLS, as specified above, SR also introduces an IPv6 Extension Header (EH) for use with the IPv6 data plane, resulting in SRv6. In SRv6, a segment is encoded as an IPv6 address, with a new type of IPv6 Routing Header (EH) called SRH. A set of segments is encoded as an ordered list of IPv6 addresses in SRH to represent the path of the data packet. Segments and source routes can be computed by a controller with knowledge of the network topology and subsequently provision the network with end-to-end (e2e) SR paths. A controller could include, for example, a Path Computation Element (PCE) or another type of software-defined networking (SDN) controller. Using a controller allows to perform different optimization and customizations to paths that take into account different constraints. This also obviates the need for traditional MPLS control plane protocols like LDP and RSVP, reducing the number of protocols that need to be deployed in a network.

SR (see e.g., [RFC8402]) enables packet steering by including a set of SIDs in the packet that the packet must traverse or be processed by a controller, container, VM, packet processor, classifier, and/or the like. In an MPLS network this is done by mapping the SIDs to MPLS labels and then pushing the required labels on the packet (see e.g., [RFC8660], the contents of which is hereby incorporated by reference in its entirety. In SRv6 (see e.g., [RFC8754]), defines a segment routing extension header (SRH) (also referred to as "Segment Routing Header" or "IPv6 routing Extension header") to be carried in the packet which contains a list of the segments.

SR also defines Binding SIDs (BSIDs) (see e.g., [RFC8402]), which are SIDs pre-positioned in the network to either allow the number of SIDs in the packet to be reduced, or provide a method of translating from an edge imposed SID to a SID that the network prefers. One use of BSIDs is to define a path by associating an out-bound SID on every node along the path in which case the packet can be steered by swapping the incoming active SID on the packet with a BSID.

### 3.3. Preferred Path Routing (PPR)

Preferred Path Routing (PPR) is a source routing paradigm where a prefix is signaled in a routing domain (control plane) along with a data plane identifier as well as path description on how the packets has to be forwarded when actual data traffic with the data plane identifier is seen. This builds on existing IGPs and fits well with SDN paradigm as the needed path can be crafted dynamically based on various inputs from a central entity.

Traditionally routing in network is based on shortest path computations (through Interior Gateway Protocols or IGPs (see e.g., [OSPFv2], [OSPFv3], [IS-IS])) for all prefixes in the network. As explained, Segment Routing allows to compute custom paths (other than shortest paths) that are subsequently represented by a sequence of segment identifiers in a packet, leading to another set of problems.

Preferred Path Routing (PPR) enables route computation based on a specific path described along with the prefix as opposed to shortest path towards the prefix. The key change that is required concerns how the next hop is computed for the prefix. Instead of using the next hop of the shortest path towards the destination, the next hop towards the next node in the path description is used. PPR is a novel architecture to signal explicit path and per-hop processing requirement and optionally including QoS or resources to be reserved along the path.

PPR is concerned with the creation of a routing path as specified in the PPR-Path which is advertised in IGPs along with a data plane (path) identifier (PPR-ID). The PPR-ID enables data plane extensibility as the type of the data plane. With this, any packet destined to the PPR-ID would use the PPR-Path instead of the IGP computed shortest path to the destination indicated by the PPR-ID. In other words, packets destined to the PPR- ID may use the PPR-Path instead of the IGP computed shortest path. This works as follows: IGP nodes process the PPR-Path. If an IGP node finds itself in the PPR-Path, it sets the next-hop towards the PPR-ID according to the PPR- Path.

Ingress nodes (or head-nodes) may be configured to receive TE or explicit source routed path information from a central entity (e.g., a Path Computation Element (PCE) or Controller). The received path comprises PPR information. A PPR is identified using a PPR-ID, which can also relate to sources that are attached to a head-node: traffic from those sources may have to use a specific PPR-ID. It is also possible to have a PPR provisioned locally for non-TE needs (e.g., for purposes of Fast ReRoute (FRR) and/or to chain services). The PPR path information is encoded as an ordered list of PPR- PDEs from a source to a destination node in the network. The PPR-PDE information represents both topological and non-topological segments and specifies the actual path towards a Forwarding Equivalence Class (FEC) or Prefix by an egress or a head-end node. Additional PPR aspects are discussed in [NGP014].

Once the path and PPR-ID are signaled in an underlying IGP as a PPR, only nodes that find themselves in the path description have to act on this path. For example, after completing its shortest path computation as usual, a node finds that its node information is encoded as PPR-PDE in the path. As a result, this node adds an entry to its Routing Information Base (RIB) and/or Forwarding Information Base (FIB) with the PPR-ID as the incoming label (assuming the data plane type in PPR TLV is MPLS) and sets the NH as the shortest path NH towards the next PPR-PDE (node). If instead, that node had added a shortest path route entry in the FIB for a destination node, it would have added it by setting NH as link towards a node with a shortest path metric to reach the destination node. This process continues on every node as represented in the PPR path description.

There are two variants according to which paths can be specified: loose and strict. In case of a strict path, every node along the path is defined and aware of the PPR-ID. This means that the PPR-ID itself is sufficient for forwarding decisions and is the only label that needs to be carried. In case of a loose path, some nodes along the path are specified and aware of the PPR-ID. In that case, there are intermediate path segments on which nodes are not aware of the PPR-ID; forwarding decisions are then based on the next node on the path that can be reached. In this case, the Segment ID defining the next node on the path is added to the packet (in addition to the PPR-ID), which is popped as the next node on the path is reached.

The path type (loose or strict) is explicitly indicated in the PPR-ID description. A node acts on this flag, and in the case of a loose path, the node programs the local hardware with two labels/SIDs, using PPR-ID as a bottom label and node SID as a top label. Intermediate nodes do not need to be aware of PPR and the fact that data packets are being transported along a PPR path. Intermediate nodes just forward the packet based on the top label. However, if the path described were a strict path, in an MPLS data plane the actual data packet would require only a single label (e.g., PPR-ID 100).

Some of the services can be encoded as non-topologicalPDEs and can be part of the overall path. These services would be applied at the respective nodes along the path. For SR-MPLS and SRv6 data planes, these are simply SIDs. When the data packet with PPR-ID 100 is delivered to node-1, the packet is delivered with context-1. Similarly on node-x, service-x1 is applied and function-x1 is executed. These service and functions are pre-provisioned on the particular nodes and can be advertised in IGPs. These should be known to the central entity/controller along with Link State Database of IGP that is used in the underlying network.

This gives the basic and light weight service chaining capability with PPR without incurring any additional overhead on the data packet. However this is limited to fixed functions/services for a particular path and all data packets using the path will be applied with these services. Flow levels exclusions using the same path or differentiated services that need to be applied with in a flow cannot be supported with this mechanism and one has to resort to full-blown NSH/SFC (see e.g., Quinn et al., *Network Service Header (NSH),* IETF RFC 8300 (Jan. 2018) ("[RFC8300]") data plane for the same.

One advantage of PPR is the ability to provide source routing and path steering capabilities to legacy IP networks without having to change hardware or even upgrade the data planes. The PPR-ID enables data plane extensibility as the type of the data plane.

PPR is also fully backward compatible with SR as PDEs can be extensible and particular data plane identifiers can be expressed to describe the path and in SR case PDEs can contain the SR SIDs (topological like nodal and adjacency SIDs or non-topological SR SIDs). One benefit PPR offers for SR data planes (e.g., SR-MPLS, SRv6) is providing the same benefits (e.g., of source routing based on a predefined path) with an optimized data plane with at most one or two labels on the packet for strict and loose cases respectively (as specified in clause 5.3 of [NGP014]).

In addition to determining the nodes to traverse, there may be other aspects that need to be set up for a path. Most notably, this concerns the allocation and reservation of resources along the path in order to help ensure the service levels, the Quality of Service that is delivered across the path, will be acceptable for the traffic routed across the path.

Resource Reservation Protocol (RSVP) (see e.g., Adams, *The Simple Public-Key GSS-API Mechanism (SPKM),* IETF RFC 2025 (Oct. 1996)) allows out of band signaling along a specified path for resource reservations. This is done by sending PATFERESV message with flow spec/filter spec. Awduche et al., "RSVP-TE: Extensions to RSVP for LSP Tunnels", IETF RFC 3209 (Dec. 2001), builds on RSVP protocol and defines new objects, modifies existing objects for MPLS LSP establishment. This is not considered as dynamic and requires provisioning along the path with out of band signaling. Also it relies on periodic refreshes for state synchronization between neighbors.

SR enables packet steering with a specified path in the packet itself. This is defined for MPLS (with stacked labels) and IPv6 (path described as list of IPv6 addresses in SRHeader) data planes. Generally a controller computes the path and installs the same at ingress nodes with path description and as per local policy data flows are mapped to these paths. While this allows packet steering on a specified path, it does not have any notion of QoS or resources reserved along the path. The determination of which resources to allocate and reserve on nodes across the path, like the determination of the path itself, can in many cases be made by a controller. Accordingly, PPR includes extensions that allow to manage those reservations, in addition to the path itself.

The resources to be reserved along the preferred path can be specified through path attributes TLVs. Reservations are expressed in terms of required resources (bandwidth), traffic characteristics (burst size), and service level parameters (expected maximum latency at each hop) based on the capabilities of each node and link along the path. The second part of the solution is providing mechanism to indicate the status of the reservations requested, for example, if these have been honored by individual node/links in the path. This is done by defining a new TLV/Sub-TLV in respective IGPS. Another aspect is additional node level TLVs and extensions to Previdi et al., *IS-IS Traffic Engineering (TE) Metric Extensions,* IETF RFC 7810 (May 2016) ("[RFC7810]"), Ginsberg et al., *IS-IS Traffic Engineering (TE) Metric Extensions,* IETF RFC 8570 (Mar. 2019) ("[RFC8570]"), and Giacalone et al., *OSPF Traffic Engineering (TE) MetricExtensions,* IETF RFC 7471 (Mar. 2015) ("[RFC7471]"), the contents of each of which are hereby incorporated by reference in their entireties, to provide accounting/usage statistics that have to be maintained at each node per preferred path. All the above is specified for [IS-IS], [OSPFv2], and [OSPFv3] protocols.

For both SR-MPLS and SRv6, PPR can reduce the number of touch points needed with BSIDs by dynamically signaling the path and associating the path with an abstract data plane identifier. With PPR as a data packet carries a PPR-ID instead of individual SIDs, it avoids exposing the path; thus it avoids revealing topology, traffic flow and service usage, if a packet is snooped. This is described as "Topology Disclosure" security consideration in [RFC8754].

### 4. EXAMPLE IMPLEMENTATIONS

Additional examples of the presently described methods, devices, systems, and networks discussed herein include the following, non-limiting implementations. Each of the following non-limiting examples may stand on its own or may be combined in any permutation or combination with any one or more of the other examples provided below or throughout the present disclosure.

Example 1 includes a segment routing header (SRH) to be used for Segment Routing with IPv6 (SRv6), SR with MPLS (SR-MPLS), or another similar protocol comprising a set of fields, wherein the set of fields includes an indicator field to enable measurements collection as part of the IPv6 address; a tag field to be used as the unique packet transaction ID; and a Type Length Value (TLV) field to include measurements collection instructions.

Example 2 includes a method, comprising: generating an SRH; and sending the SRH to a network node.

Example 3 includes the method of example 2 and/or some other example(s) herein, wherein the SRH is the SRH of example 1 and/or some other example(s) herein.

Example 4 includes the method of example 3 and/or some other example(s) herein, wherein a session management function (SMF) and/or a Communication Service Function (Comm SF) generates a unique tag to be put in the SRH to mark an ingress packet that should be included in an egress packet in the tag field to measure the service function (SF) response time.

Example 5 includes the method of examples 2-4 and/or some other example(s) herein, wherein a user equipment (UE) can request measurements collection via the procedure in section 1.2.2 in a non-access stratum (NAS) message, a distributed NAS message, and/or an RRC message.

Example 6 includes the method of example 5 and/or some other example(s) herein, wherein identifiers discussed in section 1.2.1 are included in the request from the UE to the SMF/Comm SF to describe the measurements criteria.

Example 7 includes the method of examples 5-6 and/or some other example(s) herein, wherein the UE can include the requirements for measurements collection in an RRC message to instruct the xNB on how to generate the SR labels for specific user plane traffic packets based on some criteria.

Example 8 includes the method of examples 5-7 and/or some other example(s) herein, wherein the SMF and/or the Comm CF can configure a UPF and/or Comm SF about how to collect the measurements in a session level or node level configuration procedure via an N4 interface.

Example 9 includes the method of examples 5-8 and/or some other example(s) herein, wherein the UE includes simplified criteria for measurement collection; and the SMF and/or the Comm CF generates a label generation rule and send to an xNB (classifer) to configure how to generate SR labels and/or the SRH.

Example 10 includes the method of examples 2-4 and/or some other example(s) herein, wherein a network function (NF) and/or an application function (AF) requests measurement collection via an Network Exposure Function (NEF) using the procedure in section 1.2.3, supra.

Example 11 includes the method of example 10 and/or some other example(s) herein, wherein identifiers discussed in section 1.2.1 are included in the request from a UE to the SMF and/or the Comm SF to describe measurement criteria.

Example 12 includes a method, comprising: receiving a request for measurement collection for a service function chain (SFC) using segment routing (SR).

Example 13 includes the method of example 12 and/or some other example(s) herein, wherein the request is included in a non-access stratum (NAS) message, a distributed NAS message, and/or a radio resource control (RRC) message.

Example 14 includes the method of example 13 and/or some other example(s) herein, wherein the request includes a set of measurement collection parameters.

Example 15 includes the method of example 14 and/or some other example(s) herein, wherein the method includes: generating a protocol data unit (PDU) session create or update request in response to receipt of the request for measurement collection; and sending the PDU session create/update request to a network function (NF) over an Nsmf interface.

Example 16 includes the method of example 15 and/or some other example(s) herein, wherein the PDU session create/update request includes the set of measurement collection parameters.

Example 17 includes the method of examples 15-16 and/or some other example(s) herein, wherein the PDU session create/update request is to cause the NF to determine a set of network nodes to be configured based on the PDU session and a UE context for collection of the measurements.

Example 18 includes the method of example 17 and/or some other example(s) herein, wherein the method includes: receiving a PDU session create/update response confirming configuration of the measurement collection.

Example 19 includes the method of example 15-18 and/or some other example(s) herein, wherein the method includes: generating and sending a response based on the request for measurement collection.

Example 20 includes the method of example 19 and/or some other example(s) herein, wherein the response is included in a non-access stratum (NAS) message, a distributed NAS message, and/or a radio resource control (RRC) message, and the response includes one or more configurations for radio access network (RAN) SR label generation.

Example 21 includes the method of examples 17-20 and/or some other example(s) herein, wherein the network nodes include a communication service function (Comm SF) and/or a user plane function (UPF).

Example 22 includes the method of examples 15-21 and/or some other example(s) herein, wherein the NF is a session management function (SMF), a communications control function (Comm CF), and/or a computing control function (Comp CF).

Example 23 includes the method of example 14 and/or some other example(s) herein, wherein the request for measurement collection is a PDU session create or update request received over an Nsmf interface, and the method includes: determining a set of network nodes to be configured based on the PDU session and a UE context for collection of the measurements; and configuring the determined set of network nodes to perform SR measurement collection.

Example 24 includes the method of example 23 and/or some other example(s) herein, wherein the configuration of the set of network nodes includes: configuring the set of network nodes to monitor SFC user plane traffic including logging information SR-related information; configuring the set of network nodes to generate a unique transaction ID and inserting the unique transaction ID in a tag field of SRHs; and configuring the set of network nodes to use the logged information to identify ingress and egress packets of individual traffic flows using the tag field; and configuring the set of network nodes to collect measurements of the identified traffic flows and report the measurements of the identified traffic flows and/or tagged packets.

Example 25 includes the method of example 24 and/or some other example(s) herein, wherein the information to be logged includes: timestamps of packet arrival time, SFC context identifier (ID), path ID, TEID, SF name, and/or other information.

Example 26 includes the method of examples 23-25 and/or some other example(s) herein, wherein the PDU session create/update request includes the set of measurement collection parameters.

Example 27 includes the method of example 26 and/or some other example(s) herein, wherein the method includes: generating and sending a PDU session create/update response confirming configuration of the measurement collection parameters.

Example 28 includes the method of example 23-27 and/or some other example(s) herein, wherein the PDU session create/update response is to cause a response to be sent, wherein the response includes one or more configurations for radio access network (RAN) SR label generation.

Example 29 includes the method of example 28 and/or some other example(s) herein, wherein the response is included in a non-access stratum (NAS) message, a distributed NAS message, and/or a radio resource control (RRC) message, and

Example 30 includes the method of examples 23-29 and/or some other example(s) herein, wherein the set of network nodes include a communication service function (Comm SF) and/or a user plane function (UPF).

Example 31 includes the method of examples 23-30 and/or some other example(s) herein, wherein the NF is a session management function (SMF), a communications control function (Comm CF), and/or a computing control function (Comp CF).

Example 32 includes the method of examples 23-31 and/or some other example(s) herein, wherein the request for measurement is received from a user equipment (UE).

Example 33 includes the method of example 32 and/or some other example(s) herein, wherein the method is performed by an Access and Mobility Management Function (AMF).

Example 34 includes the method of example 32 and/or some other example(s) herein, wherein the method is performed by an Security Anchor Function (SEAF).

Example 35 includes the method of examples 23-31 and/or some other example(s) herein, wherein the request for measurement is received from a network function (NF) and/or an application function (AF) via an Network Exposure Function (NEF).

Example 36 includes the method of example 35 and/or some other example(s) herein, wherein the method is performed by an SMF, a Comm CF, and/or a Comp CF.

Example 37 includes the method of examples 12-36 and/or some other example(s) herein, wherein the request for measurement collection includes a set of information (info) filters.

Example 38 includes the method of example 37 and/or some other example(s) herein, wherein the set of info filters includes one or more of UE specific info; PDU session specific info; traffic path specific info; QoS flow related info; application related info (e.g., IP 3 tuple or some other tuple); e2e flow (e.g., identified by IP 5 tuple and/or the like); network slice related info; and/or any other info or data, such as any of those discussed herein.

Example 39 includes the method of examples 12-38 and/or some other example(s) herein, wherein the request for measurement collection is an SR header (SRH) or is included in an SRH; and the SRH is to be used for Segment Routing with IPv6 (SRv6), SR with MPLS (SR-MPLS), preferred path routing (PPR), and/or any other routing protocol/technique.

Example 40 includes the method of example 39 and/or some other example(s) herein, wherein the SRH includes a set of fields, wherein the set of fields includes an indicator field to enable measurements collection as part of the IPv6 address; a tag field to be used as the unique packet transaction ID; and a Type Length Value (TLV) field to include measurements collection instructions.

In example 41, the subject matter includes a non-transitory computer-readable medium including one or more instructions which, if executed by a processor of a node of a cellular network, cause the processor to:, generate a segment routing header including information representative of a measurement enablement; apply a segment routing of a packet within the cellular network based on the segment routing header.

In example 42, the subject matter of example 41, wherein a tag field of the segment routing header includes a unique transaction identifier for the packet.

In example 43, the subject matter of example 42, wherein the unique transaction identifier is generated by one of a session management function, SMF, or a communication service function, Comm SF, of the cellular network; and wherein the unique transaction identifier is used to measure a response time of a service function, SF, by identifying packets based on the unique transaction identifier.

In example 44, the subject matter of any one of examples 41 to 43, wherein a type length value, TLV, field of the segment routing header includes at least one of instructions and/or parameters for measurements to be collected.

In example 45, the subject matter of example 44, wherein the instructions and/or parameters include one or more measurement types, one or more measurement collection times and/or one or more trigger conditions, one or more cells and/or a signalling to be measured, resource configurations and/or parameters.

In example 46, the subject matter of any one of examples 41 to 45, wherein a segment field of the segment routing header includes a measurement enablement indication for a segment within the segment field.

In example 47, the subject matter of example 46, wherein the segment field of the segment routing header includes a 128-bit internet protocol version 6, IPv6, address for the segment; wherein the 128-bit IPv6 address for the segment includes a first part representative of a domain name and a service function name and a second part representative of the measurement enable indication for the segment; wherein the measurement enable indication is representative of whether a measurement is enabled for a domain and hop associated with the segment.

In example 48, the subject matter of any one of examples 41 to 47, wherein the segment routing header is generated based on a configuration requested by a user equipment, UE, of the cellular network, or one or network function consumers of the cellular network.

In example 49, the subject matter of any one of examples 41 to 48, wherein the node is a network access node; wherein the configuration is received via a non-access stratum, NAS, message or a distributed NAS message sent by one of an Access and mobility management function, AMF, or a security anchor function, SEAF according to a request of the UE.

In example 50, the subject matter of any one of examples 41 to 48, wherein the node includes a user plane function, UPF; wherein the configuration is received from a session management function, SMF, or a communication service function, Comm SF, of the cellular network according to a request of a network function, NF, or an application function, AF.

In example 51, the subject matter of example 50, wherein the one or more instructions further cause the processor to collect measurements based on the segment routing header.

In example 52, the subject matter includes a non-transitory computer-readable medium including one or more instructions which, if executed by a processor of a node of a cellular network, cause the processor to: decode a packet including a segment routing header including information representative of a measurement enablement; apply a segment routing of the packet within the cellular network based on the segment routing header.

In example 53, the subject matter of example 52, wherein a type length value, TLV, field of the segment routing header includes at least one of instructions and/or parameters for measurements to be collected; and wherein the one or more instructions further cause the processor to collect the measurements indicated by the at least one instructions and/or parameters.

In example 54, the subject matter of example 53, wherein a tag field of the segment routing header includes a unique transaction identifier for a transaction; and wherein the one or more instructions further cause the processor to identify an ingress and/or an egress packet of the transaction based on the unique transaction identifier.

In example 55, the subject matter of any one of examples 52 to 54; wherein the information includes an indicator field associated with a domain at a beginning or end of 128-bit IPv6 address within a segment field of the segment routing header, and wherein the indicator field is representative of whether a collection of measurements for the domain is enabled.

Example Z01 includes one or more computer readable media comprising instructions, wherein execution of the instructions by processor circuitry is to cause the processor circuitry to perform the method of any one of examples 1-40.

Example Z02 includes a computer program comprising the instructions of example Z01.

Example Z03 includes an Application Programming Interface defining functions, methods, variables, data structures, and/or protocols for the computer program of example Z02.

Example Z04 includes an API or specification defining functions, methods, variables, data structures, protocols, and the like, defining or involving use of any of examples 1-40 or portions thereof, or otherwise related to any of examples 1-40 or portions thereof.

Example Z05 includes an apparatus comprising circuitry loaded with the instructions of example Z01.

Example Z06 includes an apparatus comprising circuitry operable to run the instructions of example Z01.

Example Z07 includes an integrated circuit comprising one or more of the processor circuitry of example Z01 and the one or more computer readable media of example Z01.

Example Z08 includes a computing system comprising the one or more computer readable media and the processor circuitry of example Z01.

Example Z09 includes an apparatus comprising means for executing the instructions of example Z01.

Example Z10 includes a signal generated as a result of executing the instructions of example Z01.

Example Z11 includes a data unit generated as a result of executing the instructions of example Z01.

Example Z12 includes the data unit of example Z10 and/or some other example(s) herein, wherein the data unit is a datagram, network packet, data frame, data segment, a Protocol Data Unit (PDU), a Service Data Unit (SDU), a message, or a database object.

Example Z13 includes a signal encoded with the data unit of examples Z11 and/or Z12.

Example Z14 includes an electromagnetic signal carrying the instructions of example Z01.

Example Z15 includes an apparatus comprising means for performing the method of any one of examples 1-40 and/or some other example(s) herein.

Example Z16 includes an edge compute node executing a service as part of one or more edge applications instantiated on virtualization infrastructure, the service being related to any of examples 1-40, portions thereof, and/or some other example(s) herein.

### 5. TERMINOLOGY

For the purposes of the present document, the following terms and definitions are applicable to the examples and embodiments discussed herein.

As used herein, the singular forms "a," "an" and "the" are intended to include plural forms as well, unless the context clearly indicates otherwise. It will be further understood that the terms "comprises" and/or "comprising," when used in this specification, specific the presence of stated features, integers, steps, operations, elements, and/or components, but do not preclude the presence or addition of one or more other features, integers, steps, operation, elements, components, and/or groups thereof. The phrase "A and/or B" means (A), (B), or (A and B). For the purposes of the present disclosure, the phrase "A, B, and/or C" means (A), (B), (C), (A and B), (A and C), (B and C), or (A, B and C). The phrase "X(s)" means one or more X or a set of X. The description may use the phrases "in an embodiment," "In some embodiments," "in one implementation," "In some implementations," "in some examples", and the like, each of which may refer to one or more of the same or different embodiments, implementations, and/or examples. Furthermore, the terms "comprising," "including," "having," and the like, as used with respect to the present disclosure, are synonymous.

The terms "master" and "slave" at least in some examples refers to a model of asymmetric communication or control where one device, process, element, or entity (the "master") controls one or more other device, process, element, or entity (the "slaves"). The terms "master" and "slave" are used in this disclosure only for their technical meaning. The term "master" or "grandmaster" may be substituted with any of the following terms "main", "source", "primary", "initiator", "requestor", "transmitter", "host", "maestro", "controller", "provider", "producer", "client", "source", "mix", "parent", "chief', "manager", "reference" (e.g., as in "reference clock" or the like), and/or the like. Additionally, the term "slave" may be substituted with any of the following terms "receiver", "secondary", "subordinate", "replica", target", "responder", "device", "performer", "agent", "standby", "consumer", "peripheral", "follower", "server", "child", "helper", "worker", "node", and/or the like.

The terms "coupled," "communicatively coupled," along with derivatives thereof are used herein. The term "coupled" may mean two or more elements are in direct physical or electrical contact with one another, may mean that two or more elements indirectly contact each other but still cooperate or interact with each other, and/or may mean that one or more other elements are coupled or connected between the elements that are said to be coupled with each other. The term "directly coupled" may mean that two or more elements are in direct contact with one another. The term "communicatively coupled" may mean that two or more elements may be in contact with one another by a means of communication including through a wire or other interconnect connection, through a wireless communication channel or ink, and/or the like.

The term "establish" or "establishment" at least in some examples refers to (partial or in full) acts, tasks, operations, and the like, related to bringing or the readying the bringing of something into existence either actively or passively (e.g., exposing a device identity or entity identity). Additionally or alternatively, the term "establish" or "establishment" at least in some examples refers to (partial or in full) acts, tasks, operations, and the like, related to initiating, starting, or warming communication or initiating, starting, or warming a relationship between two entities or elements (e.g., establish a session, establish a session, and the like). Additionally or alternatively, the term "establish" or "establishment" at least in some examples refers to initiating something to a state of working readiness. The term "established" at least in some examples refers to a state of being operational or ready for use (e.g., full establishment). Furthermore, any definition for the term "establish" or "establishment" defined in any specification or standard can be used for purposes of the present disclosure and such definitions are not disavowed by any of the aforementioned definitions.

The term "obtain" at least in some examples refers to (partial or in full) acts, tasks, operations, and the like, of intercepting, movement, copying, retrieval, or acquisition (e.g., from a memory, an interface, or a buffer), on the original packet stream or on a copy (e.g., a new instance) of the packet stream. Other aspects of obtaining or receiving may involving instantiating, enabling, or controlling the ability to obtain or receive a stream of packets (or the following parameters and templates or template values).

The term "receipt" at least in some examples refers to any action (or set of actions) involved with receiving or obtaining an object, data, data unit, and the like, and/or the fact of the object, data, data unit, and the like being received. The term "receipt" at least in some examples refers to an object, data, data unit, and the like, being pushed to a device, system, element, and the like (e.g., often referred to as a push model), pulled by a device, system, element, and the like (e.g., often referred to as a pull model), and/or the like.

The term "element" at least in some examples refers to a unit that is indivisible at a given level of abstraction and has a clearly defined boundary, wherein an element may be any type of entity including, for example, one or more devices, systems, controllers, network elements, modules, engines, components, and so forth, or combinations thereof. The term "entity" at least in some examples refers to a distinct element of a component, architecture, platform, device, and/or system. Additionally or alternatively, the term "entity" at least in some examples refers to information transferred as a payload.

The term "measurement" at least in some examples refers to the observation and/or quantification of attributes of an object, event, or phenomenon. Additionally or alternatively, the term "measurement" at least in some examples refers to a set of operations having the object of determining a measured value or measurement result, and/or the actual instance or execution of operations leading to a measured value. Additionally or alternatively, the term "measurement" at least in some examples refers to data recorded during testing.

The term "metric" at least in some examples refers to a quantity produced in an assessment of a measured value. Additionally or alternatively, the term "metric" at least in some examples refers to data derived from a set of measurements. Additionally or alternatively, the term "metric" at least in some examples refers to set of events combined or otherwise grouped into one or more values. Additionally or alternatively, the term "metric" at least in some examples refers to a combination of measures or set of collected data points. Additionally or alternatively, the term "metric" at least in some examples refers to a standard definition of a quantity, produced in an assessment of performance and/or reliability of the network, which has an intended utility and is carefully specified to convey the exact meaning of a measured value.

The term "signal" at least in some examples refers to an observable change in a quality and/or quantity. Additionally or alternatively, the term "signal" at least in some examples refers to a function that conveys information about of an object, event, or phenomenon. Additionally or alternatively, the term "signal" at least in some examples refers to any time varying voltage, current, or electromagnetic wave that may or may not carry information. The term "digital signal" at least in some examples refers to a signal that is constructed from a discrete set of waveforms of a physical quantity so as to represent a sequence of discrete values.

The terms "ego" (as in, e.g., "ego device") and "subject" (as in, e.g., "data subject") at least in some examples refers to an entity, element, device, system, and the like, that is under consideration or being considered. The terms "neighbor" and "proximate" (as in, e.g., "proximate device") at least in some examples refers to an entity, element, device, system, and the like, other than an ego device or subject device.

The term "identifier" at least in some examples refers to a value, or a set of values, that uniquely identify an identity in a certain scope. Additionally or alternatively, the term "identifier" at least in some examples refers to a sequence of characters that identifies or otherwise indicates the identity of a unique object, element, or entity, or a unique class of objects, elements, or entities. Additionally or alternatively, the term "identifier" at least in some examples refers to a sequence of characters used to identify or refer to an application, program, session, object, element, entity, variable, set of data, and/or the like. The "sequence of characters" mentioned previously at least in some examples refers to one or more names, labels, words, numbers, letters, symbols, and/or any combination thereof. Additionally or alternatively, the term "identifier" at least in some examples refers to a name, address, label, distinguishing index, and/or attribute. Additionally or alternatively, the term "identifier" at least in some examples refers to an instance of identification. The term "persistent identifier" at least in some examples refers to an identifier that is reused by a device or by another device associated with the same person or group of persons for an indefinite period. The term "identification" at least in some examples refers to a process of recognizing an identity as distinct from other identities in a particular scope or context, which may involve processing identifiers to reference an identity in an identity database. The term "application identifier", "application ID", or "app ID" at least in some examples refers to an identifier that can be mapped to a specific application, application instance, or application instance. In the context of 3GPP 5G/NR, an "application identifier" at least in some examples refers to an identifier that can be mapped to a specific application traffic detection rule.

The term "circuitry" at least in some examples refers to a circuit or system of multiple circuits configured to perform a particular function in an electronic device. The circuit or system of circuits may be part of, or include one or more hardware components, such as a logic circuit, a processor (shared, dedicated, or group) and/or memory (shared, dedicated, or group), an application-specific integrated circuit (ASIC), field-programmable gate array (FPGA), programmable logic controller (PLC), single-board computer (SBC), system on chip (SoC), system in package (SiP), multi-chip package (MCP), digital signal processor (DSP), and the like, that are configured to provide the described functionality. In addition, the term "circuitry" may also refer to a combination of one or more hardware elements with the program code used to carry out the functionality of that program code. Some types of circuitry may execute one or more software or firmware programs to provide at least some of the described functionality. Such a combination of hardware elements and program code may be referred to as a particular type of circuitry.

The term "processor circuitry" at least in some examples refers to, is part of, or includes circuitry capable of sequentially and automatically carrying out a sequence of arithmetic or logical operations, or recording, storing, and/or transferring digital data. The term "processor circuitry" at least in some examples refers to one or more application processors, one or more baseband processors, a physical CPU, a single-core processor, a dual-core processor, a triple-core processor, a quad-core processor, and/or any other device capable of executing or otherwise operating computer-executable instructions, such as program code, software modules, and/or functional processes. The terms "application circuitry" and/or "baseband circuitry" may be considered synonymous to, and may be referred to as, "processor circuitry"

The term "memory" and/or "memory circuitry" at least in some examples refers to one or more hardware devices for storing data, including random access memory (RAM), static RAM (SRAM), dynamic RAM (DRAM), synchronous DRAM (SDRAM), magnetoresistive RAM (MRAM), conductive bridge Random Access Memory (CB-RAM), spin transfer torque (STT)-MRAM, phase change RAM (PRAM), core memory, read-only memory (ROM), programmable ROM (PROM), erasable PROM (EPROM), electrically EPROM (EEPROM), flash memory, non-volatile RAM (NVRAM), magnetic disk storage mediums, optical storage mediums, flash memory devices or other machine readable mediums for storing data. The term "computer-readable medium" includes, but is not limited to, memory, portable or fixed storage devices, optical storage devices, and various other mediums capable of storing, containing or carrying instructions or data.

The terms "machine-readable medium" and "computer-readable medium" refers to tangible medium that is capable of storing, encoding or carrying instructions for execution by a machine and that cause the machine to perform any one or more of the methodologies of the present disclosure or that is capable of storing, encoding or carrying data structures utilized by or associated with such instructions. A "machine-readable medium" thus includes but is not limited to, solid-state memories, and optical and magnetic media. Specific examples of machine-readable media include non-volatile memory, including but not limited to, by way of example, semiconductor memory devices (e.g., electrically programmable read-only memory (EPROM), electrically erasable programmable read-only memory (EEPROM)) and flash memory devices; magnetic disks such as internal hard disks and removable disks; magneto-optical disks; and CD-ROM and DVD-ROM disks. The instructions embodied by a machine-readable medium may further be transmitted or received over a communications network using a transmission medium via a network interface device utilizing any one of a number of transfer protocols (e.g., HTTP). A machine-readable medium may be provided by a storage device or other apparatus which is capable of hosting data in a non-transitory format. In an example, information stored or otherwise provided on a machine-readable medium may be representative of instructions, such as instructions themselves or a format from which the instructions may be derived. This format from which the instructions may be derived includes source code, encoded instructions (e.g., in compressed or encrypted form), packaged instructions (e.g., split into multiple packages), or the like. The information representative of the instructions in the machine-readable medium may be processed by processing circuitry into the instructions to implement any of the operations discussed herein. For example, deriving the instructions from the information (e.g., processing by the processing circuitry) includes: compiling (e.g., from source code, object code, and/or the like), interpreting, loading, organizing (e.g., dynamically or statically linking), encoding, decoding, encrypting, unencrypting, packaging, unpackaging, or otherwise manipulating the information into the instructions. In an example, the derivation of the instructions includes assembly, compilation, or interpretation of the information (e.g., by the processing circuitry) to create the instructions from some intermediate or preprocessed format provided by the machine-readable medium. The information, when provided in multiple parts, may be combined, unpacked, and modified to create the instructions. For example, the information may be in multiple compressed source code packages (or object code, or binary executable code, and/or the like) on one or several remote servers. The source code packages may be encrypted when in transit over a network and decrypted, uncompressed, assembled (e.g., linked) if necessary, and compiled or interpreted (e.g., into a library, stand-alone executable, and/or the like) at a local machine, and executed by the local machine. The terms "machine-readable medium" and "computer-readable medium" may be interchangeable for purposes of the present disclosure. The term "non-transitory computer-readable medium at least in some examples refers to any type of memory, computer readable storage device, and/or storage disk and may exclude propagating signals and transmission media.

The term "interface circuitry" at least in some examples refers to, is part of, or includes circuitry that enables the exchange of information between two or more components or devices. The term "interface circuitry" at least in some examples refers to one or more hardware interfaces, for example, buses, I/O interfaces, peripheral component interfaces, network interface cards, and/or the like.

The term "SmartNIC" at least in some examples refers to a network interface controller (NIC), network adapter, or a programmable network adapter card with programmable hardware accelerators and network connectivity (e.g., Ethernet or the like) that can offload various tasks or workloads from other compute nodes or compute platforms such as servers, application processors, and/or the like and accelerate those tasks or workloads. A SmartNIC has similar networking and offload capabilities as an IPU, but remains under the control of the host as a peripheral device.

The term "infrastructure processing unit" or "IPU" at least in some examples refers to an advanced networking device with hardened accelerators and network connectivity (e.g., Ethernet or the like) that accelerates and manages infrastructure functions using tightly coupled, dedicated, programmable cores. In some implementations, an IPU offers full infrastructure offload and provides an extra layer of security by serving as a control point of a host for running infrastructure applications. An IPU is capable of offloading the entire infrastructure stack from the host and can control how the host attaches to this infrastructure. This gives service providers an extra layer of security and control, enforced in hardware by the IPU.

The term "device" at least in some examples refers to a physical entity embedded inside, or attached to, another physical entity in its vicinity, with capabilities to convey digital information from or to that physical entity.

The term "controller" at least in some examples refers to an element or entity that has the capability to affect a physical entity, such as by changing its state or causing the physical entity to move.

The term "scheduler" at least in some examples refers to an entity or element that assigns resources (e.g., processor time, network links, memory space, and/or the like) to perform tasks. The term "network scheduler" at least in some examples refers to a node, element, or entity that manages network packets in transmit and/or receive queues of one or more protocol stacks of network access circuitry (e.g., a network interface controller (NIC), baseband processor, and the like). The term "network scheduler" at least in some examples can be used interchangeably with the terms "packet scheduler", "queueing discipline" or "qdisc", and/or "queueing algorithm".

The term "terminal" at least in some examples refers to point at which a conductor from a component, device, or network comes to an end. Additionally or alternatively, the term "terminal" at least in some examples refers to an electrical connector acting as an interface to a conductor and creating a point where external circuits can be connected. In some examples, terminals may include electrical leads, electrical connectors, electrical connectors, solder cups or buckets, and/or the like.

The term "compute node" or "compute device" at least in some examples refers to an identifiable entity implementing an aspect of computing operations, whether part of a larger system, distributed collection of systems, or a standalone apparatus. In some examples, a compute node may be referred to as a "computing device", "computing system", or the like, whether in operation as a client, server, or intermediate entity. Specific implementations of a compute node may be incorporated into a server, base station, gateway, road side unit, on-premise unit, user equipment, end consuming device, appliance, or the like. For purposes of the present disclosure, the term "node" at least in some examples refers to and/or is interchangeable with the terms "device", "component", "sub-system", and/or the like.

The term "computer system" at least in some examples refers to any type interconnected electronic devices, computer devices, or components thereof. Additionally, the terms "computer system" and/or "system" at least in some examples refer to various components of a computer that are communicatively coupled with one another. Furthermore, the term "computer system" and/or "system" at least in some examples refer to multiple computer devices and/or multiple computing systems that are communicatively coupled with one another and configured to share computing and/or networking resources.

The term "server" at least in some examples refers to a computing device or system, including processing hardware and/or process space(s), an associated storage medium such as a memory device or database, and, in some instances, suitable application(s) as is known in the art. The terms "server system" and "server" may be used interchangeably herein, and these terms at least in some examples refers to one or more computing system(s) that provide access to a pool of physical and/or virtual resources. The various servers discussed herein include computer devices with rack computing architecture component(s), tower computing architecture component(s), blade computing architecture component(s), and/or the like. The servers may represent a cluster of servers, a server farm, a cloud computing service, or other grouping or pool of servers, which may be located in one or more datacenters. The servers may also be connected to, or otherwise associated with, one or more data storage devices (not shown). Moreover, the servers includes an operating system (OS) that provides executable program instructions for the general administration and operation of the individual server computer devices, and includes a computer-readable medium storing instructions that, when executed by a processor of the servers, may allow the servers to perform their intended functions. Suitable implementations for the OS and general functionality of servers are known or commercially available, and are readily implemented by persons having ordinary skill in the art.

The term "platform" at least in some examples refers to an environment in which instructions, program code, software elements, and the like can be executed or otherwise operate, and examples of such an environment include an architecture (e.g., a motherboard, a computing system, and/or the like), one or more hardware elements (e.g., embedded systems, and the like), a cluster of compute nodes, a set of distributed compute nodes or network, an operating system, a virtual machine (VM), a virtualization container, a software framework, a client application (e.g., web browser or the like) and associated application programming interfaces, a cloud computing service (e.g., platform as a service (PaaS)), or other underlying software executed with instructions, program code, software elements, and the like.

The term "architecture" at least in some examples refers to a computer architecture or a network architecture. The term "computer architecture" at least in some examples refers to a physical and logical design or arrangement of software and/or hardware elements in a computing system or platform including technology standards for interacts therebetween. The term "network architecture" at least in some examples refers to a physical and logical design or arrangement of software and/or hardware elements in a network including communication protocols, interfaces, and media transmission.

The term "appliance," "computer appliance," and the like, at least in some examples refers to a computer device or computer system with program code (e.g., software or firmware) that is specifically designed to provide a specific computing resource. The term "virtual appliance" at least in some examples refers to a virtual machine image to be implemented by a hypervisor-equipped device that virtualizes or emulates a computer appliance or otherwise is dedicated to provide a specific computing resource. The term "security appliance", "firewall", and the like at least in some examples refers to a computer appliance designed to protect computer networks from unwanted traffic and/or malicious attacks. The term "policy appliance" at least in some examples refers to technical control and logging mechanisms to enforce or reconcile policy rules (information use rules) and to ensure accountability in information systems.

The term "gateway" at least in some examples refers to a network appliance that allows data to flow from one network to another network, or a computing system or application configured to perform such tasks. Examples of gateways include IP gateways, Internet-to-Orbit (I2O) gateways, IoT gateways, cloud storage gateways, and/or the like.

The term "user equipment" or "UE" at least in some examples refers to a device with radio communication capabilities and may describe a remote user of network resources in a communications network. The term "user equipment" or "UE" may be considered synonymous to, and may be referred to as, client, mobile, mobile device, mobile terminal, user terminal, mobile unit, station, mobile station, mobile user, subscriber, user, remote station, access agent, user agent, receiver, radio equipment, reconfigurable radio equipment, reconfigurable mobile device, and the like. Furthermore, the term "user equipment" or "UE" includes any type of wireless/wired device or any computing device including a wireless communications interface. Examples of UEs, client devices, and the like, include desktop computers, workstations, laptop computers, mobile data terminals, smartphones, tablet computers, wearable devices, machine-to-machine (M2M) devices, machine-type communication (MTC) devices, Internet of Things (IoT) devices, embedded systems, sensors, autonomous vehicles, drones, robots, in-vehicle infotainment systems, instrument clusters, onboard diagnostic devices, dashtop mobile equipment, electronic engine management systems, electronic/engine control units/modules, microcontrollers, control module, server devices, network appliances, head-up display (HUD) devices, helmut-mounted display devices, augmented reality (AR) devices, virtual reality (VR) devices, mixed reality (MR) devices, and/or other like systems or devices.

The term "station" or "STA" at least in some examples refers to a logical entity that is a singly addressable instance of a medium access control (MAC) and physical layer (PHY) interface to the wireless medium (WM). The term "wireless medium" or WM" at least in some examples refers to the medium used to implement the transfer of protocol data units (PDUs) between peer physical layer (PHY) entities of a wireless local area network (LAN).

The term "network element" at least in some examples refers to physical or virtualized equipment and/or infrastructure used to provide wired or wireless communication network services. The term "network element" may be considered synonymous to and/or referred to as a networked computer, networking hardware, network equipment, network node, router, switch, hub, bridge, radio network controller, network access node (NAN), base station, access point (AP), RAN device, RAN node, gateway, server, network applicance, network function (NF), virtualized NF (VNF), and/or the like.

The term "network controller" at least in some examples refers to a functional block that centralizes some or all of the control and management functionality of a network domain and may provide an abstract view of the network domain to other functional blocks via an interface.

The term "network access node" or "NAN" at least in some examples refers to a network element in a radio access network (RAN) responsible for the transmission and reception of radio signals in one or more cells or coverage areas to or from a UE or station. A "network access node" or "NAN" can have an integrated antenna or may be connected to an antenna array by feeder cables. Additionally or alternatively, a "network access node" or "NAN" includes specialized digital signal processing, network function hardware, and/or compute hardware to operate as a compute node. In some examples, a "network access node" or "NAN" may be split into multiple functional blocks operating in software for flexibility, cost, and performance. In some examples, a "network access node" or "NAN" may be a base station (e.g., an evolved Node B (eNB) or a next generation Node B (gNB)), an access point and/or wireless network access point, router, switch, hub, radio unit or remote radio head, Transmission Reception Point (TRxP), a gateway device (e.g., Residential Gateway, Wireline 5G Access Network, Wireline 5G Cable Access Network, Wireline BBF Access Network, and the like), network appliance, and/or some other network access hardware.

The term "access point" or "AP" at least in some examples refers to an entity that contains one station (STA) and provides access to the distribution services, via the wireless medium (WM) for associated STAs. An AP comprises a STA and a distribution system access function (DSAF).

The term "cell" at least in some examples refers to a radio network object that can be uniquely identified by a UE from an identifier (e.g., cell ID) that is broadcasted over a geographical area from a network access node (NAN). Additionally or alternatively, the term "cell" at least in some examples refers to a geographic area covered by a NAN. The term "handover" at least in some examples refers to the transfer of a user's connection from one radio channel to another (can be the same or different cell). Additionally or alternatively, the term "handover" at least in some examples refers to the process in which a radio access network changes the radio transmitters, radio access mode, and/or radio system used to provide the bearer services, while maintaining a defined bearer service QoS

The term "serving cell" at least in some examples refers to a primary cell (PCell) for a UE in a connected mode or state (e.g., RRC_CONNECTED) and not configured with carrier aggregation (CA) and/or dual connectivity (DC). Additionally or alternatively, the term "serving cell" at least in some examples refers to a set of cells comprising zero or more special cells and one or more secondary cells for a UE in a connected mode or state (e.g., RRC_CONNECTED) and configured with CA.

The term "primary cell" or "PCell" at least in some examples refers to a Master Cell Group (MCG) cell, operating on a primary frequency, in which a UE either performs an initial connection establishment procedure or initiates a connection re-establishment procedure. The term "Secondary Cell" or "SCell" at least in some examples refers to a cell providing additional radio resources on top of a special cell (SpCell) for a UE configured with CA. The term "special cell" or "SpCell" at least in some examples refers to a PCell for non-DC operation or refers to a PCell of an MCG or a PSCell of an SCG for DC operation.

The term "Master Cell Group" or "MCG" at least in some examples refers to a group of serving cells associated with a "Master Node" comprising a SpCell (PCell) and optionally one or more SCells. The term "Secondary Cell Group" or "SCG" at least in some examples refers to a subset of serving cells comprising a Primary SCell (PSCell) and zero or more SCells for a UE configured with DC. The term "Primary SCG Cell" refers to the SCG cell in which a UE performs random access when performing a reconfiguration with sync procedure for DC operation.

The term "Master Node" or "MN" at least in some examples refers to a NAN that provides control plane connection to a core network. The term "Secondary Node" or "SN" at least in some examples refers to a NAN providing resources to the UE in addition to the resources provided by an MN and/or a NAN with no control plane connection to a core network

The term "E-UTEAN NodeB", "eNodeB", or "eNB" at least in some examples refers to a RAN node providing E-UTRA user plane (PDCP/RLC/MAC/PHY) and control plane (RRC) protocol terminations towards a UE, and connected via an S1 interface to the Evolved Packet Core (EPC). Two or more eNBs are interconnected with each other (and/or with one or more en-gNBs) by means of an X2 interface.

The term "next generation eNB" or "ng-eNB" at least in some examples refers to a RAN node providing E-UTRA user plane and control plane protocol terminations towards a UE, and connected via the NG interface to the 5GC. Two or more ng-eNBs are interconnected with each other (and/or with one or more gNBs) by means of an Xn interface.

The term "Next Generation NodeB", "gNodeB", or "gNB" at least in some examples refers to a RAN node providing NR user plane and control plane protocol terminations towards a UE, and connected via the NG interface to the 5GC. Two or more gNBs are interconnected with each other (and/or with one or more ng-eNBs) by means of an Xn interface.

The term "E-UTRA-NR gNB" or "en-gNB" at least in some examples refers to a RAN node providing NR user plane and control plane protocol terminations towards a UE, and acting as a Secondary Node in E-UTRA-NR Dual Connectivity (EN-DC) scenarios (see e.g., 3GPP TS 37.340 v17.0.0 (2022-04-15) ("[TS37340]")). Two or more en-gNBs are interconnected with each other (and/or with one or more eNBs) by means of an X2 interface.

The term "Next Generation RAN node" or "NG-RAN node" at least in some examples refers to either a gNB or an ng-eNB.

The term "IAB-node" at least in some examples refers to a RAN node that supports new radio (NR) access links to user equipment (UEs) and NR backhaul links to parent nodes and child nodes. The term "IAB-donor" at least in some examples refers to a RAN node (e.g., a gNB) that provides network access to UEs via a network of backhaul and access links.

The term "Transmission Reception Point" or "TRxP" at least in some examples refers to an antenna array with one or more antenna elements available to a network located at a specific geographical location for a specific area.

The term "Central Unit" or "CU" at least in some examples refers to a logical node hosting radio resource control (RRC), Service Data Adaptation Protocol (SDAP), and/or Packet Data Convergence Protocol (PDCP) protocols/layers of an NG-RAN node, or RRC and PDCP protocols of the en-gNB that controls the operation of one or more DUs; a CU terminates an F1 interface connected with a DU and may be connected with multiple DUs. The term "Distributed Unit" or "DU" at least in some examples refers to a logical node hosting Backhaul Adaptation Protocol (BAP), F1 application protocol (FlAP), radio link control (RLC), medium access control (MAC), and physical (PHY) layers of the NG-RAN node or en-gNB, and its operation is partly controlled by a CU; one DU supports one or multiple cells, and one cell is supported by only one DU; and a DU terminates the F1 interface connected with a CU. The term "Radio Unit" or "RU" at least in some examples refers to a logical node hosting PHY layer or Low-PHY layer and radiofrequency (RF) processing based on a lower layer functional split. The term "split architecture" at least in some examples refers to an architecture in which an CU, DU, and/or RU are physically separated from one another. Additionally or alternatively, the term "split architecture" at least in some examples refers to a RAN architecture such as those discussed in 3GPP TS 38.401 v17.3.0 (2023-01-06) ("[TS38401]") and/or 3GPP TS 38.410 v 17.1.0 (2022-06-23) ("[TS38410]"), the contents of each of which are hereby incorporated by reference in their entireties.The term "integrated architecture at least in some examples refers to an architecture in which an RU and DU are implemented on one platform, and/or an architecture in which a DU and a CU are implemented on one platform.

The term "Residential Gateway" or "RG" at least in some examples refers to a device providing, for example, voice, data, broadcast video, video on demand, to other devices in customer premises. The term "Wireline 5G Access Network" or "W-5GAN" at least in some examples refers to a wireline AN that connects to a 5GC via N2 and N3 reference points. The W-5GAN can be either a W-5GBAN or W-5GCAN. The term "Wireline 5G Cable Access Network" or "W-5GCAN" at least in some examples refers to an Access Network defined in/by CableLabs. The term "Wireline BBF Access Network" or "W-5GBAN" at least in some examples refers to an Access Network defined in/by the Broadband Forum (BBF). The term "Wireline Access Gateway Function" or "W-AGF" at least in some examples refers to a Network function in W-5GAN that provides connectivity to a 3GPP 5G Core network (5GC) to 5G-RG and/or FN-RG. The term "5G-RG" at least in some examples refers to an RG capable of connecting to a 5GC playing the role of a user equipment with regard to the 5GC; it supports secure element and exchanges N1 signaling with 5GC. The 5G-RG can be either a 5G-BRG or 5G-CRG.

The term "SMTC" refers to an SSB-based measurement timing configuration configured by *SSB-MeasurementTimingConfiguration.* The term "SSB" refers to an SS/PBCH block.

The term "a "Primary Cell" refers to the MCG cell, operating on the primary frequency, in which the UE either performs the initial connection establishment procedure or initiates the connection re-establishment procedure. The term "Primary SCG Cell" refers to the SCG cell in which the UE performs random access when performing the Reconfiguration with Sync procedure for DC operation. The term "Secondary Cell" refers to a cell providing additional radio resources on top of a Special Cell for a UE configured with CA. The term "Secondary Cell Group" refers to the subset of serving cells comprising the PSCell and zero or more secondary cells for a UE configured with DC. The term "Serving Cell" refers to the primary cell for a UE in RRC_CONNECTED not configured with CA/DC there is only one serving cell comprising of the primary cell. The term "serving cell" or "serving cells" refers to the set of cells comprising the Special Cell(s) and all secondary cells for a UE in RRC_CONNECTED configured with CA. The term "Special Cell" refers to the PCell of the MCG or the PSCell of the SCG for DC operation; otherwise, the term "Special Cell" refers to the Pcell.

The term "edge computing" at least in some examples refers to an implementation or arrangement of distributed computing elements that move processing activities and resources (e.g., compute, storage, acceleration, and/or network resources) towards the "edge" of the network in an effort to reduce latency and increase throughput for endpoint users (client devices, user equipment, and the like). Additionally or alternatively, term "edge computing" at least in some examples refers to a set of services hosted relatively close to a client/UE's access point of attachment to a network to achieve relatively efficient service delivery through reduced end-to-end latency and/or load on the transport network. In some examples, edge computing implementations involve the offering of services and/or resources in a cloud-like systems, functions, applications, and subsystems, from one or multiple locations accessible via wireless networks. Additionally or alternatively, term "edge computing" at least in some examples refers to the concept, as described in [TS23501], that enables operator and 3rd party services to be hosted close to a UE's access point of attachment, to achieve an efficient service delivery through the reduced end-to-end latency and load on the transport network.

The term "edge compute node" or "edge compute device" at least in some examples refers to an identifiable entity implementing an aspect of edge computing operations, whether part of a larger system, distributed collection of systems, or a standalone apparatus. In some examples, a compute node may be referred to as a "edge node", "edge device", "edge system", whether in operation as a client, server, or intermediate entity. Additionally or alternatively, the term "edge compute node" at least in some examples refers to a real-world, logical, or virtualized implementation of a compute-capable element in the form of a device, gateway, bridge, system or subsystem, component, whether operating in a server, client, endpoint, or peer mode, and whether located at an "edge" of an network or at a connected location further within the network. however, references to an "edge computing system" generally refer to a distributed architecture, organization, or collection of multiple nodes and devices, and which is organized to accomplish or offer some aspect of services or resources in an edge computing setting.

The term "edge computing platform" or "edge platform" at least in some examples refers to a collection of functionality that is used to instantiate, execute, or run edge applications on a specific edge compute node (e.g., virtualisation infrastructure and/or the like), enable such edge applications to provide and/or consume edge services, and/or otherwise provide one or more edge services.

The term "edge application" or "edge app" at least in some examples refers to an application that can be instantiated on, or executed by, an edge compute node within an edge computing network, system, or framework, and can potentially provide and/or consume edge computing services.

The term "edge service" at least in some examples refers to a service provided via an edge compute node and/or edge platform, either by the edge platform itself and/or by an edge application.

The term "colocated" or "co-located" at least in some examples refers to two or more elements being in the same place or location, or relatively close to one another (e.g., within some predetermined distance from one another). Additionally or alternatively, the term "colocated" or "co-located" at least in some examples refers to the placement or deployment of two or more compute elements or compute nodes together in a secure dedicated storage facility, or within a same enclosure or housing.

The term "central office" or "CO" at least in some examples refers to an aggregation point for telecommunications infrastructure within an accessible or defined geographical area, often where telecommunication service providers have traditionally located switching equipment for one or multiple types of access networks. In some examples, a CO can be physically designed to house telecommunications infrastructure equipment or compute, data storage, and network resources. The CO need not, however, be a designated location by a telecommunications service provider. The CO may host any number of compute devices for edge applications and services, or even local implementations of cloud-like services.

The term "cloud computing" or "cloud" at least in some examples refers to a paradigm for enabling network access to a scalable and elastic pool of shareable computing resources with self-service provisioning and administration on-demand and without active management by users. Cloud computing provides cloud computing services (or cloud services), which are one or more capabilities offered via cloud computing that are invoked using a defined interface (e.g., an API or the like).

The term "cluster" at least in some examples refers to a set or grouping of entities as part of a cloud computing service and/or an edge computing system (or systems), in the form of physical entities (e.g., different computing systems, network elements, networks and/or network groups), logical entities (e.g., applications, functions, security constructs, virtual machines, virtualization containers, and the like), and the like. In some examples, a "cluster" is also referred to as a "group" or a "domain". The membership of cluster may be modified or affected based on conditions, parameters, criteria, configurations, functions, and/or other aspects including from dynamic or property-based membership, from network or system management scenarios, and/or the like.

The term "compute resource" or simply "resource" at least in some examples refers to an object with a type, associated data, a set of methods that operate on it, and, if applicable, relationships to other resources. Additionally or alternatively, the term "compute resource" or "resource" at least in some examples refers to any physical or virtual component, or usage of such components, of limited availability within a computer system or network. Examples of computing resources include usage/access to, for a period of time, servers, processor(s), storage equipment, memory devices, memory areas, networks, electrical power, input/output (peripheral) devices, mechanical devices, network connections (e.g., channels/links, ports, network sockets, and the like), operating systems, virtual machines (VMs), software/applications, computer files, and/or the like. A "hardware resource" at least in some examples refers to compute, storage, and/or network resources provided by physical hardware element(s). A "virtualized resource" at least in some examples refers to compute, storage, and/or network resources provided by virtualization infrastructure to an application, device, system, and the like. The term "network resource" or "communication resource" at least in some examples refers to resources that are accessible by computer devices/systems via a communications network. The term "system resources" at least in some examples refers to any kind of shared entities to provide services, and includes computing and/or network resources. System resources may be considered as a set of coherent functions, network data objects or services, accessible through a server where such system resources reside on a single host or multiple hosts and are clearly identifiable.

The term "workload" at least in some examples refers to an amount of work performed by a computing system, device, entity, and the like, during a period of time or at a particular instant of time. A workload may be represented as a benchmark, such as a response time, throughput (e.g., how much work is accomplished over a period of time), and/or the like. Additionally or alternatively, the workload may be represented as a memory workload (e.g., an amount of memory space needed for program execution to store temporary or permanent data and to perform intermediate computations), processor workload (e.g., a number of instructions being executed by a processor during a given period of time or at a particular time instant), an I/O workload (e.g., a number of inputs and outputs or system accesses during a given period of time or at a particular time instant), database workloads (e.g., a number of database queries during a period of time), a network-related workload (e.g., a number of network attachments, a number of mobility updates, a number of radio link failures, a number of handovers, an amount of data to be transferred over an air interface, and the like), and/or the like. Various algorithms may be used to determine a workload and/or workload characteristics, which may be based on any of the aforementioned workload types.

The term "cloud service provider" or "CSP" at least in some examples refers to an organization that operates or otherwise provides cloud resources including, for example, centralized, regional, and/or edge data centers and/or the like. In some examples, the term "cloud computing" refers to computing resources and services offered by a CSP.

The term "data center" at least in some examples refers to a purpose-designed structure that is intended to house multiple high-performance compute and data storage nodes such that a large amount of compute, data storage and network resources are present at a single location. This often entails specialized rack and enclosure systems, suitable heating, cooling, ventilation, security, fire suppression, and power delivery systems. The term may also refer to a compute and data storage node in some contexts. A data center may vary in scale between a centralized or cloud data center (e.g., largest), regional data center, and edge data center (e.g., smallest).

The term "access edge layer" indicates the sub-layer of infrastructure edge closest to the end user or device. For example, such layer may be fulfilled by an edge data center deployed at a cellular network site. The access edge layer functions as the front line of the infrastructure Edge and may connect to an aggregation Edge layer higher in the hierarchy.

The term "aggregation edge layer" indicates the layer of infrastructure edge one hop away from the access edge layer. This layer can exist as either a medium-scale data center in a single location or may be formed from multiple interconnected micro data centers to form a hierarchical topology with the access Edge to allow for greater collaboration, workload failover, and scalability than access Edge alone.

The term "network function" or "NF" at least in some examples refers to a functional block within a network infrastructure that has one or more external interfaces and a defined functional behavior.

The term "network service" or "NS" at least in some examples refers to a composition or collection of NF(s) and/or network service(s), defined by its functional and behavioral specification(s).

The term "RAN function" or "RANF" at least in some examples refers to a functional block within a RAN architecture that has one or more external interfaces and a defined behavior related to the operation of a RAN or RAN node. Additionally or alternatively, the term "RAN function" or "RANF" at least in some examples refers to a set of functions and/or NFs that are part of a RAN.

The term "Application Function" or "AF" at least in some examples refers to an element or entity that interacts with a 3GPP core network in order to provide services. Additionally or alternatively, the term "Application Function" or "AF" at least in some examples refers to an edge compute node or ECT framework from the perspective of a 5G core network. The term "edge compute function" or "ECF" at least in some examples refers to an element or entity that performs an aspect of an edge computing technology (ECT), an aspect of edge networking technology (ENT), or performs an aspect of one or more edge computing services running over the ECT or ENT. The term "management function" at least in some examples refers to a logical entity playing the roles of a service consumer and/or a service producer. The term "management service" at least in some examples refers to a set of offered management capabilities. The term "network function virtualization" or "NFV" at least in some examples refers to the principle of separating network functions from the hardware they run on by using virtualisation techniques and/or virtualization technologies.

The term "virtualized network function" or "VNF" at least in some examples refers to an implementation of an NF that can be deployed on a Network Function Virtualisation Infrastructure (NFVI). The term "Network Functions Virtualisation Infrastructure Manager" or "NFVI" at least in some examples refers to a totality of all hardware and software components that build up the environment in which VNFs are deployed.

The term "slice" at least in some examples refers to a set of characteristics and behaviors that separate one instance, traffic, data flow, application, application instance, link or connection, RAT, device, system, entity, element, and the like from another instance, traffic, data flow, application, application instance, link or connection, RAT, device, system, entity, element, and the like, or separate one type of instance, and the like, from another instance, and the like.

The term "network slice" at least in some examples refers to a logical network that provides specific network capabilities and network characteristics and/or supports various service properties for network slice service consumers. Additionally or alternatively, the term "network slice" at least in some examples refers to a logical network topology connecting a number of endpoints using a set of shared or dedicated network resources that are used to satisfy specific service level objectives(SLOs) and/or service level agreements (SLAs).

The term "network slicing" at least in some examples refers to methods, processes, techniques, and technologies used to create one or multiple unique logical and virtualized networks over a common multi-domain infrastructure. The term "access network slice", "radio access network slice", or "RAN slice" at least in some examples refers to a part of a network slice that provides resources in a RAN to fulfill one or more application and/or service requirements (e.g., SLAs, and the like). The term "network slice instance" at least in some examples refers to a set of Network Function instances and the required resources (e.g., compute, storage and networking resources) which form a deployed network slice. Additionally or alternatively, the term "network slice instance" at least in some examples refers to a representation of a service view of a network slice. The term "network instance" at least in some examples refers to information identifying a domain.

The term "service consumer" at least in some examples refers to an entity that consumes one or more services. The term "service producer" at least in some examples refers to an entity that offers, serves, or otherwise provides one or more services. The term "service provider" at least in some examples refers to an organization or entity that provides one or more services to at least one service consumer. For purposes of the present disclosure, the terms "service provider" and "service producer" may be used interchangeably even though these terms may refer to difference concepts. Examples of service providers include cloud service provider (CSP), network service provider (NSP), application service provider (ASP) (e.g., Application software service provider in a service-oriented architecture (ASSP)), internet service provider (ISP), telecommunications service provider (TSP), online service provider (OSP), payment service provider (PSP), managed service provider (MSP), storage service providers (SSPs), SAML service provider, and/or the like. At least in some examples, SLAs may specify, for example, particular aspects of the service to be provided including quality, availability, responsibilities, metrics by which service is measured, as well as remedies or penalties should agreed-on service levels not be achieved. The term "SAML service provider" at least in some examples refers to a system and/or entity that receives and accepts authentication assertions in conjunction with a single sign-on (SSO) profile of the Security Assertion Markup Language (SAML) and/or some other security mechanism(s).

The term "Virtualized Infrastructure Manager" or "VIM" at least in some examples refers to a functional block that is responsible for controlling and managing the NFVI compute, storage and network resources, usually within one operator's infrastructure domain.

The term "virtualization container", "execution container", or "container" at least in some examples refers to a partition of a compute node that provides an isolated virtualized computation environment. The term "OS container" at least in some examples refers to a virtualization container utilizing a shared Operating System (OS) kernel of its host, where the host providing the shared OS kernel can be a physical compute node or another virtualization container. Additionally or alternatively, the term "container" at least in some examples refers to a standard unit of software (or a package) including code and its relevant dependencies, and/or an abstraction at the application layer that packages code and dependencies together. Additionally or alternatively, the term "container" or "container image" at least in some examples refers to a lightweight, standalone, executable software package that includes everything needed to run an application such as, for example, code, runtime environment, system tools, system libraries, and settings.

The term "virtual machine" or "VM" at least in some examples refers to a virtualized computation environment that behaves in a same or similar manner as a physical computer and/or a server. The term "hypervisor" at least in some examples refers to a software element that partitions the underlying physical resources of a compute node, creates VMs, manages resources for VMs, and isolates individual VMs from each other.

The term "Data Network" or "DN" at least in some examples refers to a network hosting data-centric services such as, for example, operator services, the internet, third-party services, or enterprise networks. Additionally or alternatively, a DN at least in some examples refers to service networks that belong to an operator or third party, which are offered as a service to a client or user equipment (UE). DNs are sometimes referred to as "Packet Data Networks" or "PDNs". The term "Local Area Data Network" or "LADN" at least in some examples refers to a DN that is accessible by the UE only in specific locations, that provides connectivity to a specific DNN, and whose availability is provided to the UE.

The term "Internet of Things" or "IoT" at least in some examples refers to a system of interrelated computing devices, mechanical and digital machines capable of transferring data with little or no human interaction, and may involve technologies such as real-time analytics, machine learning and/or AI, embedded systems, wireless sensor networks, control systems, automation (e.g., smarthome, smart building and/or smart city technologies), and the like. IoT devices are usually low-power devices without heavy compute or storage capabilities. The term "edge IoT devices" at least in some examples refers to any kind of IoT devices deployed at a network's edge.

The term "application context" at at least in some examples refers to a set of data about an application client that resides in an edge application server (EAS). The term "application context relocation" or "ACR" at least in some examples refers to an end-to-end service continuity procedure described in [TS23558] § 8.8. The term "application context transfer" or "ACT" at least in some examples refers to the transfer of an application context between a source edge application server (EAS) and a target EAS, which is a part of the service continuity procedure described in [TS23558] § 8.8. The term "application server" at least in some examples refers to an application or other software element resident in the cloud and/or edge compute network/system/server performing one or more server functions. The term "edge application server" or "EAS" at least in some examples refers to an application server resident in an edge hosting environment. The term "edge computing service provider" or "ECSP" at least in some examples refers to a mobile network operator or a 3rd party service provider offering edge computing services. The term "ECSP management system" at least in some examples refers to a part of 3GPP management system that utilizes 3GPP defined management services to enable consumers (e.g., ASP. ECSP) to orchestrate and manage the EDN. The term "PLMN Management System" at least in some examples refers to a part of 3GPP Management System that utilizes 3GPP defined management services to enable consumers (e.g., PLMN operator) to orchestrate and manage the mobile networks. The term "Availability Zone" at least in some examples refers to GSMA Operator Platform Telco Edge Requirements (see e.g., *Operator Platform Telco Edge Requirements,* version 2.0, GSM ASSOCIATION (GSMA), Official Document OPG.02 (14 Apr. 2022)). The term "edge data network" or "EDN" at least in some examples refers to a local data network that supports the architecture for enabling edge applications. The term "edge enabler client context" or "EEC context" at least in some examples refers to a set of data about the Edge Enabler Client that resides in the edge enabler server (EES). The term "edge enabler layer" at least in some examples refers to the overall functionality provided by the entities, such as edge enabler client (EEC), edge enabler server (EES), and/or edge configuration server (ECS), in support of applications as per the architecture (see e.g., [TS23558] § 6). The term "edge hosting environment" at least in some examples refers to an environment providing support required for an edge application server's execution. The term "cloud data network" at least in some examples refers to a data network having a set of servers deployed in a central place and capable of serving UEs from wider coverage area, as opposed to the edge data network (EDN). The term "primary ECS" at least in some examples refers to an ECS whose address information is configured with the EEC. EEC is authorized to communicate with the Primary ECS directly. Additionally or alternatively, the term "primary ECS" can also be referred to as a "configured ECS" during the normative phase. The term "primary ECSP" at least in some examples refers to an ECSP for which a UE has authorization to obtain service. The term "partner ECS" at least in some examples refers to a federation partner of a primary ECS; in some examples, an EEC is not configured with the address information of partner ECSs. The term "partner ECSP" at least in some examples refers to an ECSP with whom a primary ECSP has a service level agreement (SLA) for resource sharing, for example, a federation partner of the primary ECSP.

The term "protocol" at least in some examples refers to a predefined procedure or method of performing one or more operations. Additionally or alternatively, the term "protocol" at least in some examples refers to a common means for unrelated objects to communicate with each other (sometimes also called interfaces). The term "communication protocol" at least in some examples refers to a set of standardized rules or instructions implemented by a communication device and/or system to communicate with other devices and/or systems, including instructions for packetizing/depacketizing data, modulating/demodulating signals, implementation of protocols stacks, and/or the like. In various implementations, a "protocol" and/or a "communication protocol" may be represented using a protocol stack, a finite state machine (FSM), and/or any other suitable data structure. The term "standard protocol" at least in some examples refers to a protocol whose specification is published and known to the public and is controlled by a standards body. The term "protocol stack" or "network stack" at least in some examples refers to an implementation of a protocol suite or protocol family. In various implementations, a protocol stack includes a set of protocol layers, where the lowest protocol deals with low-level interaction with hardware and/or communications interfaces and each higher layer adds additional capabilities. Additionally or alternatively, the term "protocol" at least in some examples refers to a formal set of procedures that are adopted to ensure communication between two or more functions within the within the same layer of a hierarchy of functions.

The term "application layer" at least in some examples refers to an abstraction layer that specifies shared communications protocols and interfaces used by hosts in a communications network. Additionally or alternatively, the term "application layer" at least in some examples refers to an abstraction layer that interacts with software applications that implement a communicating component, and includes identifying communication partners, determining resource availability, and synchronizing communication. Examples of application layer protocols include HTTP, HTTPs, File Transfer Protocol (FTP), Dynamic Host Configuration Protocol (DHCP), Internet Message Access Protocol (IMAP), Lightweight Directory Access Protocol (LDAP), MQTT (MQ Telemetry Transport), Remote Authentication Dial-In User Service (RADIUS), Diameter protocol, Extensible Authentication Protocol (EAP), RDMA over Converged Ethernet version 2 (RoCEv2), Real-time Transport Protocol (RTP), RTP Control Protocol (RTCP), Real Time Streaming Protocol (RTSP), SBMV Protocol, Skinny Client Control Protocol (SCCP), Session Initiation Protocol (SIP), Session Description Protocol (SDP), Simple Mail Transfer Protocol (SMTP), Simple Network Management Protocol (SNMP), Simple Service Discovery Protocol (SSDP), Small Computer System Interface (SCSI), Internet SCSI (iSCSI), iSCSI Extensions for RDMA (iSER), Transport Layer Security (TLS), voice over IP (VoIP), Virtual Private Network (VPN), Extensible Messaging and Presence Protocol (XMPP), and/or the like.

The term "session layer" at least in some examples refers to an abstraction layer that controls dialogues and/or connections between entities or elements, and may include establishing, managing and terminating the connections between the entities or elements.

The term "transport layer" at least in some examples refers to a protocol layer that provides end-to-end (e2e) communication services such as, for example, connection-oriented communication, reliability, flow control, and multiplexing. Examples of transport layer protocols include datagram congestion control protocol (DCCP), fibre channel protocol (FBC), Generic Routing Encapsulation (GRE), GPRS Tunneling (GTP), Micro Transport Protocol (µTP), Multipath TCP (MPTCP), MultiPath QUIC (MPQUIC), Multipath UDP (MPUDP), Quick UDP Internet Connections (QUIC), Remote Direct Memory Access (RDMA), Resource Reservation Protocol (RSVP), Stream Control Transmission Protocol (SCTP), transmission control protocol (TCP), user datagram protocol (UDP), and/or the like.

The term "network layer" at least in some examples refers to a protocol layer that includes means for transferring network packets from a source to a destination via one or more networks. Additionally or alternatively, the term "network layer" at least in some examples refers to a protocol layer that is responsible for packet forwarding and/or routing through intermediary nodes. Additionally or alternatively, theterm "network layer" or "internet layer" at least in some examples refers to a protocol layer that includes interworking methods, protocols, and specifications that are used to transport network packets across a network. As examples, the network layer protocols include internet protocol (IP), IP security (IPsec), Internet Control Message Protocol (ICMP), Internet Group Management Protocol (IGMP), Open Shortest Path First protocol (OSPF), Routing Information Protocol (RIP), RDMA over Converged Ethernet version 2 (RoCEv2), Subnetwork Access Protocol (SNAP), and/or some other internet or network protocol layer.

The term "link layer" or "data link layer" at least in some examples refers to a protocol layer that transfers data between nodes on a network segment across a physical layer. Examples of link layer protocols include logical link control (LLC), medium access control (MAC), Ethernet, RDMA over Converged Ethernet version 1 (RoCEv1), and/or the like.

The term "radio resource control", "RRC layer", or "RRC" at least in some examples refers to a protocol layer or sublayer that performs system information handling; paging; establishment, maintenance, and release of RRC connections; security functions; establishment, configuration, maintenance and release of Signalling Radio Bearers (SRBs) and Data Radio Bearers (DRBs); mobility functions/services; QoS management; and some sidelink specific services and functions over the Uu interface (see e.g., 3GPP TS 36.331 v17.4.0 (2023-03-30) ("[TS36331]") and/or 3GPP TS 38.331 v17.4.0 (2023-03-30) ("[TS38331]")).

The term "Service Data Adaptation Protocol", "SDAP layer", or "SDAP" at least in some examples refers to a protocol layer or sublayer that performs mapping between QoS flows and a data radio bearers (DRBs) and marking QoS flow IDs (QFI) in both DL and UL packets (see e.g., 3GPP TS 37.324 v17.0.0 (2022-04-13) ("[TS37324]").

The term "Packet Data Convergence Protocol", "PDCP layer", or "PDCP" at least in some examples refers to a protocol layer or sublayer that performs transfer user plane or control plane data; maintains PDCP sequence numbers (SNs); header compression and decompression using the Robust Header Compression (ROHC) and/or Ethernet Header Compression (EHC) protocols; ciphering and deciphering; integrity protection and integrity verification; provides timer based SDU discard; routing for split bearers; duplication and duplicate discarding; reordering and in-order delivery; and/or out-of-order delivery (see e.g., 3GPP TS 36.323 v17.2.0 (2023-01-13) and/or 3GPP TS 38.323 v17.4.0 (2023-03-28) ("[TS38323]")).

The term "radio link control layer", "RLC layer", or "RLC" at least in some examples refers to a protocol layer or sublayer that performs transfer of upper layer PDUs; sequence numbering independent of the one in PDCP; error Correction through ARQ; segmentation and/or re-segmentation of RLC SDUs; reassembly of SDUs; duplicate detection; RLC SDU discarding; RLC re-establishment; and/or protocol error detection (see e.g., 3GPP TS 36.322 v17.0.0 (2022-04-15) and 3GPP TS 38.322 v17.2.0 (2023-01-13) ("[TS38322]")).

The term "medium access control protocol", "MAC protocol", or "MAC" at least in some examples refers to a protocol that governs access to the transmission medium in a network, to enable the exchange of data between stations in a network. Additionally or alternatively, the term "medium access control layer", "MAC layer", or "MAC" at least in some examples refers to a protocol layer or sublayer that performs functions to provide frame-based, connectionless-mode (e.g., datagram style) data transfer between stations or devices. Additionally or alternatively, the term "medium access control layer", "MAC layer", or "MAC" at least in some examples refers to a protocol layer or sublayer that performs mapping between logical channels and transport channels; multiplexing/demultiplexing of MAC SDUs belonging to one or different logical channels into/from transport blocks (TB) delivered to/from the physical layer on transport channels; scheduling information reporting; error correction through HARQ (one HARQ entity per cell in case of CA); priority handling between UEs by means of dynamic scheduling; priority handling between logical channels of one UE by means of logical channel prioritization; priority handling between overlapping resources of one UE; and/or padding (see e.g., [IEEE802], 3GPP TS 36.321 v17.3.0 (2023-01-13), and 3GPP TS 38.321 v17.4.0 (2023-03-29) ("[TS38321]").

The term "physical layer", "PHY layer", or "PHY" at least in some examples refers to a protocol layer or sublayer that includes capabilities to transmit and receive modulated signals for communicating in a communications network (see e.g., [IEEE802], 3GPP TS 36.201 v17.0.0 (2022-03-31), and 3GPP TS 38.201 v17.0.0 (2022-01-05) ("[TS38201]")

The term "access technology" at least in some examples refers to the technology used for the underlying physical connection to a communication network. The term "radio access technology" or "RAT" at least in some examples refers to the technology used for the underlying physical connection to a radio based communication network. The term "radio technology" at least in some examples refers to technology for wireless transmission and/or reception of electromagnetic radiation for information transfer. The term "RAT type" at least in some examples may identify a transmission technology and/or communication protocol used in an access network. Examples of access technologies include wireless access technologies/RATs, wireline, wireline-cable, wireline broadband forum (wireline-BBF), Ethernet (see e.g., *IEEE Standard for Ethernet,* IEEE Std 802.3-2018 (31 Aug. 2018) ("[IEEE8023]")) and variants thereof, fiber optics networks (e.g., ITU-T G.651, ITU-T G.652, Optical Transport Network (OTN), Synchronous optical networking (SONET) and synchronous digital hierarchy (SDH), and the like), digital subscriber line (DSL) and variants thereof, Data Over Cable Service Interface Specification (DOCSIS) technologies, hybrid fiber-coaxial (HFC) technologies, and/or the like. Examples of RATs (or RAT types) and/or communications protocols include Advanced Mobile Phone System (AMPS) technologies (e.g., Digital AMPS (D-AMPS), Total Access Communication System (TACS) and variants thereof, such as Extended TACS (ETACS), and the like); Global System for Mobile Communications (GSM) technologies (e.g., Circuit Switched Data (CSD), High-Speed CSD (HSCSD), General Packet Radio Service (GPRS), and Enhanced Data Rates for GSM Evolution (EDGE)); Third Generation Partnership Project (3GPP) technologies (e.g., Universal Mobile Telecommunications System (UMTS) and variants thereof (e.g., UMTS Terrestrial Radio Access (UTRA), Wideband Code Division Multiple Access (W-CDMA), Freedom of Multimedia Access (FOMA), Time Division-Code Division Multiple Access (TD-CDMA), Time Division-Synchronous Code Division Multiple Access (TD-SCDMA), and the like), Generic Access Network (GAN) / Unlicensed Mobile Access (UMA), High Speed Packet Access (HSPA) and variants thereof (e.g., HSPA Plus (HSPA+)), Long Term Evolution (LTE) and variants thereof (e.g., LTE-Advanced (LTE-A), Evolved UTRA (E-UTRA), LTE Extra, LTE-A Pro, LTE LAA, MuLTEfire, and the like), Fifth Generation (5G) or New Radio (NR), narrowband IoT (NB-IOT), 3GPP Proximity Services (ProSe), and/or the like); ETSI RATs (e.g., High Performance Radio Metropolitan Area Network (HiperMAN), Intelligent Transport Systems (ITS) (e.g., ITS-G5, ITS-G5B, ITS-G5C, and the like), and the like); Institute of Electrical and Electronics Engineers (IEEE) technologies and/or WiFi (e.g., IEEE Standard for Local and Metropolitan Area Networks: Overview and Architecture, IEEE Std 802-2014, pp.1-74 (30 Jun. 2014) ("[IEEE802]"), IEEE Standard for Information Technology-Telecommunications and Information Exchange between Systems - Local and Metropolitan Area Networks--Specific Requirements - Part 11: Wireless LAN Medium Access Control (MAC) and Physical Layer (PHY) Specifications, IEEE Std 802.11-2020, pp.1-4379 (26 Feb. 2021) ("[IEEE80211]"), IEEE 802.15 technologies (*e.g.*, IEEE Standardfor Low-Rate Wireless Networks, IEEE Std 802.15.4-2020, pp.1-800 (23 July 2020) ("[IEEE802154]") and variants thereof (e.g., ZigBee, WirelessHART, MiWi, ISA100.1 1a, Thread, IPv6 over Low power WPAN (6LoWPAN), and the like), IEEE Standard for Local and metropolitan area networks - Part 15.6: Wireless Body Area Networks, IEEE Std 802.15.6-2012, pp. 1-271 (29 Feb. 2012), and the like), WLAN V2X RATs (e.g., IEEE Standard for Information technology-- Local and metropolitan area networks-- Specific requirements-- Part 11: Wireless LAN Medium Access Control (MAC) and Physical Layer (PHY) Specifications Amendment 6: Wireless Access in Vehicular Environments, IEEE Std 802.11p-2010, pp.1-51 (15 July 2010) ("[IEEE80211p]") (which is now part of [IEEE80211]), IEEE Guide for Wireless Access in Vehicular Environments (WAVE) Architecture, IEEE STANDARDS ASSOCIATION, IEEE 1609.0-2019 (10 Apr. 2019) ("[IEEE16090]"), IEEE 802.11bd, Dedicated Short Range Communications (DSRC), and/or the like), Worldwide Interoperability for Microwave Access (WiMAX) (e.g., IEEE Standard for Air Interface for Broadband Wireless Access Systems, IEEE Std 802.16-2017, pp.1-2726 (02 Mar. 2018) ("[WiMAX]")), Mobile Broadband Wireless Access (MBWA)/iBurst (e.g., IEEE 802.20 and variants thereof), Wireless Gigabit Alliance (WiGig) standards (e.g., IEEE 80211ad, IEEE 802.11ay, and the like), and so forth); Integrated Digital Enhanced Network (iDEN) and variants thereof (e.g., Wideband Integrated Digital Enhanced Network (WiDEN)); millimeter wave (mmWave) technologies/standards (e.g., wireless systems operating at 10-300 GHz and above 3GPP 5G); short-range and/or wireless personal area network (WPAN) technologies/standards (e.g., IEEE 802.15 technologies (e.g., as mentioned previously); Bluetooth and variants thereof (e.g., Bluetooth 5.3, Bluetooth Low Energy (BLE), and the like), WiFi-direct, Miracast, ANT/ANT+, Z-Wave, Universal Plug and Play (UPnP), low power Wide Area Networks (LPWANs), Long Range Wide Area Network (LoRA or LoRaWAN^{™}), and the like); optical and/or visible light communication (VLC) technologies/standards (*e.g.*, IEEE Standard for Local and metropolitan area networks--Part 15. 7: Short-Range Optical Wireless Communications, IEEE Std 802.15.7-2018, pp.1-407 (23 Apr. 2019), and the like); Sigfox; Mobitex; 3GPP2 technologies (e.g., cdmaOne (2G), Code Division Multiple Access 2000 (CDMA 2000), and Evolution-Data Optimized or Evolution-Data Only (EV-DO); Push-to-talk (PTT), Mobile Telephone System (MTS) and variants thereof (e.g., Improved MTS (IMTS), Advanced MTS (AMTS), and the like); Personal Digital Cellular (PDC); Personal Handy-phone System (PHS), Cellular Digital Packet Data (CDPD); Cellular Digital Packet Data (CDPD); DataTAC; Digital Enhanced Cordless Telecommunications (DECT) and variants thereof (e.g., DECT Ultra Low Energy (DECT ULE), DECT-2020, DECT-5G, and the like); Ultra High Frequency (UHF) communication; Very High Frequency (VHF) communication; and/or any other suitable RAT or protocol. In addition to the aforementioned RATs/standards, any number of satellite uplink technologies may be used for purposes of the present disclosure including, for example, radios compliant with standards issued by the International Telecommunication Union (ITU), or the ETSI, among others. The examples provided herein are thus understood as being applicable to various other communication technologies, both existing and not yet formulated.

The term "Ethernet" at least in some examples refers to a term that is used to refer either to the IEEE 802.3 media access method or to the frame format discussed in [IEEE8023].

The term "V2X" at least in some examples refers to vehicle to vehicle (V2V), vehicle to infrastructure (V2I), infrastructure to vehicle (I2V), vehicle to network (V2N), and/or network to vehicle (N2V) communications and associated radio access technologies.

The term "channel" at least in some examples refers to any transmission medium, either tangible or intangible, which is used to communicate data or a data stream. The term "channel" may be synonymous with and/or equivalent to "communications channel," "data communications channel," "transmission channel," "data transmission channel," "access channel," "data access channel," "link," "data link," "carrier," "radiofrequency carrier," and/or any other like term denoting a pathway or medium through which data is communicated. Additionally, the term "link" at least in some examples refers to a connection between two devices through a RAT for the purpose of transmitting and receiving information.

The term "carrier" at least in some examples refers to a modulated waveform conveying one or more physical channels (e.g., 5G/NR, E-UTRA, UTRA, and/or GSM/EDGE physical channels). The term "carrier frequency" at least in some examples refers to the center frequency of a cell.

The term "bearer" at least in some examples refers to a information transmission path of defined capacity, delay, bit error rate, and/or the like. The term "radio bearer" at least in some examples refers to the service provided by Layer 2 (L2) for transfer of user data between user equipment (UE) and a radio access network (RAN). The term "radio access bearer" at least in some examples refers to the service that the access stratum provides to the non-access stratum for transfer of user data between a UE and a CN.

The terms "beamforming" and "beam steering" at least in some examples refer to a spatial filtering mechanism used at a transmitter (Tx) to improve the received signal power, signal-to-noise ratio (SNR), or some other signalling metric at an intended receiver (Rx). The term "beamformer" at least in some examples refers to a STA that transmits a physical layer PDU (PPDU) using a beamforming steering matrix. The term "beamforming steering matrix" at least in some examples refers to a matrix determined using knowledge of the channel between a Tx and an intended Rx that maps from space-time streams to transmit antennas with the goal of improving the signal power, SNR, and/or some other signalling metric at the intended Rx.

The term "subframe" at least in some examples at least in some examples refers to a time interval during which a signal is signaled. In some implementations, a subframe is equal to 1 millisecond (ms). The term "time slot" at least in some examples at least in some examples refers to an integer multiple of consecutive subframes. The term "superframe" at least in some examples at least in some examples refers to a time interval comprising two time slots.

The term "interoperability" at least in some examples refers to the ability of STAs utilizing one communication system or RAT to communicate with other STAs utilizing another communication system or RAT. The term "Coexistence" at least in some examples refers to sharing or allocating radiofrequency resources among STAs using either communication system or RAT.

The term "reliability" at least in some examples refers to the ability of a computer-related component (e.g., software, hardware, or network element/entity) to consistently perform a desired function and/or operate according to a specification. Reliability in the context of network communications (e.g., "network reliability") at least in some examples refers to the ability of a network to carry out communication. The term "network reliability" at least in some examples refers to a probability or measure of delivering a specified amount of data from a source to a destination (or sink).

The term "local area network" or "LAN" at least in some examples refers to a network of devices, whether indoors or outdoors, covering a limited area or a relatively small geographic area (e.g., within a building or a campus). The term "wireless local area network", "wireless LAN", or "WLAN" at least in some examples refers to a LAN that involves wireless communications.

The term "wide area network" or "WAN" at least in some examples refers to a network of devices that extends over a relatively large geographic area (e.g., a telecommunications network). Additionally or alternatively, the term "wide area network" or "WAN" at least in some examples refers to a computer network spanning regions, countries, or even an entire planet.

The term "backbone network", "backbone", or "core network" at least in some examples refers to a computer network which interconnects networks, providing a path for the exchange of information between different subnetworks such as LANs or WANs.

The term "interworking" at least in some examples refers to the use of interconnected stations in a network for the exchange of data, by means of protocols operating over one or more underlying data transmission paths.

The term "flow" at least in some examples refers to a sequence of data and/or data units (e.g., datagrams, packets, or the like) from a source entity/element to a destination entity/element. Additionally or alternatively, the terms "flow" or "traffic flow" at least in some examples refer to an artificial and/or logical equivalent to a call, connection, or link. Additionally or alternatively, the terms "flow" or "traffic flow" at least in some examples refer to a sequence of packets sent from a particular source to a particular unicast, anycast, or multicast destination that the source desires to label as a flow; from an upper-layer viewpoint, a flow may include of all packets in a specific transport connection or a media stream, however, a flow is not necessarily 1:1 mapped to a transport connection. Additionally or alternatively, the terms "flow" or "traffic flow" at least in some examples refer to a set of data and/or data units (e.g., datagrams, packets, or the like) passing an observation point in a network during a certain time interval. Additionally or alternatively, the term "flow" at least in some examples refers to a user plane data link that is attached to an association. Examples are circuit switched phone call, voice over IP call, reception of an SMS, sending of a contact card, PDP context for internet access, demultiplexing a TV channel from a channel multiplex, calculation of position coordinates from geopositioning satellite signals, and the like. For purposes of the present disclosure, the terms "traffic flow", "data flow", "dataflow", "packet flow", "network flow", and/or "flow" may be used interchangeably even though these terms at least in some examples refers to different concepts.

The term "dataflow" or "data flow" at least in some examples refers to the movement of data through a system including software elements, hardware elements, or a combination of both software and hardware elements. Additionally or alternatively, the term "dataflow" or "data flow" at least in some examples refers to a path taken by a set of data from an origination or source to destination that includes all nodes through which the set of data travels.

The term "stream" or "data stream" at least in some examples refers to a sequence of data elements made available over time. Additionally or alternatively, the term "stream", "data stream", or "streaming" refers to a unidirectional flow of data. Additionally or alternatively, the term "stream", "data stream", or "streaming" refers to a manner of processing in which an object is not represented by a complete data structure of nodes occupying memory proportional to a size of that object, but are processed "on the fly" as a sequence of events. At least in some examples, functions that operate on a stream, which may produce another stream, are referred to as "filters," and can be connected in pipelines, analogously to function composition; filters may operate on one item of a stream at a time, or may base an item of output on multiple input items, such as a moving average or the like.

The term "distributed computing" at least in some examples refers to computation resources that are geographically distributed within the vicinity of one or more localized networks' terminations. The term "distributed computations" at least in some examples refers to a model in which components located on networked computers communicate and coordinate their actions by passing messages interacting with each other in order to achieve a common goal.

The term "service" at least in some examples refers to the provision of a discrete function within a system and/or environment. Additionally or alternatively, the term "service" at least in some examples refers to a functionality or a set of functionalities that can be reused. The term "microservice" at least in some examples refers to one or more processes that communicate over a network to fulfil a goal using technology-agnostic protocols (e.g., HTTP or the like). Additionally or alternatively, the term "microservice" at least in some examples refers to services that are relatively small in size, messaging-enabled, bounded by contexts, autonomously developed, independently deployable, decentralized, and/or built and released with automated processes. Additionally or alternatively, the term "microservice" at least in some examples refers to a self-contained piece of functionality with clear interfaces, and may implement a layered architecture through its own internal components. Additionally or alternatively, the term "microservice architecture" at least in some examples refers to a variant of the service-oriented architecture (SOA) structural style wherein applications are arranged as a collection of loosely-coupled services (e.g., fine-grained services) and may use lightweight protocols. The term "network service" at least in some examples refers to a composition of Network Function(s) and/or Network Service(s), defined by its functional and behavioural specification.

The term "session" at least in some examples refers to a temporary and interactive information interchange between two or more communicating devices, two or more application instances, between a computer and user, and/or between any two or more entities or elements. Additionally or alternatively, the term "session" at least in some examples refers to a connectivity service or other service that provides or enables the exchange of data between two entities or elements. The term "network session" at least in some examples refers to a session between two or more communicating devices over a network. The term "web session" at least in some examples refers to session between two or more communicating devices over the Internet or some other network. The term "session identifier," "session ID," or "session token" at least in some examples refers to a piece of data that is used in network communications to identify a session and/or a series of message exchanges.

The term "quality" at least in some examples refers to a property, character, attribute, or feature of something as being affirmative or negative, and/or a degree of excellence of something. Additionally or alternatively, the term "quality" at least in some examples, in the context of data processing, refers to a state of qualitative and/or quantitative aspects of data, processes, and/or some other aspects of data processing systems.

The term "Quality of Service" or "QoS' at least in some examples refers to a description or measurement of the overall performance of a service (e.g., telephony and/or cellular service, network service, wireless communication/connectivity service, cloud computing service, and the like). In some cases, the QoS may be described or measured from the perspective of the users of that service, and as such, QoS may be the collective effect of service performance that determine the degree of satisfaction of a user of that service. In other cases, QoS at least in some examples refers to traffic prioritization and resource reservation control mechanisms rather than the achieved perception of service quality. In these cases, QoS is the ability to provide different priorities to different applications, users, or flows, or to guarantee a certain level of performance to a flow. In either case, QoS is characterized by the combined aspects of performance factors applicable to one or more services such as, for example, service operability performance, service accessibility performance; service retain ability performance; service reliability performance, service integrity performance, and other factors specific to each service. Several related aspects of the service may be considered when quantifying the QoS, including packet loss rates, bit rates, throughput, transmission delay, availability, reliability, jitter, signal strength and/or quality measurements, and/or other measurements such as those discussed herein. Additionally or alternatively, the term "Quality of Service" or "QoS' at least in some examples refers to mechanisms that provide traffic-forwarding treatment based on flow-specific traffic classification. In some examples, Additionally or alternatively, the term "Quality of Service" or "QoS' at least in some examples is based on the definitions provided by *SERIES E: OVERALL NETWORK OPERATION, TELEPHONE SERVICE, SERVICE OPERATION AND HUMAN FACTORS Quality of telecommunication services: concepts, models, objectives and dependability planning - Terms and definitions related to the quality of telecommunication services, Definitions of terms related to quality of service,* ITU-T Recommendation E.800 (09/2008) ("[ITUE800]"), the contents of which is hereby incorporated by reference in its entirety. Additionally or alternatively, the term "Quality of Service" or "QoS' at least in some examples refers to the collective effect of service performances which determine the degree of satisfaction of a user of a service. In some examples, QoS is characterised by the combined aspects of performance factors applicable to all services, such as service operability performance; service accessibility performance; service retainability performance; service integrity performance; and/or other factors specific to each service. In some implementations, the term "Quality of Service" or "QoS" can be used interchangeably with the term "Class of Service" or "CoS". The term "Class of Service" or "CoS' at least in some examples refers to mechanisms that provide traffic-forwarding treatment based on non-flow-specific traffic classification. In some implementations, the term "Class of Service" or "CoS" can be used interchangeably with the term "Quality of Service" or "QoS".

The term "QoS flow" at least in some examples refers to the finest granularity for QoS forwarding treatment in a network. The term "5G QoS flow' at least in some examples refers to the finest granularity for QoS forwarding treatment in a 5G System (5GS). Traffic mapped to the same QoS flow (or 5G QoS flow) receive the same forwarding treatment. The term "QoS Identifier" at least in some examples refers to a scalar that is used as a reference to a specific QoS forwarding behavior (e.g., packet loss rate, packet delay budget, and the like) to be provided to a QoS flow. This may be implemented in an access network by referencing node specific parameters that control the QoS forwarding treatment (e.g., scheduling weights, admission thresholds, queue management thresholds, link layer protocol configuration, and the like). The term "QoS profile" at least in some examples refers to a QoS profile comprises a number of QoS parameters. A QoS profile is associated with each QoS session. The QoS profile defines the performance expectations placed on the bearer network. The term "QoS session" at least in some examples refers to a lifetime of PDP context. Additionally or alternatively, the term "QoS session" at least in some examples refers to a period between the opening and closing of a network connection whose characteristics are defined by a QoS profile. In some examples, multiple QoS sessions may exist, each with a different QoS profile.

The term "reliability flow" at least in some examples refers to the finest granularity for reliability forwarding treatment in a network, where traffic mapped to the same reliability flow receive the same reliability treatment. Additionally or alternatively, the term "reliability flow" at least in some examples refers to the a reliability treatment assigned to packets of a dataflow

The term "reliability forwarding treatment" or "reliability treatment" refers to the manner in which packets belonging to a dataflow are handled to provide a certain level of reliability to that dataflow including, for example, a probability of success of packet delivery, QoS or Quality of Experience (QoE) over a period of time (or unit of time), admission control capabilities, a particular coding scheme, and/or coding rate for arrival data bursts.

The term "packet routing" or "routing" at least in some examples refers to a mechanism, technique, algorithm, method, and/or process of selecting a path for traffic in a network and/or between or across multiple networks. Additionally or alternatively, the term "packet routing" or "routing" at least in some examples refers to packet forwarding mechanisms, techniques, algorithms, methods, and/or decision making processes that direct(s) network/data packets from a source node toward a destination node through a set of intermediate nodes. Additionally or alternatively, the term "packet routing" or "routing" at least in some examples refers to a mechanism, technique, algorithm, method, and/or process of selecting a network path for traffic in a network and/or across multiple networks.

The term "path selection" at least in some examples refers to a mechanism, technique, algorithm, method, and/or process to select a network path over which one or more packets are to be routed. Additionally or alternatively, the term "path selection" at least in some examples refers to a mechanism, technique, or process for applying a routing metric to a set of routes or network paths to select and/or predict a most optimal route or network path among the set of routes/network paths. In some examples, the term "routing algorithm" refers to an algorithm that is used to perform path selection.

The term "routing protocol" at least in some examples refers to a mechanism, technique, algorithm, method, and/or process that specifies how routers and/or other network nodes communicate with each other to distribute information. Additionally or alternatively, the term "routing protocol" at least in some examples refers to mechanism, technique, method, and/or process to select routes between nodes in a computer network.

The term "routing metric" or "router metric" at least in some examples refers to a configuration value used by a router or other network node to make routing and/or forwarding decisions. In some examples, a "routing metric" or "router metric" can be a field in a routing table. Additionally or alternatively, a "routing metric" or "router metric" is computed by a routing algorithm, and can include various types of data/information and/or metrics such as, for example, bandwidth, delay, hop count, path cost, load, MTU size, reliability, communication costs, and/or any other measurements or metrics such as any of those discussed herein.

The term "interior gateway protocol" or "IGP" at least in some examples refers to a type of routing protocol used to exchange routing table information between gateways, routers, and/or other network nodes within an autonomous system, wherein the routing information can be used to route network layer packets (e.g., IP and/or the like). Examples of IGPs include distance-vector routing protocols (e.g., Routing Information Protocol (RIP), RIP version 2 (RIPv2), RIP next generation (RIPng), Interior Gateway Routing Protocol (IGRP), and the like), advanced distance-vector routing protocols (e.g., Enhanced Interior Gateway Routing Protocol (EIGRP)), and link-state routing protocols (e.g., Open Shortest Path First (OSPF), Intermediate System to Intermediate System (IS-IS), and the like).

The term "exterior gateway protocol" or "EGP" at least in some examples refers to a type of routing protocol used to exchange routing information between autonomous systems. In some examples, EGPs rely on IGPs to resolve routes within an autonomous system. Examples of EGPs include Exterior Gateway Protocol (EGP) and Border Gateway Protocol (BGP).

The term "forwarding treatment" at least in some examples refers to the precedence, preferences, and/or prioritization a packet belonging to a particular dataflow receives in relation to other traffic of other dataflows. Additionally or alternatively, the term "forwarding treatment" at least in some examples refers to one or more parameters, characteristics, and/or configurations to be applied to packets belonging to a dataflow when processing the packets for forwarding. Examples of such characteristics may include resource type (e.g., non-guaranteed bit rate (GBR), GBR, delay-critical GBR, and the like); priority level; class or classification; packet delay budget; packet error rate; averaging window; maximum data burst volume; minimum data burst volume; scheduling policy/weights; queue management policy; rate shaping policy; link layer protocol and/or RLC configuration; admission thresholds; and the like. In some implementations, the term "forwarding treatment" may be referred to as "Per-Hop Behavior" or "PHB".

The term "routing table", "Routing Information Base", or "RIB" at least in some examples refers to a table or other data structure in a router or other network node that lists the routes to one or more network nodes (e.g., destination nodes), and may include metrics (e.g., distances and/or the like) associated with respective routes. In some examples, a routing table contains information about the topology of the network immediately around a network node.

The term "forwarding table", "Forwarding Information Base", or "FIB" at least in some examples refers to a table or other data structure that indicates where a network node (or network interface circuitry) should forward a packet. Additionally or alternatively, the term "forwarding table", "Forwarding Information Base", or "FIB" at least in some examples refers to a dynamic table or other data structure that maps network addresses (e.g., MAC addresses and/or the like) to ports. Additionally or alternatively, the term "forwarding table", "Forwarding Information Base", or "FIB" at least in some examples refers to a table containing the information necessary to forward datagrams (e.g., IP datagrams and/or the like). In some examples, at minimum, an FIB contains an interface identifier and next hop information for each reachable destination network prefix. In some examples, the components within a forwarding information base entry include a network prefix, a router port identifier, and next hop information.

The term "time to live" (or "TTL") or "hop limit" at least in some examples refers to a mechanism which limits the lifespan or lifetime of data in a computer or network. TTL may be implemented as a counter or timestamp attached to or embedded in the data. Once the prescribed event count or timespan has elapsed, data is discarded or revalidated.

The term "queue" at least in some examples refers to a collection of entities (e.g., data, objects, events, and the like) are stored and held to be processed later. that are maintained in a sequence and can be modified by the addition of entities at one end of the sequence and the removal of entities from the other end of the sequence; the end of the sequence at which elements are added may be referred to as the "back", "tail", or "rear" of the queue, and the end at which elements are removed may be referred to as the "head" or "front" of the queue. Additionally, a queue may perform the function of a buffer, and the terms "queue" and "buffer" may be used interchangeably throughout the present disclosure. The term "enqueue" at least in some examples refers to one or more operations of adding an element to the rear of a queue. The term "dequeue" at least in some examples refers to one or more operations of removing an element from the front of a queue.

The term "queue management" at least in some examples refers to a system, mechanism, policy, process, algorithm, or technique used to control one or more queues. The term "Active Queue Management" or "AQM" at least in some examples refers to a system, mechanism, policy, process, algorithm, or technique of dropping packets in a queue or buffer before the queue or buffer becomes full. The term "AQM entity" as used herein may refer to a network scheduler, a convergence layer entity, a network appliance, network function, and/or some other like entity that performs/executes AQM tasks.

The term "queue management technique" at least in some examples refers to a particular queue management system, mechanism, policy, process, and/or algorithm, which may include a "drop policy". The term "active queue management technique" or "AQM technique" at least in some examples refers to a particular AQM system, mechanism, policy, process, and/or algorithm.

The term "drop policy" at least in some examples refers to a set of guidelines or rules used by a queue management technique or ARM technique to determine when to discard, remove, delete, or otherwise drop data or packets from a queue or buffer or data or packets arriving for storage in a queue or buffer.

The term "data buffer" or "buffer" at least in some examples refers to a region of a physical or virtual memory used to temporarily store data, for example, when data is being moved from one storage location or memory space to another storage location or memory space, data being moved between processes within a computer, allowing for timing corrections made to a data stream, reordering received data packets, delaying the transmission of data packets, and the like. At least in some examples, a "data buffer" or "buffer" may implement a queue. The term "circular buffer", "circular queue", "cyclic buffer", or "ring buffer" at least in some examples refers to a data structure that uses a single fixed-size buffer or other area of memory as if it were connected end-to-end or as if it has a circular or elliptical shape.

The term "piggyback" or "piggybacking", in the context of computer communications and/or networking, refers to attaching, appending, or hooking a first data unit to a second data unit that is to be transmitted next or sometime before the first data unit; in this way, the first data unit gets a "free ride" in the data packet or frame carrying the second data unit.

The term "channel coding" at least in some examples refers to processes and/or techniques to add redundancy to messages or packets in order to make those messages or packets more robust against noise, channel interference, limited channel bandwidth, and/or other errors. For purposes of the present disclosure, the term "channel coding" can be used interchangeably with the terms "forward error correction" or "FEC"; "error correction coding", "error correction code", or "ECC"; and/or "network coding" or "NC". The term "network coding" at least in some examples refers to processes and/or techniques in which transmitted data is encoded and decoded to improve network performance. The term "code rate" at least in some examples refers to the proportion of a data stream or flow that is useful or non-redundant (e.g., for a code rate of k/n, for every k bits of useful information, the (en)coder generates a total of n bits of data, of which n - k are redundant). The term "systematic code" at least in some examples refers to any error correction code in which the input data is embedded in the encoded output. The term "non-systematic code" at least in some examples refers to any error correction code in which the input data is not embedded in the encoded output. The term "interleaving" at least in some examples refers to a process to rearrange code symbols so as to spread bursts of errors over multiple codewords that can be corrected by ECCs. The term "code word" or "codeword" at least in some examples refers to an element of a code or protocol, which is assembled in accordance with specific rules of the code or protocol.

The term "network path" or "path" at least in some examples refers to a data communications feature of a communication system describing the sequence and identity of system components visited by one or more packets, where the components of the path may be either logical or physical. The term "network forwarding path" at least in some examples refers to an ordered list of connection points forming a chain ofNFs and/or nodes, along with policies associated to the list.

The term "PDU Connectivity Service" at least in some examples refers to a service that provides exchange of protocol data units (PDUs) between a UE and a data network (DN). The term "PDU Session" at least in some examples refers to an association between a UE and a DN that provides a PDU connectivity service (see e.g., 3GPP TS 38.415 v17.0.0 (2022-04-06) ("[TS38415]") and 3GPP TS 38.413 v17.4.0 (2023-04-03) ("[TS38413]"), the contents of each of which are hereby incorporated by reference in their entireties); a PDU Session type can be IPv4, IPv6 (see e.g., Deering et al, Internet Protocol, Version 6 (IPv6), IETF RFC 8200 (Jul. 2017) ("[RFC8200]"), the contents of which is hereby incorporated by reference in its entirety), IPv4v6, Ethernet), Unstructured, or any other network/connection type, such as those discussed herein. The term "PDU Session Resource" at least in some examples refers to an NG-RAN interface (e.g., NG, Xn, and/or E1 interfaces) and radio resources provided to support a PDU Session. The term "multi-access PDU session" or "MA PDU Session" at least in some examples refers to a PDU Session that provides a PDU connectivity service, which can use one access network at a time or multiple access networks simultaneously.

The term "traffic shaping" at least in some examples refers to a bandwidth management technique that manages data transmission to comply with a desired traffic profile or class of service. Traffic shaping ensures sufficient network bandwidth for time-sensitive, critical applications using policy rules, data classification, queuing, QoS, and other techniques. The term "throttling" at least in some examples refers to the regulation of flows into or out of a network, or into or out of a specific device or element. The term "access traffic steering" or "traffic steering" at least in some examples refers to a procedure that selects an access network for a new data flow and transfers the traffic of one or more data flows over the selected access network. Access traffic steering is applicable between one 3GPP access and one non-3GPP access. The term "access traffic switching" or "traffic switching" at least in some examples refers to a procedure that moves some or all traffic of an ongoing data flow from at least one access network to at least one other access network in a way that maintains the continuity of the data flow. The term "access traffic splitting" or "traffic splitting" at least in some examples refers to a procedure that splits the traffic of at least one data flow across multiple access networks. When traffic splitting is applied to a data flow, some traffic of the data flow is transferred via at least one access channel, link, or path, and some other traffic of the same data flow is transferred via another access channel, link, or path.

The term "network address" at least in some examples refers to an identifier for a node or host in a computer network, and may be a unique identifier across a network and/or may be unique to a locally administered portion of the network. Examples of identifiers and/or network addresses can include am application identifier, Bluetooth hardware device address (BD ADDR), a cellular network address (e.g., Absolute Radio-Frequency Channel Number (ARFCN), Access Point Name (APN), AMF name and/or AMF identifier (ID), AF-Service-Identifier, Cell Global Identifier (CGI) (e.g., NR CGI (NCGI), CGI NG-RAN, CGI EUTRA, and/or the like), Closed Access Group Identifier (CAG-ID), Edge Application Server (EAS) ID, Data Network Access Identifier (DNAI), Data Network Name (DNN), Evolved Cell Global Identifier (ECGI), EPS Bearer Identity (EBI), Equipment Identity Register (EIR) and/or 5G-EIR, Extended Unique Identifier (EUI), Group ID for Network Selection (GIN), Generic Public Subscription Identifier (GPSI), Globally Unique AMF Identifier (GUAMI), Globally Unique Temporary Identifier (GUTI) and/or 5G-GUTI, gNB Identifier (gNB ID), Global gNB ID, International Mobile Equipment Identity (IMEI), IMEI Type Allocation Code (IMEA/TAC), International Mobile Subscriber Identity (IMSI), IMSI software version (IMSISV), permanent equipment identifier (PEI), Local Area Data Network (LADN) DNN, Local NG-RAN Node Identifier, Mobile Subscriber Identification Number (MSIN), Mobile Subscriber/Station ISDN Number (MSISDN), Network identifier (NID), Network Slice Instance (NSI) ID, Network Slice AS Group (NSAG), Permanent Equipment Identifier (PEI), Public Land Mobile Network (PLMN) identity (ID), Physical Cell Identifier (PCI), QoS Flow ID (QFI) and/or 5G QoS Identifier (5QI), RAN ID, Routing Indicator, Radio Network Temporary Identifier (RNTI) and variants thereof (e.g., any of those discussed in clause 8 of 3GPP TS 38.300 v17.4.0 (2023-03-28) ("[TS38300]")), SMS Function (SMSF) ID, Stand-alone Non-Public Network (SNPN) ID, Single Network Slice Selection Assistance information (S-NSSAI), sidelink identities (e.g., Source Layer-2 ID, Destination Layer-2 ID, PC5 Link Identifier, and the like), Subscription Concealed Identifier (SUCI), Subscription Permanent Identifier (SUPI), Temporary Mobile Subscriber Identity (TMSI) and variants thereof, Tracking Area identity (TAI), UE Access Category and Identity, and/or other cellular network related identifiers), CAG-ID, drivers license number, Global Trade Item Number (GTIN) (e.g., Australian Product Number (APN), EPC, European Article Number (EAN), Universal Product Code (UPC), and the like), email address, Enterprise Application Server (EAS) ID, an endpoint address, an Electronic Product Code (EPC) as defined by the EPCglobal Tag Data Standard, Fully Qualified Domain Name (FQDN), flow ID and/or flow hash, hash value, index, internet protocol (IP) address in an IP network (e.g., IP version 4 (IPv4), IP version 6 (IPv6), and the like), an internet packet exchange (IPX) address, LAN ID, a MAC address, personal area network (PAN) ID, port number (e.g., TCP port number, UDP port number, and the like), price lookup code (PLC), product key, QUIC connection ID, RFID tag, sequence number, service set identifier (SSID) and variants thereof, screen name, serial number, stock keeping unit (SKU), socket address, social security number (SSN), telephone number (e.g., in a public switched telephone network (PTSN)), unique identifier (UID) (e.g., including globally UID, universally unique identifier (UUID) (e.g., as specified in ISO/IEC 11578:1996), and the like), a Universal Resource Locator (URL) and/or Universal Resource Identifier (URI), user name (e.g., ID for logging into a service provider platform, such as a social network and/or some other service), vehicle identification number (VIN), Virtual LAN (VLAN) ID, X.21 address, an X.25 address, Zigbee^{®} ID, Zigbee^{®} Device Network ID, and/or any other suitable network address and components thereof.

The term "universally unique identifier" or "UUID" at least in some examples refers to a number used to identify information in computer systems. In some examples, a UUID includes 128-bit numbers and/or are represented as 32 hexadecimal digits displayed in five groups separated by hyphens in the following format: "xxxxxxxx-xxxx-Mxxx-Nxxx-xxxxxxxxxxxx" where the four-bit M and the 1 to 3 bit N fields code the format of the UUID itself. Additionally or alternatively, the term "universally unique identifier" or "UUID" at least in some examples refers to a "globally unique identifier" and/or a "GUID". The term "endpoint address" at least in some examples refers to an address used to determine the host/authority part of a target URI, where the target URI is used to access an NF service (e.g., to invoke service operations) of an NF service producer or for notifications to an NF service consumer.

The term "port" in the context of computer networks, at least in some examples refers to a communication endpoint, a virtual data connection between two or more entities, and/or a virtual point where network connections start and end. Additionally or alternatively, a "port" at least in some examples is associated with a specific process or service. Additionally or alternatively, the term "port" at least in some examples refers to a particular interface of the specified equipment (apparatus) with an electromagnetic environment (e.g., any connection point on an equipment intended for connection of cables to or from that equipment is considered as a port).

The term "subnetwork" or "subnet" at least in some examples refers to a logical subdivision of a network, such as an IP network. The practice of dividing a network into two or more networks is called "subnetting."

The term "delay" at least in some examples refers to a time interval between two events. Additionally or alternatively, the term "delay" at least in some examples refers to a time interval between the propagation of a signal and its reception. The term "delay bound" at least in some examples refers to a predetermined or configured amount of acceptable delay. The term "per-packet delay bound" at least in some examples refers to a predetermined or configured amount of acceptable packet delay where packets that are not processed and/or transmitted within the delay bound are considered to be delivery failures and are discarded or dropped. The term "goodput" at least in some examples refers to a number of useful information bits delivered by the network to a certain destination per unit of time. The term "jitter" at least in some examples refers to a deviation from a predefined ("true") periodicity of a presumably periodic signal in relation to a reference clock signal. The term "latency" at least in some examples refers to the amount of time it takes to transfer a first/initial data unit in a data burst from one point to another. Additionally or alternatively, the term "latency" at least in some examples refers to the delay experienced by a data unit (e.g., frame) in the course of its propagation between two points in a network, measured from the time that a known reference point in the frame passes the first point to the time that the reference point in the data unit passes the second point. The term "network delay" at least in some examples refers to the delay of an a data unit within a network (e.g., an IP packet within an IP network). The term "packet delay" at least in some examples refers to the time it takes to transfer any packet from one point to another. Additionally or alternatively, the term "packet delay" or "per packet delay" at least in some examples refers to the difference between a packet reception time and packet transmission time. Additionally or alternatively, the "packet delay" or "per packet delay" can be measured by subtracting the packet sending time from the packet receiving time where the transmitter and receiver are at least somewhat synchronized. The term "packet drop rate" at least in some examples refers to a share of packets that were not sent to the target due to high traffic load or traffic management and should be seen as a part of the packet loss rate. The term "packet loss rate" at least in some examples refers to a share of packets that could not be received by the target, including packets droped, packets lost in transmission and packets received in wrong format. The term "performance indicator" at least in some examples refers to performance data aggregated over a group of network functions (NFs), which is derived from performance measurements collected at the NFs that belong to the group, according to the aggregation method identified in a Performance Indicator definition. The term "physical rate" or "PHY rate" at least in some examples refers to a speed at which one or more bits are actually sent over a transmission medium. Additionally or alternatively, the term "physical rate" or "PHY rate" at least in some examples refers to a speed at which data can move across a wireless link between a transmitter and a receiver. The term "processing delay" at least in some examples refers to an amount of time taken to process a packet in a network node. The term "propagation delay" at least in some examples refers to amount of time it takes a signal's header to travel from a sender to a receiver. The term "queuing delay" at least in some examples refers to an amount of time a job waits in a queue until that job can be executed. Additionally or alternatively, the term "queuing delay" at least in some examples refers to an amount of time a packet waits in a queue until it can be processed and/or transmitted. The term "throughput" or "network throughput" at least in some examples refers to a rate of production or the rate at which something is processed. Additionally or alternatively, the term "throughput" or "network throughput" at least in some examples refers to a rate of successful message (date) delivery over a communication channel. The term "transmission delay" at least in some examples refers to an amount of time needed (or necessary) to push a packet (or all bits of a packet) into a transmission medium.

The term "application" or "app" at least in some examples refers to a computer program designed to carry out a specific task other than one relating to the operation of the computer itself. Additionally or alternatively, term "application" or "app" at least in some examples refers to a complete and deployable package, environment to achieve a certain function in an operational environment.

The term "process" at least in some examples refers to an instance of a computer program that is being executed by one or more threads. In some implementations, a process may be made up of multiple threads of execution that execute instructions concurrently.

The term "algorithm" at least in some examples refers to an unambiguous specification of how to solve a problem or a class of problems by performing calculations, input/output operations, data processing, automated reasoning tasks, and/or the like.

The term "analytics" at least in some examples refers to the discovery, interpretation, and communication of meaningful patterns in data.

The term "application programming interface" or "API" at least in some examples refers to a set of subroutine definitions, communication protocols, and tools for building software. Additionally or alternatively, the term "application programming interface" or "API" at least in some examples refers to a set of clearly defined methods of communication among various components. In some examples, an API may be defined or otherwise used for a web-based system, operating system, database system, computer hardware, software library, and/or the like.

The terms "instantiate," "instantiation," and the like at least in some examples refers to the creation of an instance. In some examples, an "instance" also at least in some examples refers to a concrete occurrence of an object, which may occur, for example, during execution of program code.

The term "reference point" at least in some examples refers to a conceptual point at the conjunction of two nonoverlapping functional groups, elements, or entities.

The term "reference" at least in some examples refers to data useable to locate other data and may be implemented a variety of ways (e.g., a pointer, an index, a handle, a key, an identifier, a hyperlink, and/or the like).

The term "use case" at least in some examples refers to a description of a system from a user's perspective. Use cases sometimes treat a system as a black box, and the interactions with the system, including system responses, are perceived as from outside the system. In some examples, use cases avoid technical jargon, preferring instead the language of the end user or domain expert. The term "user" at least in some examples refers to an abstract representation of any entity issuing commands, requests, and/or data to a compute node or system, and/or otherwise consumes or uses services. Additionally or alternative, the term "user" at least in some examples refers to an entity, not part of a 3GPP system, which uses 3GPP system services (e.g., a person using a 3GPP system mobile station as a portable telephone). The term "user profile" at least in some examples refers to a set of information used to provide a user with a consistent, personalised service environment, irrespective of the user's location or the terminal used (within the limitations of the terminal and the serving network).

The terms "configuration", "policy", "ruleset", and/or "operational parameters", at least in some examples refer to a machine-readable information object that contains instructions, conditions, parameters, and/or criteria that are relevant to a device, system, or other element/entity.

The term "datagram" at least in some examples at least in some examples refers to a basic transfer unit associated with a packet-switched network; a datagram may be structured to have header and payload sections. The term "datagram" at least in some examples may be synonymous with any of the following terms, even though they may refer to different aspects: "data unit", a "protocol data unit" or "PDU", a "service data unit" or "SDU", "frame", "packet", a "network packet", "segment", "block", "cell", "chunk", "Type Length Value" or "TLV", and/or the like. Examples of datagrams, network packets, and the like, include internet protocol (IP) packet, Internet Control Message Protocol (ICMP) packet, UDP packet, TCP packet, SCTP packet, ICMP packet, Ethernet frame, RRC messages/packets, SDAP PDU, SDAP SDU, PDCP PDU, PDCP SDU, MAC PDU, MAC SDU, BAP PDU. BAP SDU, RLC PDU, RLC SDU, WiFi frames as discussed in a [IEEE802] protocol/standard (e.g., [IEEE80211] or the like), Type Length Value (TLV), and/or other like data structures. The term "packet" at least in some examples refers to an information unit identified by a label at layer 3 of the OSI reference model. In some examples, a "packet" may also be referred to as a "network protocol data unit" or "NPDU".The term "protocol data unit" at least in some examples refers to a unit of data specified in an (N)-protocol layer and consisting of (N)-protocol control information and possibly (N)-user data.

The term "information element" or "IE" at least in some examples refers to a structural element containing one or more fields. Additionally or alternatively, the term "information element" or "IE" at least in some examples refers to a field or set of fields defined in a standard or specification that is used to convey data and/or protocol information. The term "field" at least in some examples refers to individual contents of an information element, or a data element that contains content. The term "data frame", "data field", or "DF" at least in some examples refers to a data type that contains more than one data element in a predefined order. The term "data element" or "DE" at least in some examples refers to a data type that contains one single data. Additionally or alternatively, the term "data element" at least in some examples refers to an atomic state of a particular object with at least one specific property at a certain point in time, and may include one or more of a data element name or identifier, a data element definition, one or more representation terms, enumerated values or codes (e.g., metadata), and/or a list of synonyms to data elements in other metadata registries. Additionally or alternatively, a "data element" at least in some examples refers to a data type that contains one single data. Data elements may store data, which may be referred to as the data element's content (or "content items"). Content items may include text content, attributes, properties, and/or other elements referred to as "child elements." Additionally or alternatively, data elements may include zero or more properties and/or zero or more attributes, each of which may be defined as database objects (e.g., fields, records, and the like), object instances, and/or other data elements. An "attribute" at least in some examples refers to a markup construct including a name-value pair that exists within a start tag or empty element tag. Attributes contain data related to its element and/or control the element's behavior.

The term "type length value", "tag length value", or "TLV" at least in some examples refers to an encoding scheme used for informational elements in a protocol; TLVs are sometimes used to encode additional or optional information elements in a protocol. In some examples, a TLV-encoded data stream contains code related to the type of value, the length of the value, and the value itself. In some examples, the type in a TLV includes a binary and/or alphanumeric code, which indicates the kind of field that this part of the message represents; the length in a TLV includes a size of the value field (e.g., in bytes); and the value in a TLV includes a variable-sized series of bytes which contains data for this part of the message.

The term "data set" or "dataset" at least in some examples refers to a collection of data; a "data set" or "dataset" may be formed or arranged in any type of data structure. In some examples, one or more characteristics can define or influence the structure and/or properties of a dataset such as the number and types of attributes and/or variables, and various statistical measures (e.g., standard deviation, kurtosis, and/or the like). The term "data structure" at least in some examples refers to a data organization, management, and/or storage format. Additionally or alternatively, the term "data structure" at least in some examples refers to a collection of data values, the relationships among those data values, and/or the functions, operations, tasks, and the like, that can be applied to the data. Examples of data structures include primitives (e.g., Boolean, character, floating-point numbers, fixed-point numbers, integers, reference or pointers, enumerated type, and/or the like), composites (e.g., arrays, records, strings, union, tagged union, and/or the like), abstract data types (e.g., data container, list, tuple, associative array, map, dictionary, set (or dataset), multiset or bag, stack, queue, graph (e.g., tree, heap, and the like), and/or the like), routing table, symbol table, quad-edge, blockchain, purely-functional data structures (e.g., stack, queue, (multi)set, random access list, hash consing, zipper data structure, and/or the like).

The term "authorization" at least in some examples refers to a prescription that a particular behavior shall not be prevented.

The term "authentication" at least in some embodiments refers to a process of proving or verifying an identity. Additionally or alternatively, the term "authentication" at least in some embodiments refers to a mechanism by which a computer system checks or verifies that a user or entity is really the user or entity being claimed. Examples of the authentication and/or authorization techniques include using API keys, basic access authentication ("Basic Auth"), Open Authorization (OAuth), hash-based message authentication codes (HMAC), Kerberos protocol, OpenID, WebID, and/or other authentication and/or authorization techniques.

The term "cryptographic mechanism" at least in some examples refers to any cryptographic protocol and/or cryptographic algorithm. Examples of cryptographic mechanisms include a cryptographic hash algorithm, such as a function in the Secure Hash Algorithm (SHA) 2 set of cryptographic hash algorithms (e.g., SHA-226, SHA-256, SHA-512, and the like), SHA 3, and so forth, or any type of keyed or unkeyed cryptographic hash function and/or any other function discussed herein; an elliptic curve cryptographic (ECC) algorithm (e.g., Elliptic Curve cryptography Key Agreement algorithm (ECKA) algorithm,Elliptic Curve cryptography Digital Signature Algorithm (ECDSA), Lenstra elliptic-curve factorization or elliptic-curve factorization method (ECM), Menezes-Qu-Vanstone (MQV) or elliptic curve MQV (ECMQV), Elliptic Curve Diffie-Hellman (ECDH) key agreement, Elliptic Curve Integrated Encryption Scheme (ECIES) or Elliptic Curve Augmented Encryption Scheme, Edwards-curve Digital Signature Algorithm (EdDSA), and/or the like); Rivest-Shamir-Adleman (RSA) cryptography; Merkle signature scheme, advanced encryption system (AES) algorithm; a triple data encryption algorithm (3DES); Quantum cryptography algorithms; and/or the like. Additionally or alternatively, the term "cryptographic protocol" at least in some examples refers to a sequence of steps precisely specifying the actions required of two or more entities to achieve specific security objectives (e.g., cryptographic protocol for key agreement). Additionally or alternatively, the term "cryptographic algorithm" at least in some examples refers to an algorithm specifying the steps followed by a single entity to achieve specific security objectives (e.g., cryptographic algorithm for symmetric key encryption).

The term "cryptographic hash function", "hash function", or "hash") at least in some examples refers to a mathematical algorithm that maps data of arbitrary size (sometimes referred to as a "message") to a bit array of a fixed size (sometimes referred to as a "hash value", "hash", or "message digest"). A cryptographic hash function is usually a one-way function, which is a function that is practically infeasible to invert.

The term "cryptographic key" or "key"in cryptography at least in some examples refers to a piece of information, usually a string of numbers or letters that are stored in a file, which, when processed through a cryptographic algorithm can encode or decode cryptographic data. The term "symmetric-key algorithm" at least in some examples refers to a cryptographic algorithm that uses the same cryptographic key for both the encryption of plaintext and the decryption of ciphertext; the keys may be identical, or there may be a simple transformation to go between the two keys.

The term "encryption" at least in some examples refers to a process of encoding information wherein the original representation of information (referred to as "plaintext") into an alternative form (referred to as "ciphertext"). In some examples, an encryption scheme includes use of a pseudo-random encryption key generated by a cryptographic mechanism or some other algorithm to generate an encryption key, which can be used to encrypt and/or decrypt the plaintext.

The term "machine learning" or "ML" at least in some examples refers to the use of computer systems to optimize a performance criterion using example (training) data and/or past experience. ML involves using algorithms to perform specific task(s) without using explicit instructions to perform the specific task(s), and/or relying on patterns, predictions, and/or inferences. ML uses statistics to build ML model(s) (also referred to as "models") in order to make predictions or decisions based on sample data (e.g., training data).

The term "machine learning model" or "ML model" at least in some examples refers to an application, program, process, algorithm, and/or function that is capable of making predictions, inferences, or decisions based on an input data set and/or is capable of detecting patterns based on an input data set. In some examples, a "machine learning model" or "ML model" is trained on a training data to detect patterns and/or make predictions, inferences, and/or decisions. In some examples, a "machine learning model" or "ML model" is based on a mathematical and/or statistical model. For purposes of the present disclosure, the terms "ML model", "AI model", "AI/ML model", and the like may be used interchangeably. The term "mathematical model" at least in some examples refer to a system of postulates, data, and inferences presented as a mathematical description of an entity or state of affairs including governing equations, assumptions, and constraints. The term "statistical model" at least in some examples refers to a mathematical model that embodies a set of statistical assumptions concerning the generation of sample data and/or similar data from a population; in some examples, a "statistical model" represents a data-generating process.

The term "machine learning algorithm" or "ML algorithm" at least in some examples refers to an application, program, process, algorithm, and/or function that builds or estimates an ML model based on sample data or training data. Additionally or alternatively, the term "machine learning algorithm" or "ML algorithm" at least in some examples refers to a program, process, algorithm, and/or function that learns from experience w.r.t some task(s) and some performance measure(s)/metric(s), and an ML model is an object or data structure created after an ML algorithm is trained with training data. For purposes of the present disclosure, the terms "ML algorithm", "AI algorithm", "AI/ML algorithm", and the like may be used interchangeably. Additionally, although the term "ML algorithm" may refer to different concepts than the term "ML model," these terms may be used interchangeably for the purposes of the present disclosure.

The term "machine learning application" or "ML application" at least in some examples refers to an application, program, process, algorithm, and/or function that contains some AI/ML model(s) and application-level descriptions. Additionally or alternatively, the term "machine learning application" or "ML application" at least in some examples refers to a complete and deployable application and/or package that includes at least one ML model and/or other data capable of achieving a certain function and/or performing a set of actions or tasks in an operational environment. For purposes of the present disclosure, the terms "ML application", "AI application", "AI/ML application", and the like may be used interchangeably.

The term "optimization" at least in some examples refers to an act, process, or methodology of making something (e.g., a design, system, or decision) as fully perfect, functional, or effective as possible. Optimization usually includes mathematical procedures such as finding the maximum or minimum of a function. The term "optimal" at least in some examples refers to a most desirable or satisfactory end, outcome, or output. The term "optimum" at least in some examples refers to an amount or degree of something that is most favorable to some end. The term "optima" at least in some examples refers to a condition, degree, amount, or compromise that produces a best possible result. Additionally or alternatively, the term "optima" at least in some examples refers to a most favorable or advantageous outcome or result.

The term "probability" at least in some examples refers to a numerical description of how likely an event is to occur and/or how likely it is that a proposition is true. The term "probability distribution" at least in some examples refers to a mathematical function that gives the probabilities of occurrence of different possible outcomes for an experiment or event. The term "predictive service" at least in some examples refers to a service model which provides reliable performance, but allowing a specified variance in the measured performance criteria.

Although many of the previous examples are provided with use of specific cellular / mobile network terminology, including with the use of 4G/5G 3GPP network components (or expected terahertz-based 6G/6G+ technologies), it will be understood these examples may be applied to many other deployments of wide area and local wireless networks, as well as the integration of wired networks (including optical networks and associated fibers, transceivers, and/or the like). Furthermore, various standards (e.g, 3GPP, ETSI, and/or the like) may define various message formats, PDUs, containers, frames, and/or the like, as comprising a sequence of optional or mandatory data elements (DEs), data frames (DFs), information elements (IEs), and/or the like. However, it should be understood that the requirements of any particular standard should not limit the examples discussed herein, and as such, any combination of containers, frames, DFs, DEs, IEs, values, actions, and/or features are possible in various examples, including any combination of containers, DFs, DEs, values, actions, and/or features that are strictly required to be followed in order to conform to such standards or any combination of containers, frames, DFs, DEs, IEs, values, actions, and/or features strongly recommended and/or used with or in the presence/absence of optional elements.

Aspects of the inventive subject matter may be referred to herein, individually and/or collectively, merely for convenience and without intending to voluntarily limit the scope of this application to any single aspect or inventive concept if more than one is in fact disclosed. Thus, although specific aspects have been illustrated and described herein, it should be appreciated that any arrangement calculated to achieve the same purpose may be substituted for the specific aspects shown. This disclosure is intended to cover any and all adaptations or variations of various aspects. Combinations of the above aspects and other aspects not specifically described herein will be apparent to those of skill in the art upon reviewing the above description.

## Claims

1. A computer-readable medium comprising one or more instructions which, if executed by a processor of a node of a cellular network, cause the processor to:,
generate a segment routing header comprising information representative of a measurement enablement; and
apply a segment routing of a packet within the cellular network based on the segment routing header.

2. The computer-readable medium of claim 1, wherein a tag field of the segment routing header comprises a unique transaction identifier for the packet.

3. The computer-readable medium of claim 2, wherein the unique transaction identifier is generated by one of a session management function, SMF, or a communication service function, Comm SF, of the cellular network; and
wherein the unique transaction identifier is used to measure a response time of a service function, SF, by identifying packets based on the unique transaction identifier.

4. The computer-readable medium of any one of claims 1 to 3, wherein a type length value, TLV, field of the segment routing header comprises at least one of instructions and/or parameters for measurements to be collected.

5. The computer-readable medium of claim 4, wherein the instructions and/or parameters comprise one or more measurement types, one or more measurement collection times and/or one or more trigger conditions, one or more cells and/or a signalling to be measured, resource configurations and/or parameters.

6. The computer-readable medium of any one of claims 1 to 5, wherein a segment field of the segment routing header comprises a measurement enablement indication for a segment within the segment field.

7. The computer-readable medium of claim 6, wherein the segment field of the segment routing header comprises a 128-bit internet protocol version 6, IPv6, address for the segment;
wherein the 128-bit IPv6 address for the segment comprises a first part representative of a domain name and a service function name and a second part representative of the measurement enable indication for the segment; and
wherein the measurement enable indication is representative of whether a measurement is enabled for a domain and hop associated with the segment.

8. The computer-readable medium of any one of claims 1 to 7, wherein the segment routing header is generated based on a configuration requested by a user equipment, UE, of the cellular network, or one or network function consumers of the cellular network.

9. The computer-readable medium of any one of claims 1 to 8, wherein the node is a network access node; and
wherein the configuration is received via a non-access stratum, NAS, message or a distributed NAS message sent by one of an Access and mobility management function, AMF, or a security anchor function, SEAF according to a request of the UE.

10. The computer-readable medium of any one of claims 1 to 8, wherein the node comprises a user plane function, UPF; and
wherein the configuration is received from a session management function, SMF, or the configuration is received at a communication service function, Comm SF from the communication control function, Comm CF, of the cellular network according to a request of a network function, NF, or an application function, AF.

11. The computer-readable medium of claim 10, wherein the one or more instructions further cause the processor to collect measurements based on the segment routing header.

12. A computer-readable medium comprising one or more instructions which, if executed by a processor of a node of a cellular network, cause the processor to:
decode a packet comprising a segment routing header comprising information representative of a measurement enablement; and
apply a segment routing of the packet within the cellular network based on the segment routing header.

13. The computer-readable medium of claim 12, wherein a type length value, TLV, field of the segment routing header comprises at least one of instructions and/or parameters for measurements to be collected; and wherein the one or more instructions further cause the processor to collect the measurements indicated by the at least one instructions and/or parameters.

14. The computer-readable medium of claim 13, wherein a tag field of the segment routing header comprises a unique transaction identifier for a transaction; and wherein the one or more instructions further cause the processor to identify an ingress and/or an egress packet of the transaction based on the unique transaction identifier.

15. The computer-readable medium of any one of claims 12 to 14; wherein the information comprises an indicator field associated with a domain at a beginning or end of 128-bit IPv6 address within a segment field of the segment routing header, and wherein the indicator field is representative of whether a collection of measurements for the domain is enabled.
